# EUROPEAN PATENT APPLICATION

(11) **EP 4 827 167 A1**
(43) Date of publication of application: **21.10.2026**
(21) Application number: 24915238.0
(22) Date of filing: 30.12.2024
(51) Int. Cl.: H04W 28/16

(54) **INFORMATION TRANSMISSION METHOD AND COMMUNICATION APPARATUS**

(30) Priority: 05.01.2024 CN 202410022999
(71) Applicant: Huawei Technologies Co., Ltd., Shenzhen, Guangdong 518129 (CN)
(72) Inventor: FENG, Zhao, Shenzhen, Guangdong 518129 (CN); HU, Li, Shenzhen, Guangdong 518129 (CN); ZHANG, Zhiqin, Shenzhen, Guangdong 518129 (CN); WANG, Yuan, Shenzhen, Guangdong 518129 (CN)
(74) Representative: Goddar, Heinz J.
(86) International application number: PCT/CN2024/143969
(87) International publication number: WO 2025/146024

(57) **Abstract**

Embodiments of this application provide an information transmission method and a communication apparatus. The method includes: A first network element sends a first request to a second network element, and receives a first response from the second network element. The first request includes first information, and the first information indicates at least one first sample alignment algorithm supported by the first network element. The first response indicates a second sample alignment algorithm determined by the second network element from the at least one first sample alignment algorithm, and the second sample alignment algorithm is used to determine a common sample between a dataset of the first network element for vertical federated learning model training and a dataset of the second network element for vertical federated learning model training; or the first response indicates that execution of sample alignment is not supported. In this way, a sample alignment algorithm used in a sample alignment process can be negotiated between the first network element and the second network element by using the first request and the first response, thereby improving efficiency and a success rate of performing sample alignment between the first network element and the second network element.

## Description

This application claims priority to Chinese Patent Application No. 202410022999.3, filed with the China National Intellectual Property Administration on January 5, 2024 and entitled "INFORMATION TRANSMISSION METHOD AND COMMUNICATION APPARATUS", which is incorporated herein by reference in its entirety.

### TECHNICAL FIELD

This application relates to the communication field, and in particular, to an information transmission method and a communication apparatus.

### BACKGROUND

Functional network elements in communication networks may use artificial intelligence (artificial intelligence, AI) technologies and big data in the communication networks to output analysis data through model training and inference, to assist in communication network policy formulation and network resource adjustment. When the functional network element obtains datasets, the functional network element may fail to obtain required data due to data privacy protection between domains of the communication network, resulting in infeasibility or low accuracy in model training.

Therefore, distributed joint modeling can be used for model training to break data silos. For example, a plurality of functional network elements (or participants) may perform joint modeling without sharing original data through vertical federated learning (vertical federated learning, VFL), to implement AI collaboration.

Currently, VFL requires that datasets of participants have same sample space (or sample identifier set), so that the participants perform sample alignment before a model training process starts, to determine a common sample identifier. However, how to specifically perform sample alignment to improve efficiency and a success rate of sample alignment remains to be studied.

### SUMMARY

Embodiments of this application provide an information transmission method and a communication apparatus, to improve efficiency and a success rate of sample alignment.

To achieve the foregoing objectives, the following technical solutions are used in embodiments of this application.

According to a first aspect, an information transmission method is provided. The method may be performed by a component of a first network element, for example, a processor, a chip, or a chip system of the first network element, or may be implemented by a logical module or software that can implement all or some functions of the first network element. The method includes: The first network element sends a first request to a second network element, and receives a first response from the second network element. The first request includes first information, and the first information indicates at least one first sample alignment algorithm supported by the first network element. The first response indicates a second sample alignment algorithm among the at least one first sample alignment algorithm, and the second sample alignment algorithm is used to determine a common sample between a dataset of the first network element for vertical federated learning model training and a dataset of the second network element for vertical federated learning model training; or the first response indicates that execution of sample alignment is not supported.

In embodiments of this application, the first network element sends the first request to the second network element, so that the second network element can determine, based on the at least one first sample alignment algorithm, whether the second network element and the first network element support a same sample alignment algorithm to perform sample alignment. When determining that the second network element and the first network element support the same sample alignment algorithm, the second network element feeds back the second sample alignment algorithm to the first network element by using the first response, so that a sample alignment algorithm used in a sample alignment process can be negotiated between the first network element and the second network element, thereby improving efficiency and a success rate of performing sample alignment between the first network element and the second network element. Further, when the second network element does not support the at least one first sample alignment algorithm, the second network element may feed back, to the first network element by using the first response, that execution of sample alignment is not supported, so that the first network element can perform sample alignment with another participant participating in the vertical federated learning model training in time, thereby improving efficiency of performing sample alignment by the first network element. Therefore, according to the information transmission method provided in embodiments of this application, efficiency and a success rate of performing sample alignment by the first network element can be improved.

In a possible implementation, the first network element may be a vertical federated learning participant. For example, the first network element is a master participant in vertical federated learning model training, and the second network element is a candidate slave participant in vertical federated learning model training. For another example, the first network element is a slave participant in vertical federated learning model training, and the second network element is a candidate slave participant or a master participant in vertical federated learning model training. That is, both the master participant and the slave participant may initiate a sample alignment negotiation process, that is, send the first request. It should be understood that, without distinguishing between master and slave participants, both the first network element and the second network element are participants in vertical federated learning model training. In addition, because a participant in vertical federated learning model training may be a network function network element, a terminal apparatus, or the like, the first network element may be a network function network element, a terminal apparatus, or an access network apparatus. For example, the first network element may be a network data analytics function network element, an application function network element, an access and mobility management function network element, a session management function network element, or a policy control function network element. In addition, the second network element is similar to the first network element, and the second network element may be a network function network element, a terminal apparatus, or an access network apparatus.

In a possible implementation, the method provided in the first aspect further includes: The first network element receives information about the second network element from a third network element, where the information about the second network element includes an identifier of the second network element and/or address information of the second network element. It may be understood that the third network element may be a trusted third party. For example, the third network element may be a trusted coordinator (for example, a VFL server). Alternatively, the third network element may be a vertical federated learning support function (VFL support function, VFLSF) network element, and the third network element is configured to store a sample alignment capability of a participant in vertical federated learning model training. In other words, the first network element may obtain the identifier of the second network element and/or the address information of the second network element by receiving the information about the second network element from the third network element, so that the first network element sends the first request to the second network element.

In a possible implementation, the method provided in the first aspect further includes: The first network element sends a second request to the third network element, where the second request includes second information, and the second information indicates a sample alignment requirement. Correspondingly, that the first network element receives the information about the second network element from the third network element includes: The first network element receives a second response from the third network element, where the second response includes the information about the second network element. In other words, the second network element may be a network element whose sample alignment capability meets the sample alignment requirement corresponding to the first network element, so as to reduce a probability that the second network element does not support sample alignment, thereby improving a success rate and efficiency of sample alignment negotiation between the first network element and the second network element, and further improving a success rate and efficiency of sample alignment.

In a possible implementation, the sample alignment requirement includes at least one of the following: a third sample alignment type, a third sample alignment algorithm, or a third time period for sample alignment. In other words, the second network element that better meets the sample alignment requirement corresponding to the first network element may be selected by using one or more of the third sample alignment type, the third sample alignment algorithm, and the third time period for sample alignment that are included in the sample alignment requirement, so as to further reduce a probability that the second network element does not support performing sample alignment, thereby further improving a success rate and efficiency of sample alignment negotiation between the first network element and the second network element.

In a possible implementation, the information about the second network element further includes at least one of the following: a fourth sample alignment type, a fourth sample alignment algorithm, or a fourth time period in which sample alignment is supported. In other words, the first network element may further obtain the sample alignment capability of the second network element, so that the first network element determines a sample alignment algorithm, a time period, and the like that are jointly supported by the first network element and the second network element, thereby helping the master participant send the first request to the second network element based on the jointly supported sample alignment algorithm and/or the jointly supported time period, to more effectively perform sample alignment negotiation with the second network element.

In a possible implementation, the method provided in the first aspect further includes: The first network element sends a registration request to the third network element, where the registration request includes third information, and the third information indicates at least one of the following: a sample alignment type supported by the first network element, a sample alignment algorithm supported by the first network element, or a time period in which the first network element supports sample alignment. In other words, the first network element may register a sample alignment capability with the third network element, so that the third network element can obtain the sample alignment capability (for example, the supported sample alignment type, the supported sample alignment algorithm, or the time period in which sample alignment is supported) of the first network element, and select, based on the sample alignment capability of the first network element, the second network element that meets the sample alignment requirement corresponding to the first network element.

In a possible implementation, the at least one first sample alignment algorithm is an algorithm jointly supported by the first network element and the second network element. In other words, the first network element may indicate, to the second network element by using the first request, the at least one first sample alignment algorithm jointly supported by the first network element and the second network element, so as to reduce a probability that the second network element does not support performing sample alignment, thereby improving a success rate and efficiency of sample alignment negotiation.

In a possible implementation, the first information further indicates at least one of the following: a quantity of samples supported by the first network element for sample alignment, a first sample alignment type supported by the first network element, or at least one first time period in which the first network element supports sample alignment. In other words, the first information further indicates, to the second network element, the quantity of samples supported by the first network element for sample alignment, the first sample alignment type, or the at least one first time period, to assist the second network element in further determining whether execution of sample alignment is supported, so as to avoid a sample alignment failure caused by a local resource failing to meet a computing power requirement of the sample alignment algorithm in an actual process of performing sample alignment by the second network element, thereby improving a success rate and efficiency of sample alignment. For example, the quantity of samples supported by the first network element for sample alignment may be a quantity of samples of all samples in a dataset of the first network element for vertical federated learning model training, or a subset of the quantity of samples of all the samples in the dataset. The subset of the quantity of samples of all the samples may indicate that the first network element expects to use the quantity of samples corresponding to the subset to perform sample alignment. In addition, the quantity of samples supported by the first network element for sample alignment may be used by the second network element to determine a computing power requirement of the sample alignment algorithm, so that the second network element can determine whether a local resource can support sample alignment performed by using the first sample alignment algorithm in a process of performing sample alignment, thereby improving a success rate and efficiency of sample alignment. For another example, the sample alignment type supported by the first network element may be a sample alignment type that can be supported by the first network element, or may indicate a sample alignment type of sample alignment that the first network element expects to perform. The sample alignment type may support two-party sample alignment and/or multi-party sample alignment. For a sample alignment algorithm that can support both two-party sample alignment and multi-party sample alignment, computing power requirements of the sample alignment algorithm for two-party sample alignment and multi-party sample alignment may be different. Therefore, the sample alignment type supported by the first network element may be used to assist the second network element in determining the computing power requirement of the sample alignment algorithm, so that the second network element determines whether to support sample alignment, thereby improving a success rate and efficiency of sample alignment. For another example, the at least one time period in which the first network element supports sample alignment may be used by the second network element to determine whether to support sample alignment. The second network element may determine, based on the at least one time period and a load status in the at least one time period, whether to support sample alignment, thereby improving a success rate and efficiency of sample alignment.

In a possible implementation, the at least one first sample alignment algorithm is associated with the at least one first time period. In other words, the at least one first sample alignment algorithm is associated with the at least one first time period, so that the second network element can determine first sample alignment algorithms supported by the first network element in different first time periods, and determine, based on local resources that can be invoked in the different first time periods, whether to support computing power requirements of the first sample alignment algorithms corresponding to the different first time periods. In this way, the second network element can further determine whether execution of sample alignment is supported, thereby improving a success rate and efficiency of sample alignment.

In a possible implementation, the first response further indicates a quantity of samples supported by the second network element for sample alignment, and/or a second time period in which the second network element supports sample alignment; or the first response further indicates a reason why the second network element does not support sample alignment, and/or a maximum quantity of samples that the second network element expects the first network element to use. In other words, when the second network element supports performing sample alignment, the first response further indicates the quantity of samples supported by the second network element for sample alignment, and/or the second time period in which the second network element supports sample alignment, so as to assist the first network element in further determining whether sample alignment can be supported in a process of performing sample alignment, thereby improving a success rate of sample alignment. In addition, when the second network element does not support performing sample alignment, the first response further indicates the reason why the second network element does not support sample alignment, and/or the maximum quantity of samples that the second network element expects the first network element to use, so as to assist the first network element in adjusting, when subsequently sending the first request again, a parameter such as the first sample alignment algorithm indicated by the first information, the quantity of samples supported by the first network element for sample alignment, or the at least one first time period in which the first network element supports sample alignment, thereby improving a success rate of sample alignment negotiation.

In a possible implementation, the method provided in the first aspect further includes: The first network element sends a first message to the second network element, where the first message indicates a target sample alignment algorithm, and the target sample alignment algorithm is a sample alignment algorithm determined from the at least one first sample alignment algorithm based on the first response. In other words, the first network element may further determine, based on a sample alignment response message of the second network element, that the first network element and the second network element can support performing sample alignment, and the target sample alignment algorithm used to perform sample alignment, so as to avoid a sample alignment failure caused by a failure to meet a computing power requirement of the sample alignment algorithm in a process of performing sample alignment, thereby improving a success rate and efficiency of sample alignment.

In a possible implementation, the method provided in the first aspect further includes: The first network element sends the first request to a fourth network element; the first network element receives a third response from the fourth network element, where the third response indicates a fifth sample alignment algorithm among the at least one first sample alignment algorithm, and the fifth sample alignment algorithm is used to determine a common sample between the dataset of the first network element for vertical federated learning model training and a dataset of the fourth network element for vertical federated learning model training; and the first network element sends a second message to the fourth network element, where the second message indicates the target sample alignment algorithm, where there are a plurality of fifth sample alignment algorithms and/or a plurality of second sample alignment algorithms, and that the target sample alignment algorithm is the sample alignment algorithm determined from the at least one first sample alignment algorithm based on the second sample alignment algorithm includes: The target sample alignment algorithm is a sample alignment algorithm determined from the at least one first sample alignment algorithm based on the second sample alignment algorithm and the fifth sample alignment algorithm.

In other words, the first network element may send the first request to a plurality of network elements, to obtain sample alignment algorithms selected by the plurality of network elements from the at least one sample alignment algorithm, so as to determine a target sample alignment algorithm that can be jointly used by the first network element and the plurality of network elements to perform sample alignment, thereby implementing multi-party sample alignment.

In a possible implementation, the first message further indicates a target time period for sample alignment. In other words, the first network element may further indicate, by using the first message, the target time period for performing sample alignment, to notify the second network element to perform a sample alignment process in the target time period, so as to prevent the second network element from performing the sample alignment process in a time period in which the second network element may not be able to meet a computing power requirement of the target sample alignment algorithm, thereby further improving a success rate and efficiency of sample alignment.

In a possible implementation, the method provided in the first aspect further includes: When the first network element determines that sample alignment is not performed, the first network element sends a third message to the second network element, where the third message indicates that sample alignment is not performed. In other words, the first network element sends the third message to the second network element, to indicate that sample alignment is not performed, so that the second network element can be notified in time that sample alignment is not performed subsequently.

In a possible implementation, the third message further indicates a reason why sample alignment is not performed. In other words, the first network element indicates, to the second network element, the reason why sample alignment is not performed, so that when the first network element subsequently sends the first request again, the second network element can be assisted in adjusting the second sample alignment algorithm, the quantity of samples supported for sample alignment, the time period supported for sample alignment, or the like that is indicated by the first response, thereby improving a success rate and efficiency of sample alignment negotiation.

According to a second aspect, an information transmission method is provided. The method may be performed by a component of a first network element, for example, a processor, a chip, or a chip system of the first network element, or may be implemented by a logical module or software that can implement all or some functions of the first network element. The method includes: The first network element sends a first request to a second network element, and receives a first response from the second network element. The first request includes first indication information, and the first indication information indicates to provide a sample identifier used for vertical federated learning model training. The first response includes a first sample identifier.

In embodiments of this application, the first network element sends the first request to the second network element, so that the second network element can feed back the first sample identifier to the first network element. In this way, the first network element can determine, based on the first sample identifier, a common sample identifier between participants participating in vertical federated learning model training, thereby implementing sample alignment. For example, the first network element may be a trusted third party, and the second network element may be a master participant or a slave participant in vertical federated learning. In this way, the first network element can send the first request to the second network element, to obtain a sample identifier corresponding to a dataset of the second network element for vertical federated learning model training, so that the first network element determines a common sample between participants participating in same vertical federated learning model training, thereby implementing sample alignment. For another example, the second network element may be a trusted third party with which a sample identifier corresponding to a dataset of a participant is registered, and the first network element may be a master participant, a slave participant, or a coordinator in vertical federated learning model training. In this way, the second network element can feed back, to the first network element in response to the first request of the first network element, a common sample identifier of at least two network elements participating in same vertical federated learning model training, thereby implementing sample alignment.

In a possible implementation, that the first indication information indicates to provide the sample identifier used for vertical federated learning model training includes: The first indication information indicates to provide a sample identifier corresponding to a dataset used for vertical federated learning model training, and the first sample identifier is a sample identifier corresponding to a dataset that is from the second network element and that is used for vertical federated learning model training.

In other words, the first network element may indicate, by using a sample provision indication in a sample alignment request message, the second network element to provide the sample identifier corresponding to the dataset of the second network element for vertical federated learning model training, so that the second network element can feed back, to the first network element, the sample identifier corresponding to the dataset of the second network element for vertical federated learning model training. In this way, the first network element can be triggered to determine a common sample identifier between the second network element and another candidate participant participating in vertical federated learning model training, thereby implementing sample alignment.

In a possible implementation, the second network element is a candidate network element for participating in vertical federated learning model training, and the method provided in the second aspect further includes: The first network element receives a second sample identifier corresponding to a dataset that is from a third network element and that is used for vertical federated learning model training, and sends a third message to the second network element based on the first sample identifier and the second sample identifier. The third network element is a network element other than the second network element in a plurality of candidate network elements for participating in vertical federated learning model training. The third message includes second indication information, the second indication information indicates that the second network element is to participate in vertical federated learning model training, and/or a third sample identifier, the third sample identifier is a common sample identifier of at least two network elements participating in vertical federated learning model training, the at least two network elements are at least two network elements determined from the plurality of candidate network elements based on the first sample identifier and the second sample identifier, and the at least two network elements include the third network element; or the second indication information indicates that the second network element is not to participate in vertical federated learning model training, and/or a reason why the second network element is not to participate in vertical federated learning model training. In other words, after obtaining sample identifiers corresponding to datasets that are provided by at least some of the plurality of candidate network elements and that are used for vertical federated learning model training, the first network element may further determine, from the plurality of candidate network elements based on the first sample identifier of the second network element and the second sample identifier of the third network element, the at least two network elements that can participate in vertical federated learning model training, and the common sample identifier (that is, the third sample identifier) of the at least two network elements, thereby implementing sample alignment, and increasing a probability that the second network element participates in vertical federated learning model training. In addition, when the first network element determines that the second network element is not to participate in vertical federated learning model training, the first network element sends the third message to the second network element, to indicate the second network element not to participate in vertical federated learning model training, so that the second network element can determine, in time, not to participate in the current vertical federated learning model training, thereby helping the second network element prepare to perform another vertical federated learning related process. Further, the third message indicates the reason why the second network element is not to participate in vertical federated learning model training, so that when the second network element participates in vertical federated learning model training again, the second network element can be assisted in adjusting the sample identifier corresponding to the dataset used for vertical federated learning model training, thereby increasing a probability that the second network element participates in vertical federated learning model training.

In a possible implementation, the second network element is a network element with which a sample identifier corresponding to a dataset of a network element participating in vertical federated learning model training is registered, and that the first indication information indicates to provide the sample identifier used for vertical federated learning model training includes: The first indication information indicates to provide a common sample identifier, where the common sample identifier is a common sample identifier between datasets of at least two network elements participating in same vertical federated learning model training in a plurality of network elements, and the first sample identifier indicates a common sample between datasets of at least two network elements participating in first vertical federated learning model training in the plurality of network elements. In other words, when the second network element is a trusted third party with which the sample identifier corresponding to the dataset of the network element participating in vertical federated learning model training is registered, the first network element may send the first request to the second network element, so that the second network element can feed back, to the first network element, the common sample identifier between the datasets of the at least two network elements participating in same vertical federated learning model training in the plurality of network elements, thereby implementing sample alignment.

In a possible implementation, the first network element is a network element participating in vertical federated learning model training, and the method provided in the second aspect further includes: The first network element sends a registration request to the second network element, where the registration request includes fourth indication information, and the fourth indication information indicates a sample identifier corresponding to a dataset of the first network element for vertical federated learning model training. In other words, the first network element may send the registration request to the second network element, to register, with the second network element, the sample identifier corresponding to the dataset of the first network element for vertical federated learning model training, so that the second network element can determine a common sample identifier between the first network element and at least one participant participating in same vertical federated learning model training as the first network element, thereby implementing sample alignment.

In a possible implementation, the first request further includes fifth indication information and/or sixth indication information, the fifth indication information indicates a range of a quantity of sample identifiers included in the common sample identifier, and the sixth indication information further indicates the second network element to determine the at least two network elements. In other words, the fifth indication information indicates the range of the quantity of sample identifiers included in the common sample identifier, so that a quantity of common samples determined by the second network element can be avoided from being excessively large or excessively small, thereby increasing a probability that a participant corresponding to the common sample identifier joins vertical federated learning model training. In addition, when the first request is not used to request to discover at least two network elements participating in same vertical federated learning model training in the plurality of network elements, the sixth indication information may indicate the second network element to determine the at least two network elements participating in same vertical federated learning model training in the plurality of network elements.

In a possible implementation, the first response further includes identifiers and/or address information of the at least two network elements, and/or a quantity of sample identifiers included in the first sample identifier. In other words, the second network element feeds back the identifiers and/or the address information of the at least two network elements to the first network element by using the first response, so that the first network element can be notified of the common sample identifier corresponding to the at least two network elements, thereby completing sample alignment. In addition, when the first network element is a VFL server, and is not configured with an encryption algorithm or a decryption algorithm corresponding to the first sample identifier, the second network element indicates, to the first network element by using the first response, the quantity of sample identifiers included in the first sample identifier, so that the first network element can determine a first sample identifier in a common sample quantity range that meets a vertical federated learning model training requirement, thereby increasing a probability that a participant joins vertical federated learning model training.

According to a third aspect, a communication apparatus is provided, configured to implement the foregoing methods. The communication apparatus may be the first network element in any one of the foregoing aspects and the implementations of the foregoing aspects, or an apparatus including the foregoing first network element, or an apparatus included in the foregoing first network element, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface. The processing module may be configured to implement a processing function in any one of the foregoing aspects and the possible implementations of the foregoing aspects.

In some possible designs, the transceiver module includes a sending module and a receiving module, respectively configured to implement the sending function and the receiving function in any one of the foregoing aspects and the possible implementations of the foregoing aspects.

According to a fourth aspect, a communication apparatus is provided, including at least one processor. The processor is configured to execute a computer program or instructions, to cause the communication apparatus to perform the method in any one of the foregoing aspects.

In a possible implementation, the communication apparatus further includes a memory. Optionally, the memory is coupled to the processor. The memory may be integrated with the processor, or the memory may be independent of the processor. Optionally, the processor is configured to execute a computer program or instructions stored in the memory.

In a possible implementation, the memory is independent of the communication apparatus.

In a possible implementation, the communication apparatus further includes a communication interface. The communication interface is configured to communicate with a module other than the communication apparatus.

The communication apparatus may be the first network element in any one of the foregoing aspects and the implementations of the foregoing aspects, or an apparatus including the foregoing first network element, or an apparatus included in the foregoing first network element, for example, a chip.

According to a fifth aspect, a computer-readable storage medium is provided. The computer-readable storage medium stores a computer program or instructions. When the computer program or the instructions are executed by a communication apparatus, the communication apparatus is caused to perform the method in any one of the foregoing aspects and the implementations of the foregoing aspects.

According to a sixth aspect, a computer program product including instructions is provided. When the computer program product runs on a communication apparatus, the communication apparatus is caused to perform the method in any one of the foregoing aspects and the implementations of the foregoing aspects.

According to a seventh aspect, a communication apparatus (for example, the communication apparatus may be a chip or a chip system) is provided. The communication apparatus includes a processor, configured to implement the function in any one of the foregoing aspects and the implementations of the foregoing aspects.

In some possible designs, the communication apparatus includes the memory, and the memory is configured to store necessary program instructions and data.

In some possible designs, when the apparatus is a chip system, the apparatus may include a chip, or may include a chip and another discrete component.

It may be understood that when the communication apparatus provided in any one of the third aspect to the seventh aspect is a chip, the foregoing sending action/function can be understood as outputting, and the foregoing receiving action/function can be understood as inputting.

For technical effects achieved by any one of the design manners of the third aspect to the seventh aspect, refer to the technical effects achieved by the different design manners of the first aspect. Details are not described herein again.

According to an eighth aspect, a communication system is provided. The communication system includes the first network element and the second network element in any one of the foregoing aspects and the implementations of the foregoing aspects, and the second network element is configured to receive a first request and send a first response.

### BRIEF DESCRIPTION OF DRAWINGS

FIG. 1 is a diagram of feature distribution of a dataset in vertical federated learning according to an embodiment of this application;
FIG. 2 is a diagram of a participant in vertical federated learning according to an embodiment of this application;
FIG. 3 is a diagram of a training process of a vertical federated learning model according to an embodiment of this application;
FIG. 4 is a diagram of two-party sample alignment according to an embodiment of this application;
FIG. 5 is a diagram of an architecture of a communication system according to an embodiment of this application;
FIG. 6A and FIG. 6B are a schematic flowchart 1 of an information transmission method according to an embodiment of this application;
FIG. 7A and FIG. 7B are a schematic flowchart 2 of an information transmission method according to an embodiment of this application;
FIG. 8 is a schematic flowchart 3 of an information transmission method according to an embodiment of this application;
FIG. 9 is a schematic flowchart 4 of an information transmission method according to an embodiment of this application;
FIG. 10 is a schematic flowchart 5 of an information transmission method according to an embodiment of this application;
FIG. 11 is a schematic flowchart 6 of an information transmission method according to an embodiment of this application;
FIG. 12 is a schematic flowchart 7 of an information transmission method according to an embodiment of this application;
FIG. 13 is a diagram 1 of a structure of a communication apparatus according to an embodiment of this application; and
FIG. 14 is a diagram 2 of a structure of a communication apparatus according to an embodiment of this application.

### DESCRIPTION OF EMBODIMENTS

To facilitate understanding of technical solutions provided in embodiments of this application, technical terms related to this application are first briefly described. The brief descriptions are as follows:

First, network data analytics function (network data analytics function, NWDAF)-based intelligent network architecture:

Currently, the 3rd generation partnership project (3rd generation partnership project, 3GPP) defines the NWDAF-based intelligent network architecture, with the purpose of collecting massive information in a network and utilizing the data by using existing big data and AI technologies to output valuable information, to assist carriers in policy formulation and network resource adjustment, thereby improving user experience and reducing network load.

For example, Table 1 lists some analysis results that can be provided by an NWDAF network element and data that needs to be collected for the NWDAF network element to provide the corresponding analysis result. For example, the NWDAF network element may provide a service experience analysis result. To provide the analysis result, the NWDAF network element may collect service-related information such as a service identifier (identifier, ID) or service experience from an application function (application function, AF) network element or a terminal apparatus (or referred to as a user equipment (user equipment, UE)), and collect information such as signal received power and signal received quality from an operations, administration, and maintenance (operations, administration, and maintenance, OAM). The NWDAF may train an AI model based on the collected data, and then obtain an inferred analysis result based on the AI model, for example, predicted service experience in a future time period.

**Table 1**

| Example of an NWDAF analysis result | Example of data that needs to be collected |
|---|---|
| 1. Service experience analysis | AF or UE: service-related information such as a service identifier and service experience; |
| | OAM: signal received power, signal received quality, and the like. |
| 2. Network element load analysis | Network repository function (network repository function, NRF): network element resource usage; |
| | OAM: UE speed/direction (minimization of drive tests (minimization of drive tests, MDT) data); |
| | Third-party application: path, destination, arrival time, and the like. |
| 3. Mobile edge computing (mobile edge computing, MEC) service experience analysis | AF or UE: UE identifier, UE location, application identifier, application location, uplink/downlink transmission performance data, and the like. |

A terminal apparatus, a core network (core network, CN), or an application (application, APP) in a network may not report data related to the terminal apparatus or the application to the NWDAF due to data privacy protection. As a result, the NWDAF cannot obtain required data, making model training infeasible or resulting in a significant decrease in accuracy.

To resolve the foregoing problem, federated learning (federated learning, FL) may be used for model training.

### Second, federated learning:

One machine learning (machine learning, ML) framework can effectively help a plurality of organizations perform data usage and machine learning modeling while meeting requirements of user privacy protection, data security, and government regulations. Federated learning, as a distributed machine learning framework, can effectively resolve a problem of data silos and allow participants to perform joint modeling without sharing original data, thereby breaking data silos technically and implementing AI collaboration.

Federated learning may be classified into three types based on feature distribution between datasets used by participants for federated learning model training: horizontal federated learning, vertical federated learning, and federated transfer learning. Feature distribution between datasets of participants is mainly distribution of sample space (sample space) and feature space (feature space) between the datasets of the participants.

It should be understood that the dataset may correspond to two dimensions. One dimension is sample space (sample space), which may indicate (or represent) a set of objects reflected or described by the dataset. The other dimension is feature space (feature space), which may indicate (or represent) a set of features corresponding to data of objects reflected or described by the dataset. For example, the object may be a user, an account, a terminal apparatus, or an application. The feature may be an attribute of the object, for example, a location, signal received quality, or a speed.

For example, the object reflected or described by the dataset is a group of UEs, that is, the sample space is the group of UEs. Each UE in the group of UEs may be referred to as a sample, and different UEs in the group of UEs may be distinguished by using sample identifiers. The feature corresponding to the data of the object reflected or described by the dataset may be the location, the signal received power, the speed, or the like of the UE in Table 1. For example, refer to Table 2. A dataset of a participant may include data of three samples. The three samples are UE 1, UE 2, and UE 3 respectively. The data of the three samples may reflect or describe location features and signal received power features of the UEs. A sample identifier of the sample UE 1 is U1, and data of the sample UE 1 includes location data #1 and signal received power data #1. A sample identifier of the sample UE 2 is U2, and data of the sample UE 2 includes location data #2 and signal received power data #2. A sample identifier of the sample UE 3 is U3, and data of the sample UE 3 includes location data #3 and signal received power data #3.

In addition, the sample identifier may be an identifier of the UE, for example, a subscription concealed identifier (subscription concealed identifier, SUCI), a subscription permanent identifier (subscription permanent identifier, SUPI), or an international mobile subscriber identity (international mobile subscriber identity, IMSI) of the UE, or may be another identifier that can indicate an identity of the UE. This is not specifically limited in embodiments of this application.

It may be understood that, because the sample identifier is the SUCI, the SUPI, or the like of the UE, the sample identifier relates to user data privacy.

**Table 2**

| Sample identifier | Feature | |
|---|---|---|
| | Location | Signal received power |
| U1 | Location data #1 | Signal received power data #1 |
| U2 | Location data #2 | Signal received power data #2 |
| U3 | Location data #3 | Signal received power data #3 |

It should be understood that, in embodiments of this application, the sample may also be understood as a row dimension in Table 2. In addition, Table 2 is merely an example. The sample may alternatively be an account, an application, a perception target (for example, a vehicle or a traffic infrastructure), an image, or the like. This is not specifically limited in embodiments of this application.

Based on the foregoing descriptions about the dataset, the sample space, and the feature space, the following describes feature distribution between datasets of participants in vertical federated learning by using an example.

### Third, vertical federated learning:

Main feature distribution of vertical federated learning is that a degree of sample space overlap between datasets of participants is high, while a degree of feature space overlap is low.

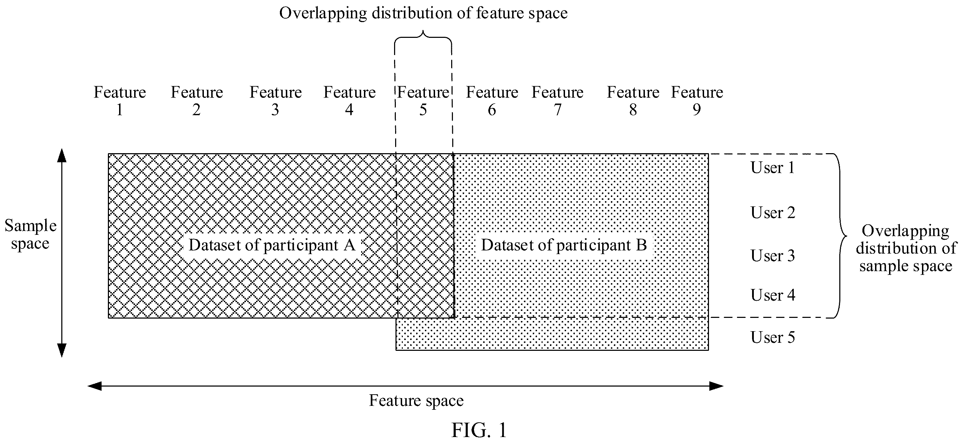

FIG. 1 is a diagram of feature distribution of a dataset in vertical federated learning according to an embodiment of this application. As shown in FIG. 1, a dataset of participant A includes data of [user 1, user 2, user 3, user 4], and data of each user includes [feature 1, feature 2, feature 3, feature 4, feature 5]. A dataset of participant B includes data of [user 1, user 2, user 3, user 4, user 5], and data of each user includes [feature 5, feature 6, feature 7, feature 8, feature 9]. It can be learned that a data feature intersection between the datasets of participant A and participant B is very small, but most samples are the same. Participant A and participant B may select same samples (that is, common samples (user 1 to user 4)) from their respective datasets, to perform model training of vertical federated learning. In this way, model accuracy can be improved by extending a quantity of features.

It may be understood that FIG. 1 is merely an example. Samples in the dataset of participant A and the dataset of participant B may be completely the same (for example, both include user 1 to user 4), and data features in the dataset of participant A and the dataset of participant B may have no intersection. For example, features included in each sample in the dataset of participant A are [feature 1 to feature 5], while data features included in each sample in the dataset of participant B are [feature 6 to feature 10].

The following describes participants, model training, and sample alignment in vertical federated learning.

### 3.1. Participants in vertical federated learning:

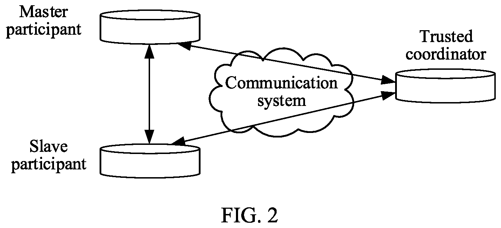

FIG. 2 is a diagram of a participant in vertical federated learning according to an embodiment of this application. As shown in FIG. 2, participants in vertical federated learning may be classified into three types: a master participant, a slave participant, and a trusted collaborator. The master participant may be a participant that has a data label corresponding to a specific federated learning task, and the data label corresponding to the task is a result to be predicted or output by the task. For example, the federated learning task may be service experience prediction, and the data label may be service experience, that is, data to be output by the federated learning task is data of the service experience.

The slave participant may be a participant that has a part of data features required by a specific federated learning task, that is, input data required by a model corresponding to the task. For example, the data label is service experience of a UE, and a part of data features required by the task may include a location, an average throughput, or an average packet delay.

The trusted collaborator (or referred to as a trusted coordinator) may be responsible for functions such as maintenance of a vertical federated learning process (VFL process), and authorization admission and removal of a federated learning member, and also undertake work such as encryption key distribution and intermediate information decryption. The coordinator is usually a third party independent of the federal learning task or a credible agency. For example, the trusted coordinator may be a vertical federated learning server (VFL server).

It should be understood that the foregoing master participant or slave participant participating in the vertical federated learning task may also be referred to as a vertical federated learning client (VFL client).

In a possible implementation, the trusted coordinator may deliver a vertical federated learning model to a plurality of participants participating in the vertical federated learning task. The plurality of participants perform model training based on the local vertical federated learning model, and upload an intermediate parameter for model training to the trusted coordinator. The trusted coordinator determines whether to terminate the model training process, distribute a decrypted intermediate parameter, and the like, to implement vertical federated learning model training.

It may be understood that a plurality of encryption methods may be used for vertical federated learning to ensure data privacy security of the participant. The following uses homomorphic encryption as an example to describe the training process of the vertical federated learning model.

### 3.2. Model training in vertical federated learning:

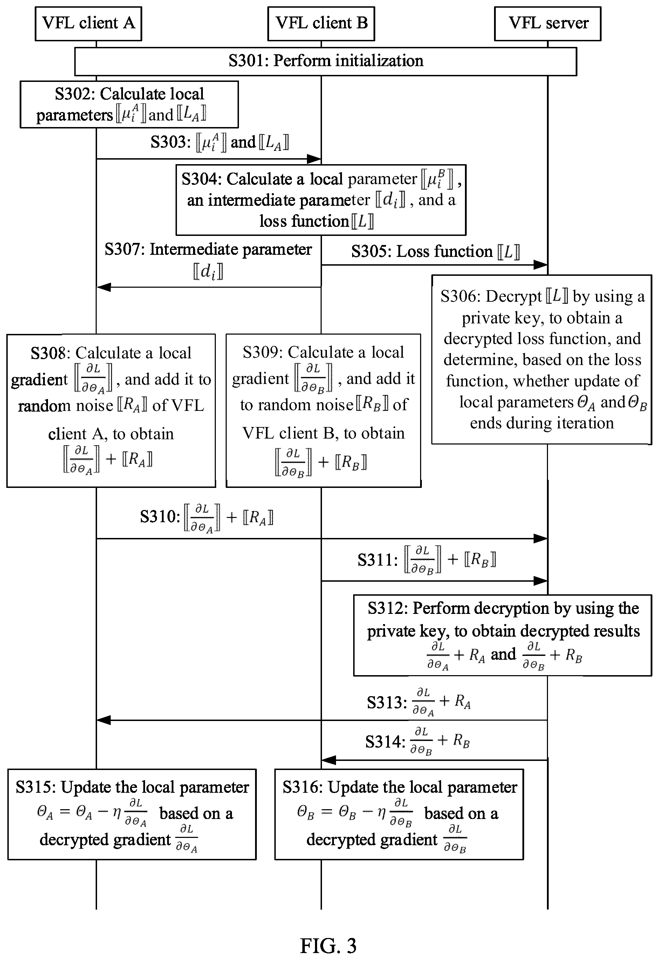

For example, the slave participant is VFL client A, the master participant is VFL client B, and the trusted coordinator is a VFL server. For the training process of the vertical federated learning model, refer to a process shown in FIG. 3.

FIG. 3 is a diagram of a training process of a vertical federated learning model according to an embodiment of this application. As shown in FIG. 3, the training process of the vertical federated learning model may include the following steps.

S301: Perform initialization. The initialization includes: VFL client A initializes a local parameter *Θ_{A}* (or referred to as a model parameter of VFL client A), VFL client B initializes a local parameter *Θ_{B}* (or referred to as a model parameter of VFL client B), and the VFL server creates a homomorphic encryption key pair, and sends a public key to VFL client A and VFL client B.

It may be understood that the VFL server may alternatively use an encryption method other than homomorphic encryption to ensure data privacy security of a participant. This is not limited herein.

S302: VFL client A calculates local parameters $\left〚{μ}_{i}^{A}\right〛$ and $\left〚{L}_{A}\right〛$. A symbol $\left〚⋅\right〛$ indicates homomorphic encryption. It should be understood that a result of adding (multiplying) homomorphically encrypted ciphertexts is equal to a ciphertext obtained by encrypting a result of adding (multiplying) plaintext, for example, $\left〚a+b\right〛 = \left〚a\right〛 + \left〚b\right〛$, and $\left〚a\times b\right〛 = \left〚a\right〛 \times \left〚b\right〛$.${μ}_{i}^{A}$ may be determined based on the local parameter *Θ_{A}* and data of a common sample. The common sample is a common sample between a dataset of VFL client A for vertical federated learning model training and a dataset of VFL client B for vertical federated learning model training, that is, same sample space between the datasets of the two clients. It may be understood that, as shown in FIG. 1, vertical federated learning is to first select a common sample from datasets of a plurality of participants, that is, samples: user 1 to user 4 in FIG. 1. In this case, participant A may perform vertical federated learning model training by using sample data corresponding to user 1 to user 4 in a dataset of participant A, and participant B may perform vertical federated learning model training by using sample data corresponding to user 1 to user 4 in a dataset of participant B.

It is assumed that common sample identifiers between a dataset *D_{A}* that is provided by VFL client A and that is used for vertical federated learning model training and a dataset *D_{B}* that is provided by VFL client B and that is used for vertical federated learning model training may include *n* sample identifiers. In this case, samples that are of VFL client A and that are used for vertical federated learning model training with VFL client B include *n* samples corresponding to the *n* sample identifiers determined from *D_{A}*, and VFL client A determines ${μ}_{i}^{A}$ based on sample data ${\left\{{x}_{i}^{A}\right\}}_{i = 1}^{n}$ of the *n* samples.

For example, a relationship between ${μ}_{i}^{A} , {x}_{i}^{A}$, and *Θ_{A}* may be determined according to formula (1). ${μ}_{i}^{A} = {Θ}_{A} {x}_{i}^{A}$ Formula (1) ${x}_{i}^{A}$ indicates data of an *i*^{th} sample in ${\left\{{x}_{i}^{A}\right\}}_{i = 1}^{n}$.

It may be understood that formula (1) is merely an example, and ${μ}_{i}^{A}$ may alternatively be determined in another manner based on *Θ_{A}* and ${x}_{i}^{A}$, for example, ${μ}_{i}^{A}$ is equal to a product of a transposition ( ${Θ}_{A}^{T}$) or a conjugate transposition ( ${Θ}_{A}^{H}$) of *Θ_{A}* and ${x}_{i}^{A}$. This is not specifically limited in embodiments of this application.

*L_{A}* may indicate a loss function on the VFL client A side. ${L}_{A} = \frac{1}{2} {\sum }_{i = 1}^{n} {\left({μ}_{i}^{A}\right)}^{2} + \frac{λ}{2} {\left‖{Θ}_{A}\right‖}^{2}$, where *λ* indicates a regularization parameter.

S303: VFL client A sends $\left〚{μ}_{i}^{A}\right〛$ and $\left〚{L}_{A}\right〛$ to VFL client B. Correspondingly, VFL client B receives $\left〚{μ}_{i}^{A}\right〛$ and $\left〚{L}_{A}\right〛$ from VFL client A.

S304: VFL client B calculates a local parameter $\left〚{μ}_{i}^{B}\right〛$, an intermediate parameter $\left〚{d}_{i}\right〛$, and a loss function [L].

Calculation of ${μ}_{i}^{B}$ is similar to that of ${μ}_{i}^{A}$, and ${μ}_{i}^{B}$ may be determined based on the local parameter *Θ_{B}* and data of common samples that are of VFL client B and that are used for vertical federated learning model training (that is, data ${\left\{{x}_{i}^{B}\right\}}_{i = 1}^{n}$ of *n* samples determined from *D_{B}*). For example, ${μ}_{i}^{B} = {Θ}_{B} {x}_{i}^{B}$.

The parameter *dᵢ* may be determined based on the parameters ${μ}_{i}^{A}$ and ${μ}_{i}^{B}$, and a data label *yᵢ* provided by VFL client B, for example, ${d}_{i} = {μ}_{i}^{A} + {μ}_{i}^{B} - {y}_{i}$.

*L* in the loss function $\left〚L\right〛$ may be determined based on *L_{A} , L_{B} ,* and *L_{AB}* . ${L}_{B} = \frac{1}{2} {\sum }_{i = 1}^{n} {\left({μ}_{i}^{B}\right)}^{2} + \frac{λ}{2} {\left‖{Θ}_{β}\right‖}^{2} , {L}_{AB} = {\sum }_{i = 1}^{n} \left({μ}_{i}^{A}\left({μ}_{i}^{B}-{y}_{i}\right)\right)$, and *L = L_{A}*+*L_{B}*+*L_{AB}.*

S305: VFL client B sends $\left〚L\right〛$ to the VFL server. Correspondingly, the VFL server receives $\left〚L\right〛$ from VFL client B.

S306: The VFL server decrypts $\left〚L\right〛$ by using a private key, to obtain a decrypted loss function, and determines, based on the loss function, whether a model training iteration process ends.

S307: VFL client B sends $\left〚{d}_{i}\right〛$ to VFL client A. Correspondingly, VFL client A receives $\left〚{d}_{i}\right〛$ from VFL client B.

S308: VFL client A calculates a local gradient $\left〚\frac{\partial L}{\partial {Θ}_{A}}\right〛$, and adds it to random noise $\left〚{R}_{A}\right〛$ of VFL client A, to obtain $\left〚\frac{\partial L}{\partial {Θ}_{A}}\right〛 + \left〚{R}_{A}\right〛$. $\left〚\frac{\partial L}{\partial {Θ}_{A}}\right〛$ may be determined based on *dᵢ, Θ_{A},* and the regularization parameter *λ*, for example, $\left〚\frac{\partial L}{\partial {Θ}_{A}}\right〛 = {\sum }_{i = 1}^{n} \left〚{d}_{i}\right〛 {x}_{i}^{A} + \left〚{λΘ}_{A}\right〛$.

It should be understood that the random noise $\left〚{R}_{A}\right〛$ of VFL client A may also be referred to as a random mask of VFL client A.

S309: VFL client B calculates a local gradient $\left〚\frac{\partial L}{\partial {Θ}_{B}}\right〛$*,* and adds it to random noise $\left〚{R}_{B}\right〛$ of VFL client B, to obtain $\left〚\frac{\partial L}{\partial {Θ}_{B}}\right〛 + \left〚{R}_{B}\right〛$. A calculation manner of $\left〚\frac{\partial L}{\partial {Θ}_{B}}\right〛$ is similar to that of $\left〚\frac{\partial L}{\partial {Θ}_{A}}\right〛$, and $\left〚\frac{\partial L}{\partial {Θ}_{B}}\right〛$ may be determined based on *dᵢ, Θ_{B},* and the regularization parameter *λ*, for example, $\left〚\frac{\partial L}{\partial {Θ}_{B}}\right〛 = {\sum }_{i = 1}^{n} \left〚{d}_{i}\right〛 {x}_{i}^{B} + \left〚{λΘ}_{B}\right〛$.

It should be understood that the random noise $\left〚{R}_{B}\right〛$ of VFL client B may also be referred to as a random mask of VFL client B.

S310: VFL client A sends $\left〚\frac{\partial L}{\partial {Θ}_{A}}\right〛 + \left〚{R}_{A}\right〛$ to the VFL server. Correspondingly, the VFL server receives $\left〚\frac{\partial L}{\partial {Θ}_{A}}\right〛 + \left〚{R}_{A}\right〛$ from VFL client A.

S311: VFL client B sends $\left〚\frac{\partial L}{\partial {Θ}_{B}}\right〛 + \left〚{R}_{B}\right〛$ to the VFL server. Correspondingly, the VFL server receives $\left〚\frac{\partial L}{\partial {Θ}_{B}}\right〛 + \left〚{R}_{B}\right〛$ from VFL client B.

S312: The VFL server decrypts $\left〚\frac{\partial L}{\partial {Θ}_{A}}\right〛 + \left〚{R}_{A}\right〛$ and $\left〚\frac{\partial L}{\partial {Θ}_{B}}\right〛 + \left〚{R}_{B}\right〛$ by using the private key, to obtain decrypted results $\frac{\partial L}{\partial {Θ}_{A}} + {R}_{A}$ and $\frac{\partial L}{\partial {Θ}_{B}} + {R}_{B}$.

S313: The VFL server sends $\frac{\partial L}{\partial {Θ}_{A}} + {R}_{A}$ to VFL client A. Correspondingly, VFL client A receives $\frac{\partial L}{\partial {Θ}_{A}} + {R}_{A}$ from the VFL server.

S314: VFL server sends $\frac{\partial L}{\partial {Θ}_{B}} + {R}_{B}$ to VFL client B. Correspondingly, VFL client B receives $\frac{\partial L}{\partial {Θ}_{B}} + {R}_{B}$ from the VFL server.

S315: VFL client A updates the local parameter ${Θ}_{A} = {Θ}_{A} - η \frac{\partial L}{\partial {Θ}_{A}}$ based on a decrypted gradient $\frac{\partial L}{\partial {Θ}_{A}}$, where *η* indicates a learning rate.

S316: VFL client B updates the local parameter ${Θ}_{B} = {Θ}_{B} - η \frac{\partial L}{\partial {Θ}_{B}}$ based on a decrypted gradient $\frac{\partial L}{\partial {Θ}_{B}}$, where *η* indicates a learning rate.

It may be understood that, as shown in FIG. 3, only intermediate calculation results are exchanged in the model training process. Therefore, in the entire model training process, the participants (for example, VFL client A and VFL client B) do not know data and a feature of the other party, and after the model training ends, the participants only obtain model parameters on their own sides, thereby protecting local data privacy of the participants.

In addition, the vertical federated learning model training shown in FIG. 3 is two-party vertical federated learning model training, that is, participants in vertical federated learning include one master participant and one slave participant. It may be understood that the vertical federated learning may also be extended to a scenario of more participants (or referred to as multi-party vertical federated learning). For example, participants in vertical federated learning may include one master participant and at least two slave participants.

It should be understood that the multi-party vertical federated learning model training is similar to the two-party vertical federated learning model training shown in FIG. 3, and details are not described herein.

It should be further understood that the two-party vertical federated learning model training algorithm shown in FIG. 3 is merely an example. The two-party or multi-party vertical federated learning model training algorithm may alternatively use another algorithm, for example, an algorithm such as multi-party multi-class vertical federated learning based on privacy protection label sharing or multi-party vertical federated learning based on secret sharing. This is not specifically limited in embodiments of this application.

It may be understood that vertical federated learning inference is completed through collaboration between the master participant and the slave participant after the vertical federated learning model training is completed (that is, the participants have local parameters). For example, the master participant VFL client B in FIG. 3 receives a service prediction request, and VFL client B may send a to-be-predicted sample identifier (indicating a to-be-predicted sample) and a model type identifier to the slave participant VFL client A, so that the slave participant VFL client A can obtain a local inference result *u^{A}* of VFL client A based on the to-be-predicted sample identifier, the model type identifier, the local parameter *Θ_{A}*, and local data *x_{A}* used for inference, and VFL client A can send the local inference result *u^{A}* to VFL client B. In this way, VFL client B can determine an inference result *u^{A}+u^{B}* based on *u^{A}* and a local inference result *u^{B}* of VFL client B where *u^{A}+u^{B}* is an output inference result of the vertical federated learning inference.

It should be understood that, as shown in FIG. 1, vertical federated learning requires that participants have same sample space, that is, a common sample. Before the vertical federated learning model training starts, a plurality of participants (including a master participant and a slave participant) in vertical federated learning and common sample identifiers between datasets that are of the plurality of participants and that are used for vertical federated learning model training need to be first selected. Therefore, in step S302 shown in FIG. 3, VFL client A may determine the sample data ${\left\{{x}_{i}^{A}\right\}}_{i = 1}^{n}$ of the n common samples, to determine the parameter ${μ}_{i}^{A}$. In step S304 shown in FIG. 3, VFL client B may determine the sample data ${\left\{{x}_{i}^{B}\right\}}_{i = 1}^{n}$ of the n common samples, to determine the parameter ${μ}_{i}^{B}$.

However, datasets of participants are different, that is, the participants do not naturally have same sample space. Therefore, before the vertical federated learning model training starts, an important step is sample alignment (sample alignment). Details are described below.

### 3.3. Sample alignment:

An objective of sample alignment is to determine a common sample (or a common sample identifier) between datasets that are of participants (for example, a master participant and a slave participant) and that are used for vertical federated learning model training. In addition, in consideration of data privacy protection, sample alignment further requires that the following conditions be met:
Condition 1: The participants cannot disclose sample identifiers other than the common sample identifier.
Condition 2: The participants cannot disclose any sample information to an untrusted third party to prevent malicious third-party attacks.

In other words, the participants cannot directly exchange sample identifiers of their respective datasets used for vertical federated learning model training to perform sample alignment, but encrypts the sample identifiers of the datasets by using a sample alignment algorithm, to perform sample alignment.

In addition, sample alignment may be classified into sample alignment without third-party participation and sample alignment with third-party participation. Sample alignment without third-party participation may be sample alignment performed between the participants based on the sample alignment algorithm, and a sample alignment process is performed without participation of any third party independent of the participants. Sample alignment with third-party participation may be sample alignment that can be implemented by introducing a trusted third party independent of the participants.

For sample alignment without third-party participation, a commonly used technology is private set intersection (private set intersection, PSI). It may be understood that, based on different quantities of participants in vertical federated learning, the PSI may be classified into a two-party sample alignment algorithm and a multi-party sample alignment algorithm. The two-party sample alignment algorithm may include the following algorithms: PSI based on Diffie-Hellman, PSI based on homomorphic encryption, PSI based on Rivest-Shamir-Adleman (RSA) and hash (hash) algorithms, PSI based on RSA blind signature, or PSI based on oblivious transfer pseudo-random function (oblivious transfer pseudo-random function, OT-PRF).

The multi-party sample alignment algorithm may include: Freedman multi-party secure intersection protocol, or oblivious programmable pseudo-random function (oblivious programmable pseudo-random function, OPPRF).

It may be understood that the foregoing method for sample alignment without third-party participation is merely an example for description, and sample alignment without third-party participation may alternatively be implemented by using another method or technology. This is not specifically limited in embodiments of this application.

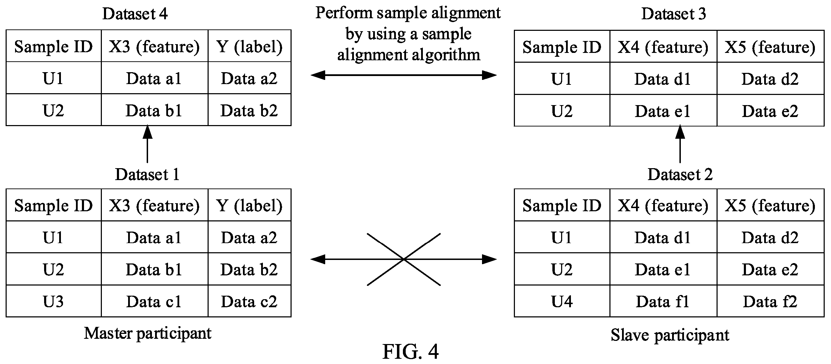

FIG. 4 is a diagram of two-party sample alignment according to an embodiment of this application. As shown in FIG. 4, a dataset that is provided by a master participant and that is used for vertical federated learning model training is dataset 1 in FIG. 4, and a dataset that is provided by a slave participant and that is used for vertical federated learning model training is dataset 2 in FIG. 4. Dataset 1 includes three samples, sample identifiers of the three samples are respectively U1, U2, and U3, feature space of the three samples includes feature X3, and a label is Y. Dataset 2 also includes three samples, sample identifiers of the three samples are respectively U1, U2, and U4, and feature space of the three samples includes feature X4 and feature X5.

A sample alignment process may be performed between the master participant and the slave participant by using a two-party sample alignment algorithm (for example, PSI based on Diffie-Hellman, PSI based on homomorphic encryption, or PSI based on RSA blind signature). The master participant and the slave participant may determine, by exchanging encrypted information, that common sample identifiers between dataset 1 and dataset 2 are sample identifier U1 and sample identifier U2.

In addition, as shown in FIG. 4, after determining the common sample identifiers (that is, U1 and U2), the slave participant may determine dataset 3 used for performing vertical federated learning model training with the master participant. Dataset 3 includes data of a sample corresponding to sample identifier U1 and data of a sample corresponding to sample identifier U2 that are selected from dataset 2, so that the slave participant can perform step S302 in FIG. 3 based on dataset 3. Similarly, the master participant may determine, based on the common sample identifiers, dataset 4 used for performing vertical federated learning model training with the slave participant. Dataset 4 includes data of a sample corresponding to sample identifier U1 and data of a sample corresponding to sample identifier U2 that are selected from dataset 1, so that the master participant can perform step S304 in FIG. 3 based on dataset 4.

It should be understood that FIG. 4 is merely an example for describing a sample alignment process without third-party participation. In an actual sample alignment process, for different sample alignment algorithms, computing power (or computing amount) requirements for participants participating in sample alignment may be the same or different. The following lists several examples to describe computing power requirements for participants in the sample alignment process without third-party participation.

### Example 1:

For a sample alignment algorithm of PSI based on Diffie-Hellman, a large prime number p is agreed on between participant A and participant B, and the sample alignment algorithm has a same computing power requirement for participant A and participant B.

For example, a sample alignment process of PSI based on Diffie-Hellman includes the following steps:
Step ① : Participant A performs hash encryption on a sample identifier x₁ to obtain H(x₁), and requires that H(x₁) be a primitive root of p.
Step ② : Participant B performs hash encryption on a sample y₁ to obtain H(y₁), and requires that H(y₁) be a primitive root of p.
Step ③ : Participant A randomly generates an integer a (a is confidential to the outside), calculates Ka=(H(x₁))^{a} mod p, and sends Ka to participant B, where mod represents a modulo or reminder operation.
Step ④ : Participant B randomly generates an integer b (b is confidential to the outside), calculates Kb=(H(y₁))^{b} mod p, and sends Kb to participant A.
Step ⑤ : After receiving Kb, participant A calculates Kba=(Kb)^{a} mod p, and sends Kba to participant B.
Step ⑥ : After receiving Ka, participant B calculates Kab=(Ka)^{b} mod p, and sends Kab to participant A.

It may be understood that, if x₁=y₁, according to the Diffie-Hellman algorithm principle, Kba=Kab. Therefore, participant A or participant B may determine whether x₁ and y₁ are the same by comparing whether Kba and Kab are the same.

Further, when participant A has sample identifiers: x₁, x₂, ..., xₙ, and participant B has sample identifiers: y₁, y₂, ..., yₘ, participant A and participant B exchange an encryption value based on the foregoing sample alignment algorithm. In this way, participant A obtains [Kba1, Kba2, ..., Kbam] through calculation, and receives [Kab1, Kab2, ..., Kabn] from participant B, and therefore participant A obtains an intersection of the two groups of data, that is, a common sample identifier between participant A and participant B. Participant B may also obtain the common sample identifier, that is, participant B obtains [Kab1, Kab2, ..., Kabn] through calculation, and receives [Kbal, Kba2, ..., Kbam] from participant A, to obtain the intersection of the two groups of data.

It may be understood that, according to the related description of the foregoing sample alignment process of PSI based on Diffie-Hellman, calculation complexity is the same for participant A and participant B, that is, the sample alignment algorithm of PSI based on Diffie-Hellman has a same computing power requirement for two participants.

### Example 2:

For PSI based on RSA and hash algorithms, one party of participant A and participant B may generate a public key (n, e) and a private key (n, d), and send the public key to the other party. This method has different computing power requirements for participant A and participant B.

For example, a sample alignment process of PSI based on RSA and hash algorithms includes the following steps:
Step 1: Participant A generates the public key (n, e) and the private key (n, d) by using the RSA algorithm, and sends the public key (n, e) to participant B.
Step 2: Participant B determines, based on the public key (n, e), a parameter *Y* corresponding to a sample identifier set *y_{B}*=[*y*₁, *y*₂, ..., *yᵢ,* ..., *yₖ*], and sends Y to participant A.
   $Y = {\left\{{y}_{i}\left({r}_{i}^{e}\right)\right\}}_{i = 1}^{k} , {y}_{i} \left({r}_{i}^{e}\right) = \left({r}_{i}^{e}modn\right) ∗ \left(H\left({y}_{i}\right)\right) mod n$, and *yᵢ* ∈ *y_{B}. y_{B}* is a sample identifier set of participant B for sample alignment. *rᵢ* is a random number generated by participant A and corresponding to *yᵢ,* 1<*rᵢ<n*, and *rᵢ* and n are mutually prime. ${r}_{i}^{e}$ is obtained by encrypting *rᵢ* by using the public key (n, e) by participant B. *H*(*yᵢ*) is obtained by substituting *yᵢ* into a hash function *H*(·).
Step 3: Participant A performs preliminary calculation on *Y* based on the private key (n, d), to obtain *Y'.* $Y ′ = {\left\{{\left({y}_{i}\left({r}_{i}^{e}\right)\right)}^{d}\right\}}_{i = 1}^{k}$, and ${\left({y}_{i}\left({r}_{i}^{e}\right)\right)}^{d} = {\left({r}_{i}^{e} mod n\right)}^{d} ∗ {\left(H\left({y}_{i}\right)\right)}^{d} mod n = {r}_{i} ∗ {\left(H\left({y}_{i}\right)\right)}^{d} mod n$ .
Step 4: Participant A determines, based on the private key (n, d), a parameter *X* corresponding to a sample identifier set *x_{A}=*[*x*₁, *x*₂, *..., xᵢ,* ..., *xₗ*]*.* $X = {\left\{H\left({x}_{i}^{d}\right)\right\}}_{i = 1}^{l} , and H \left({x}_{i}^{d}\right) = H \left({\left(H\left({x}_{i}\right)\right)}^{d} mod n\right) .$
   It may be understood that *x_{A}* is a sample identifier set of participant A for sample alignment, and *X* is encrypted information obtained through RSA encryption and hash processing of*x_{A}.*
Step 5: Participant A sends *Y'* and *X* to participant B.
   It may be understood that step 4 may alternatively be performed before step 3. For example, step 4 and step 1 may be performed at the same time, and participant A may send both *X* and the public key (n, e) to participant B. This is not specifically limited in embodiments of this application.
Step 6: Participant B determines a parameter *D_{B}* based on *Y'* and *rᵢ*, and obtains an intersection of *D_{B}* and *X,* to obtain an encrypted common sample identifier set I. ${D}_{B} = {\left\{H\left(\frac{{\left({y}_{i}\left({r}_{i}^{e}\right)\right)}^{d}}{{r}_{i}}\right)\right\}}_{i = 1}^{k} , and H \left(\frac{{\left({y}_{i}\left({r}_{i}^{e}\right)\right)}^{d}}{{r}_{i}}\right) = H \left({\left(H\left({y}_{i}\right)\right)}^{d}modn\right) .$
   It may be understood that *D_{B}* is encrypted information obtained through deblinding (that is, *rᵢ* removal) of *Y',* and *D_{B}* and *X* are both encrypted information obtained through RSA encryption and hash processing. Therefore, the intersection may be obtained between *D_{B}* and *X,* to obtain the encrypted common sample identifier set I. Participant B may determine a common sample identifier set I' of plaintext based on the encrypted common sample identifier set I.
Step 7: Participant B sends the encrypted common sample identifier set I to participant A.

It may be understood that, after receiving the encrypted common sample identifier set I, participant A may determine the common sample identifier set I' of the plaintext.

It may be further understood that, according to the foregoing related description of the sample alignment process of PSI based on RSA and hash algorithms, calculation complexity of participant B is greater than calculation complexity of participant A, that is, the sample alignment algorithm of PSI based on RSA and hash algorithms has different computing power requirements for two participants.

It should be understood that PSI based on homomorphic encryption is similar to PSI based on RSA and hash algorithms, and the method has different computing power requirements for two participants.

In addition, a multi-party sample alignment algorithm is similar to the two-party sample alignment algorithm, and may have a same computing power requirement or different computing power requirements for participants, which specifically depends on an actually used multi-party sample alignment algorithm.

However, sample alignment has the following problems:
Problem 1: For sample alignment without third-party participation, because sample alignment requires hash encryption, homomorphic encryption, RSA encryption, or the like on all sample identifiers of a dataset used for vertical federated learning, computing power requirements for participants are high, and sample space sizes (that is, quantities of sample identifiers) of the participants may be different. In this case, different sample alignment algorithms may have different computing amount requirements for the participants. As a result, one or more participants may not be able to support computing power required for sample alignment, making it impossible to implement sample alignment or to perform sample alignment effectively. For example, for a sample alignment algorithm having different computing power requirements for participants, if a calculation amount of sample alignment is large, a participant with a heavy load may not be able to complete a sample alignment process.
Problem 2: For sample alignment with third-party participation, when a trusted third party independent of a vertical federated learning participant participates in sample alignment, there is no implementation solution for how to implement sample alignment.

For the foregoing technical problems, embodiments of this application provide the following technical solutions. The following describes the technical solutions in this application with reference to the accompanying drawings.

The technical solutions in embodiments of this application may be applied to various communications systems, for example, a wireless network system, a vehicle-to-everything (vehicle-to-everything, V2X) communication system, a device-to-device (device-to-device, D2D) communication system, an internet of vehicles communication system, a 4G mobile communication system, such as a long term evolution (long term evolution, LTE) system or a worldwide interoperability for microwave access (worldwide interoperability for microwave access, WiMAX) communication system, a 5G mobile communication system, such as a new radio (new radio, NR) system, and a future communication system.

In embodiments of this application, an "indication" may include a direct indication and an indirect indication, or may include an explicit indication and an implicit indication. Information indicated by specific information (for example, first indication information, second indication information, or third indication information described below) is referred to as to-be-indicated information. In a specific implementation process, the to-be-indicated information is indicated in a plurality of manners, for example, but not limited to, the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

"Predefinition" or "preconfiguration" may be implemented by prestoring corresponding code or a corresponding table in a device, or may be implemented in another manner that may indicate related information. A specific implementation thereof is not limited in embodiments of this application. "Storing" may refer to storing in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments in this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, descriptions such as "when...", "in a case of...", and "if" all mean that a device performs corresponding processing in an objective case, but are not intended to limit to time, or require the device to perform a determining action during implementation, or mean that there is another limitation.

In the descriptions of embodiments of this application, unless otherwise specified, the character "/" indicates that associated objects are in an "or" relationship. For example, A/B may represent A or B. The term "and/or" in embodiments of this application merely describes an association relationship between associated objects and indicates that three relationships may exist. For example, A and/or B may represent three cases: Only A exists, both A and B exist, or only B exists, where A and B may be singular or plural. In addition, in the descriptions of embodiments of this application, unless otherwise specified, "a plurality of" means two or more. "At least one item (piece) of the following" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the term such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of network architectures and emergence of new service scenarios, the technical solutions provided in embodiments of this application are also applicable to similar technical problems.

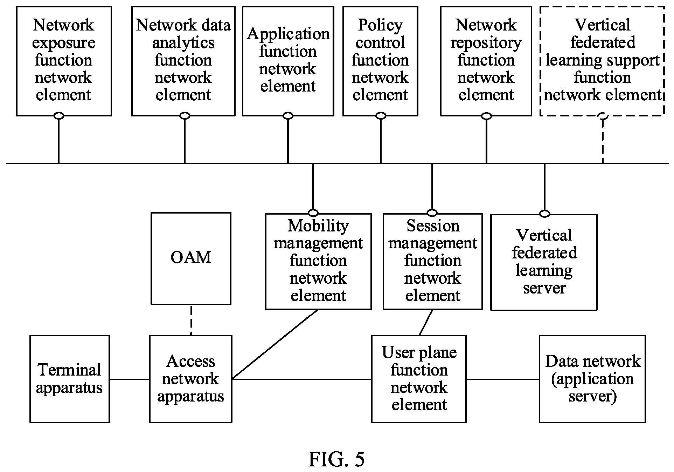

For ease of understanding of embodiments of this application, a communication system applicable to embodiments of this application is first described in detail by using a communication system shown in FIG. 5 as an example. For example, FIG. 5 is a diagram of an architecture of a communication system to which a communication method according to embodiments of this application is applicable.

FIG. 5 is a diagram of an architecture of a communication system according to an embodiment of this application. As shown in FIG. 5, the communication system may include one or more terminal apparatuses, an access network apparatus, and a core network apparatus. The core network apparatus may deploy a network function network element. The network function network element includes, for example, a network data analytics function network element (or referred to as an NWDAF network element), an application function network element (or referred to as an AF network element), an access and mobility management function (access and mobility management function, AMF) network element, a session management function (session management function, SMF) network element, a policy control function (policy control function, PCF) network element, a network repository function (network repository function, NRF) network element, or a network exposure function (network exposure function, NEF) network element. This is not limited.

The terminal apparatus in FIG. 5 may be located in a beam/cell coverage area of the access network apparatus, and the access network apparatus may provide a communication service for the terminal apparatus.

The terminal apparatus in FIG. 5 may be a device having a wireless transceiver function or a chip or a chip system that can be disposed in the device, may allow a user to access a network, and is a device configured to provide voice and/or data connectivity for the user. The terminal apparatus may also be referred to as UE, a subscriber unit (subscriber unit), a terminal (terminal), a mobile station (mobile station, MS), a mobile terminal (mobile terminal, MT), or the like.

For example, the terminal apparatus in FIG. 5 may be a mobile phone (mobile phone), a tablet computer, or a computer with a wireless transceiver function. Alternatively, the terminal apparatus may be a user station, a mobile station, a remote station, a remote terminal apparatus, a mobile terminal apparatus, a user terminal apparatus, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, a processing device connected to a wireless modem, a vehicle-mounted device, a wearable device, a terminal apparatus in the internet of things, a home appliance, a virtual reality (virtual reality, VR) terminal, an augmented reality (augmented reality, AR) terminal, a wireless terminal in industrial control, a wireless terminal in self-driving, a wireless terminal in telemedicine, a wireless terminal in smart grid, a wireless terminal in smart city (smart city), a wireless terminal in smart home (smart home), a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (uncrewed aerial vehicle to unmanned aerial vehicle, U2U) communication capability, a terminal apparatus in a future network, a terminal apparatus in a future evolved public land mobile network (public land mobile network, PLMN), or the like. This is not limited.

The access network apparatus in FIG. 5 may be any device that is deployed in the access network and that can perform wireless communication with the terminal apparatus, or may be a chip or a chip system that may be disposed in the device, or may be a logical node, a logical module, or a function implemented by software, and may be configured to implement functions such as a radio physical control function, resource scheduling and radio resource management, radio access control, and mobility management. Specifically, the network device may be a device supporting wired access, or may be a device supporting wireless access.

For example, the access network apparatus may include one or more access network (access network, AN)/radio access network (radio access network, RAN) nodes. The AN/RAN node may be a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), or the like.

For another example, the access network apparatus may be a device including a central unit (central unit, CU) node, a distributed unit (distributed unit, DU) node, or a CU node and a DU node. For example, the access network apparatus may be divided into a CU and a DU from a perspective of logical functions. Some protocol layer functions are centrally controlled in the CU, while the remaining or all protocol layer functions are distributed in the DU. The DU is centrally controlled by the CU. Further, the central unit CU may be further divided into a control plane (CU-CP) and a user plane (CU-UP). In different systems, a CU (including a CU-CP or a CU-UP) or a DU may have different names. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The network data analytics function network element in FIG. 5 has functions such as data collection, model training, data analysis, and model inference, and may be configured to collect related data from a network function network element, a third-party service server, a terminal apparatus, or a network management system (for example, OAM), perform data analysis or model training based on the related data, and provide a data analysis result for the network function network element, the third-party service server, the terminal apparatus, or the network management system, or provide a training model for another data analytics function network element. The network data analytics function network element may be classified into an analysis logic function and a model training logic function according to functions. The analysis logic function is a logical function in the network data analytics function network element, and is configured to perform model inference, derive an analysis result (that is, derive a statistical or predicted analysis result based on a request of an analysis consumer), and open the analysis result. The model training logic function is a logical function in the network data analytics function network element, and is configured to train a model and open a training service (for example, provide a trained model). A network data analytics function network element may include only an analysis logic function or only a model training logic function, or may include both an analysis logic function and a model training logic function. This is not specifically limited in embodiments of this application.

The application function network element in FIG. 5 is mainly an intermediate function entity that provides interaction between an application server in a data network (data network, DN) and a network element in a core network, and transfers a requirement (for example, a quality of service requirement or user status event subscription) of an application side for a network side. The application server may dynamically control network quality of service and charging, obtain running information of a network element in the core network, and the like by using the application function network element. In embodiments of this application, the application function network element may be a functional entity deployed by an operator, or may be a functional entity deployed by a service provider. The service provider may be a third-party service provider, or may be a service provider in the operator. This is not limited.

The access and mobility management function network element in FIG. 5 is mainly responsible for work of the terminal apparatus such as access authentication and mobility management, signaling interaction between functional network elements, and termination of non-access stratum (non-access stratum, NAS) signaling security, for example, managing a registration status of a user, a reachability status, N1/N2 interface signaling transmission, access authentication and authorization, a connection status of a user, user registration and network access, tracking area update, user authentication during cell handover, and key security.

The session management function network element in FIG. 5 mainly provides work such as session management (for example, session establishment, modification, and release), internet protocol (internet protocol, IP) address allocation and management, and user plane network element selection and control for a terminal apparatus session.

The policy control function network element in FIG. 5 is mainly responsible for generating a policy such as a terminal apparatus access policy and a quality of service flow control policy, and may further provide the generated policy for the access and mobility management function network element, the session management function network element, or the like.

The network repository function network element in FIG. 5 may provide repository capabilities for subscription data, policy data, and capability exposure-related data.

The network exposure function network element in FIG. 5 is mainly responsible for providing network capability and event exposure for an external access entity (for example, the AF network element), and receiving related external information (for example, receiving information provided by the AF network element).

The following describes a participant in vertical federated learning with reference to FIG. 5.

A master participant or a slave participant in vertical federated learning may be a network function network element such as the network data analytics function network element, the application function network element, the access and mobility management function network element, the session management function network element, or the policy control function network element. It may be understood that the master participant or the slave participant in vertical federated learning may alternatively be a terminal apparatus, an access network apparatus, or the like. This is not specifically limited in embodiments of this application.

A trusted coordinator in the participant in vertical federated learning shown in FIG. 5 may be a function network element independently deployed in the core network, or may be a network function network element (for example, the network repository function network element or the network data analytics function network element) deployed in FIG. 5. It may be understood that the trusted coordinator may also be referred to as a vertical federated learning server (VFL server). This is not specifically limited in embodiments of this application.

Optionally, the communication system shown in FIG. 5 further includes a vertical federated learning support function (VFL support function, VFLSF) network element, responsible for registration and discovery of a participant in vertical federated learning. It should be understood that the VFLSF network element may be independently deployed, or may be deployed on the network data analytics function network element, the application function network element, the network repository function network element, or another network element (for example, the network exposure function network element).

In addition, the trusted coordinator and the VFLSF network element may be deployed in a same network element, or may be separately deployed. This is not specifically limited in embodiments of this application.

It should be noted that the terminal apparatus, the access network apparatus, and the core network apparatus in embodiments of this application each may be one or more chips, or may be a system on a chip (system on a chip, SoC), or the like. FIG. 5 is merely an example diagram, and a quantity of apparatuses or devices included in FIG. 5 is not limited. Names of the apparatuses or devices and the links in FIG. 5 are not limited. In addition to the names shown in FIG. 5, the apparatuses or devices and the links may alternatively have other names. This is not limited.

In addition, in addition to the apparatus or the network element shown in FIG. 5, the communication system may further include another apparatus or network element, for example, an OAM, a user plane function (user plane function, UPF) network element, an application server, or the like shown in FIG. 5. This is not limited.

It should be understood that, with evolution of a network, the communication system shown in FIG. 5 may further support or include another network function, for example, a function related to AI or perception. In addition, a name of the network element shown in FIG. 5 may also change in a future evolved network. This is not specifically limited in embodiments of this application.

For problem 1, an embodiment of this application provides an information transmission method. The method may be performed by a first network element. The first network element may be a participant (for example, a master participant or a slave participant) in vertical federated learning model training. The first network element may be a network function network element such as the network data analytics function network element, the application function network element, the access and mobility management function network element, the session management function network element, or the policy control function network element in FIG. 5, or may be a terminal apparatus, an access network apparatus, or the like. This is not specifically limited in embodiments of this application. It should be understood that a second network element may also be a participant in vertical federated learning model training.

In a possible implementation, the first network element sends a first request to the second network element, and receives a first response from the second network element. The first request includes first information, and the first information indicates at least one first sample alignment algorithm supported by the first network element. The first response indicates a second sample alignment algorithm determined by the second network element from the at least one first sample alignment algorithm, or indicates that execution of sample alignment is not supported. The second sample alignment algorithm is used to determine a common sample between a dataset of the first network element for vertical federated learning model training and a dataset of the second network element for vertical federated learning model training. In this way, the first network element sends the first request to the second network element, so that the second network element can determine, based on the at least one first sample alignment algorithm, whether the second network element and the first network element support a same sample alignment algorithm to perform sample alignment. When determining that the second network element and the first network element support the same sample alignment algorithm, the second network element feeds back the second sample alignment algorithm to the first network element by using the first response, so that a sample alignment algorithm used in a sample alignment process can be negotiated between the first network element and the second network element, thereby improving efficiency and a success rate of performing sample alignment between the first network element and the second network element. Further, when the second network element does not support the at least one first sample alignment algorithm, the second network element may feed back, to the first network element by using the first response, that execution of sample alignment is not supported, so that the first network element can perform sample alignment with another participant participating in the vertical federated learning model training in time, thereby improving efficiency of performing sample alignment by the first network element. Therefore, according to the information transmission method provided in embodiments of this application, efficiency and a success rate of performing sample alignment by the first network element can be improved.

For the problem 2, an embodiment of this application provides an information transmission method. The method may be performed by a first network element. The first network element may be a trusted third party, for example, the trusted coordinator or the VFLSF network element in FIG. 5; or the first network element may be a participant (for example, a master participant or a slave participant) in vertical federated learning model training.

In a possible implementation, the first network element sends a first request to a second network element, and receives a first response from the second network element. The first request includes first indication information, the first indication information indicates to provide a sample identifier used for vertical federated learning model training, and the first response includes a first sample identifier. In this way, the first network element sends the first request to the second network element, so that the second network element can feed back the first sample identifier to the first network element. In this way, the first network element can determine, based on the first sample identifier, a common sample identifier between participants participating in vertical federated learning model training, thereby implementing sample alignment. For example, the first network element may be a VFL server, and the second network element may be a master participant or a slave participant in vertical federated learning. In this way, the first network element can send the first request to the second network element, to obtain a sample identifier corresponding to a dataset of the second network element for vertical federated learning model training, so that the first network element determines a common sample between participants participating in same vertical federated learning model training, thereby implementing sample alignment. For another example, the second network element may be a VFLSF network element, and the first network element may be a master participant, a slave participant, or a coordinator in vertical federated learning model training. In this way, the second network element can feed back, to the first network element in response to the first request of the first network element, a common sample identifier of at least two network elements participating in same vertical federated learning model training, thereby implementing sample alignment.

For ease of understanding, the following first uniformly describes technical terms in embodiments of this application.
(1) Sample: The sample in embodiments of this application is a sample included in a dataset used for vertical federated learning model training. The sample may be, for example, a user, an account, an application, a terminal apparatus, a perception target (for example, a vehicle or a traffic infrastructure), or an image. The sample may be indicated or represented by a sample identifier. For details, refer to FIG. 1 and Table 2.
(2) Common sample: The common sample is a common sample between datasets that are of participants and that are used for vertical federated learning model training. For example, as shown in FIG. 1, common samples are user 1 to user 4.
   In addition, the common sample may be indicated by a common sample identifier. For example, as shown in FIG. 4, common sample identifiers are sample identifier U1 and sample identifier U2, and the common samples are a sample indicated by sample identifier U1 and a sample indicated by sample identifier U2.
(3) Sample alignment: An objective of sample alignment is to determine a common sample (or a common sample identifier) between datasets that are of participants and that are used for vertical federated learning model training. In addition, the participants cannot disclose sample identifiers other than the common sample identifier, and the participants cannot disclose any sample information to an untrusted third party.

It may be understood that, when the participants determine the common sample, the participants may determine samples used for vertical federated learning model training, and then may perform vertical federated learning model training.

It may be further understood that a name of the common sample identifier or the common sample is merely an example. The common sample identifier may also be referred to as an intersection sample identifier (intersection sample ID) or a common sample identifier, and the common sample may be referred to as an intersection sample (intersection sample) or a common sample. This is not specifically limited in embodiments of this application.

(4) Sample alignment type: The sample alignment type may be classified into two-party sample alignment and multi-party sample alignment. The two-party sample alignment may mean that participants participating in vertical federated learning model training include one master participant and one slave participant, and the multi-party sample alignment may mean that participants participating in vertical federated learning model training include one master participant and at least two slave participants. The participant participating in vertical federated learning model training may support two-party sample alignment and/or multi-party sample alignment.

It may be understood that whether the participant supports two-party sample alignment and/or multi-party sample alignment depends on a sample alignment algorithm supported by the participant. If participant A supports oblivious programmable pseudo-random function and PSI based on homomorphic encryption, participant A supports two-party sample alignment and multi-party sample alignment. If participant A supports a two-party sample alignment algorithm such as PSI based on Diffie-Hellman or PSI based on homomorphic encryption, participant A supports only two-party sample alignment. If participant A supports a multi-party sample alignment algorithm such as Freedman multi-party secure intersection protocol or oblivious programmable pseudo-random function, participant A supports only multi-party sample alignment.

(5) Sample alignment algorithm: The sample alignment algorithm is used to determine a common sample between datasets that are of at least two participants and that are used for vertical federated learning model training. For example, the sample alignment algorithm may encrypt a sample identifier, and the at least two participants determine the common sample between the datasets of the at least two participants by exchanging an encrypted intermediate result, thereby avoiding disclosure of the sample identifier, and protecting user privacy data.

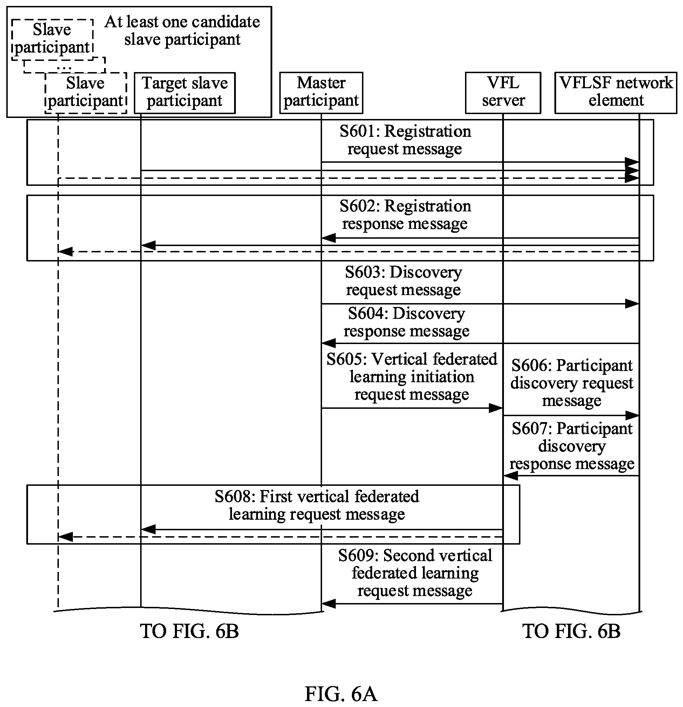

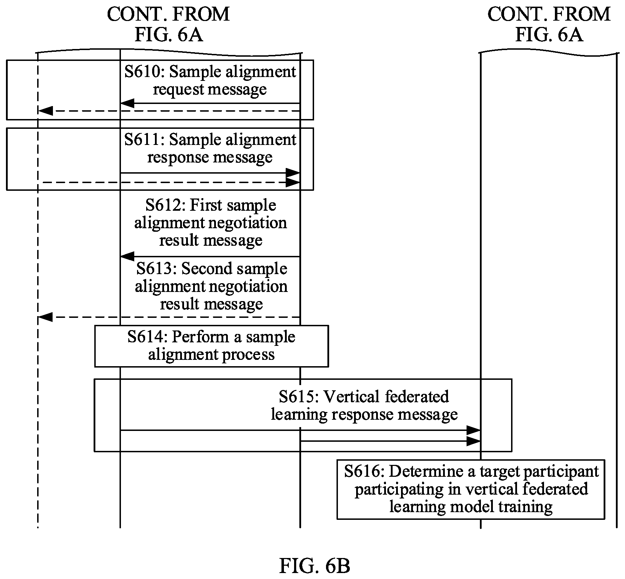

With reference to FIG. 6A and FIG. 6B to FIG. 12, the following specifically describes an interaction process between network elements/apparatuses in the foregoing communication system by using method embodiments. The information transmission method provided in embodiments of this application is applicable to the communication system shown in FIG. 5.

FIG. 6A and FIG. 6B are a schematic flowchart 1 of an information transmission method according to an embodiment of this application. The information transmission method is a sample alignment method applicable to problem 1 without third-party participation, and mainly involves interaction between a master participant, at least one candidate slave participant, a trusted coordinator (that is, a VFL server), and a vertical federated learning support function (VFLSF) network element. Sample alignment without third-party participation means that no third party participates in a sample alignment process between the master participant and the at least one candidate slave participant, and a third party may or may not participate in another process related to vertical federated learning (for example, vertical federated learning model training and/or inference). This is not specifically limited in embodiments of this application.

In the information transmission method process shown in FIG. 6A and FIG. 6B, the master participant initiates vertical federated learning, and the VFL server is responsible for discovery and selection of a participant (or referred to as a vertical federated learning client (VFL client)).

As shown in FIG. 6A and FIG. 6B, the information transmission method process includes the following steps.

S601: The participant sends a registration request message to the VFLSF network element. Correspondingly, the VFLSF network element receives the registration request message from the participant.

The registration request message indicates a sample alignment capability of the participant. In other words, the participant sends the registration request message to the VFLSF network element, to register the sample alignment capability of the participant with the VFLSF network element, so that the VFL server or another participant initiating vertical federated learning discovers the participant, thereby improving efficiency and a success rate of discovering the participant.

In addition, the VFLSF network element in step S601 may be the VFLSF network element, the network repository function network element, or the network exposure function network element in FIG. 5. The participant in step S601 may be a network function network element such as the network data analytics function network element, the application function network element, the access and mobility management function network element, the session management function network element, or the policy control function network element in FIG. 5, or may be a terminal apparatus, an access network apparatus, or the like. This is not specifically limited in embodiments of this application.

In a possible implementation, the sample alignment capability includes at least one of the following: a sample alignment type supported by the participant, a sample alignment algorithm supported by the participant, or a time period in which the participant supports sample alignment.

The sample alignment type may include two-party sample alignment and multi-party sample alignment, and the sample alignment type supported by the participant may be that the participant supports only two-party sample alignment, or the participant supports only multi-party sample alignment, or the participant supports two-party sample alignment and multi-party sample alignment. In addition, the sample type supported by the participant may alternatively indicate that the participant does not support sample alignment. For example, a protocol may stipulate that type a of the sample alignment type supported by the participant indicates that sample alignment is not supported. In other words, the sample alignment type supported by the participant may indicate whether the participant supports sample alignment, or indicate whether the participant supports two-party sample alignment, or indicate whether the participant supports multi-party sample alignment, or indicate whether the participant supports both two-party sample alignment and multi-party sample alignment.

It may be understood that, when the participant does not support sample alignment, for example, the participant may not preconfigure the sample alignment algorithm.

For example, the sample alignment type supported by the participant may be indicated by parameter a included in the registration request message, and several possibilities of the sample alignment type supported by the participant may be indicated by different parameters. For example, parameter al indicates whether the participant supports sample alignment, parameter a2 indicates whether the participant supports two-party sample alignment, parameter a3 indicates whether the participant supports multi-party sample alignment, and parameter a4 indicates whether the participant supports both two-party sample alignment and multi-party sample alignment. In addition, several possibilities of the sample alignment type supported by the participant may alternatively be indicated by another parameter or a combination of parameters. This is not specifically limited in embodiments of this application.

In addition, a type of the sample alignment algorithm supported by the participant may be determined by using the sample alignment type supported by the participant. For example, if the participant supports two-party sample alignment, it may be determined that the sample alignment algorithm supported by the participant includes a two-party sample alignment algorithm. For another example, if the participant supports multi-party sample alignment, it may be determined that the sample alignment algorithm supported by the participant includes a multi-party sample alignment algorithm.

The sample alignment algorithm supported by the participant may include at least one sample alignment algorithm. In other words, a specific sample alignment algorithm supported by the participant may be determined by using the sample alignment algorithm supported by the participant, so that the VFL server subsequently discovers the participant. In addition, the sample alignment algorithm may be the two-party sample alignment algorithm and/or the multi-party sample alignment algorithm in the foregoing "sample alignment algorithm", for example, PSI based on Diffie-Hellman, PSI based on homomorphic encryption, PSI based on RSA and hash algorithms, or Freedman multi-party secure intersection protocol.

For example, the sample alignment algorithm supported by the participant may be represented by a parameter-supported sample alignment algorithm (supported sample alignment algorithm). The parameter may be a value list, which represents a group of sample alignment algorithms. For example, the parameter may indicate [PSI based on Diffie-Hellman, PSI based on homomorphic encryption, PSI based on RSA and hash algorithms], and the parameter may be used to determine that the participant supports performing sample alignment by using the foregoing three algorithms. For another example, a protocol may stipulate or the participant and the VFLSF network element negotiate in advance that a symbol (for example, a group of digits and/or characters) may represent a sample alignment algorithm. For example, "01" represents PSI based on Diffie-Hellman, "02" represents PSI based on homomorphic encryption, and "03" represents PSI based on RSA and hash algorithms. If the participant supports only PSI based on Diffie-Hellman and PSI based on RSA and hash algorithms, the parameter may be represented as [01, 03].

It should be understood that the sample alignment algorithm may be a sample alignment algorithm other than PSI. This is not specifically limited in embodiments of this application.

The time period in which the participant supports sample alignment may indicate a time period in which the participant supports (or expects) performing sample alignment. The time period may be determined by the participant based on a change of a computing capability, load, or the like of the participant. For example, the participant determines that the load of the participant is low in time period [9:00-11:00] and time period [14:00-17:00], in which execution of sample alignment may be supported. The participant may determine that time periods in which execution of sample alignment is supported are [9:00-11:00] and [14:00-17:00]. In other words, a specific time period supported by the participant for sample alignment may be determined by using the time in which the participant supports sample alignment, so as to further improve efficiency of discovering the participant by the VFL server subsequently.

It may be understood that the time period in which the participant supports sample alignment may alternatively be indicated by a parameter. For example, the time period in which the participant supports sample alignment may be indicated by a parameter-supported sample alignment time period (supported sample alignment time period). The parameter may indicate a start time (for example, 9:00) and an end time (for example, 11:00); or the parameter may indicate a start time (for example, 9:00 or 14:00) and a duration (for example, one hour or two hours); or the parameter may indicate a time offset and a reference time, where the time offset may be a time offset relative to the reference time, so that two time endpoints corresponding to a time period for performing sample alignment can be determined by using the time offset and the reference time. For example, one of the two time endpoints may be the reference time, and the other time endpoint may be a difference or a sum between the reference time and the time offset; or the two time endpoints are respectively a difference between the reference time and the time offset and a sum between the reference time and the time offset.

In addition, the time period related to sample alignment in embodiments of this application may be understood as that the participant can perform sample alignment in the time period. For example, the participant may start to perform sample alignment at the start time of the time period, or may start to perform sample alignment at a moment other than the start time in the time period. This is not specifically limited in embodiments of this application.

It should be understood that the time indicated above may be a standard time, and the standard time may be a coordinated universal time (coordinated universal time, UTC), a global positioning system (global positioning system, GPS) time, a long range navigation (long range navigation, LORAN) time, an international atomic time (international atomic time, TAI), or the like. This is not specifically limited in embodiments of this application. In addition, the standard time may also be referred to as an absolute time. The time exists objectively and is irrelevant to any special reference system. Participants in vertical federated learning and the VFLSF network element have a same understanding of a same absolute time.

In addition, the foregoing implementation of indicating the time period in which the participant supports sample alignment is merely an example. The time period in which the participant supports sample alignment may alternatively be indicated in another manner. This is not specifically limited in embodiments of this application.

For example, the foregoing sample alignment capability may be indicated by a parameter sample alignment capability indication (sample alignment capability indication). The parameter may indicate the sample alignment type supported by the participant, the sample alignment algorithm supported by the participant, or the time period in which the participant supports sample alignment.

It may be understood that the participant may send the registration request message to the VFLSF network element based on an identifier or an address of the VFLSF network element. The identifier or the address of the VFLSF network element may be preconfigured in a protocol, or may be received by the participant from another network element. For example, the participant may receive the identifier or the address of the VFLSF network element from the network repository function network element. This is not specifically limited in embodiments of this application.

For example, the address of the VFLSF network element may be an internet protocol (internet protocol, IP) address, a fully qualified domain name (fully qualified domain name, FQDN), or a uniform resource locator (uniform resource locator, URL).

It should be understood that, in embodiments of this application, participants may be distinguished as the master participant and the slave participant shown in FIG. 2, or participants in embodiments of this application may be distinguished as a master participant and a slave participant. This is not limited herein.

For ease of understanding, the following uses an example in which the participants are distinguished as a master participant and a slave participant for description.

In a possible implementation, in embodiments of this application, there are a plurality of participants, and the plurality of participants may be distinguished as a master participant and a slave participant. Therefore, step S601 may include the following steps:
S601a: The master participant sends a registration request message to the VFLSF network element. Correspondingly, the VFLSF network element receives the registration request message from the master participant. The registration request message indicates a sample alignment capability of the master participant.
S601b: The slave participant sends a registration request message to the VFLSF network element. Correspondingly, the VFLSF network element receives the registration request message from the slave participant. The registration request message indicates a sample alignment capability of the slave participant.

It may be understood that the master participant may be the application function network element, the network data analytics function network element, or another network function network element in FIG. 5 (for example, the access and mobility management function network element or the session management function network element in FIG. 5), and the slave participant may also be an application function network element, a network data analytics function network element, or another network function network element. This is not specifically limited in embodiments of this application.

S602: The VFLSF network element sends a registration response message to the participant. Correspondingly, the participant receives the registration response message from the VFLSF network element.

The registration response message indicates whether the registration succeeds. For example, the registration response message may include a result indication (result indication), and the parameter may indicate whether the registration succeeds.

It may be understood that, as described in step S601, there are a plurality of participants, and the plurality of participants may be distinguished as a master participant and a slave participant. Therefore, step S602 may include the following steps:
S602a: The VFLSF network element sends a registration response message to the master participant. Correspondingly, the master participant receives the registration response message from the VFLSF network element.
S602b: The VFLSF network element sends a registration response message to the slave participant. Correspondingly, the slave participant receives the registration response message from the VFLSF network element.

It may be understood that step S601 and step S602 are a sample alignment capability registration process. After the sample alignment capability of the participant is successfully registered, preparation may be made for subsequent discovery and selection of the participant, so as to initiate vertical federated learning. In addition, when the sample alignment capability of the participant (for example, the sample alignment type supported by the participant, the sample alignment algorithm supported by the participant, or the time period in which the participant supports sample alignment) changes, the participant may update the sample alignment capability of the participant by performing the foregoing sample alignment capability registration process again.

It should be understood that the registration request message in step S601 may be further used to register other information of the participant in addition to the sample alignment capability, for example, an identifier and an address of the participant, a vertical federated learning capability type supported by the participant, a vertical federated learning group identifier (VFL group ID) supported by the participant, or a vertical federated learning model type identifier (model type ID(s)) supported by the participant. This is not specifically limited in embodiments of this application.

It may be understood that the vertical federated learning capability type supported by the participant may indicate whether the participant supports being used as a participant in vertical federated learning, or indicate whether the participant supports being used as a master participant and/or a slave participant in vertical federated learning. Whether the participant supports being used as a participant in vertical federated learning may be whether the participant supports being used as a participant in vertical federated learning model training and/or vertical federated learning inference. In addition, whether the participant supports being used as a master participant and/or a slave participant in vertical federated learning may be whether the participant supports providing a data label and/or a data feature used for a federated learning task.

In addition, the VFL server may also send a registration request to the VFLSF network element, to request to register information about the VFL server. The information about the VFL server may include an identifier and an address of the VFL server, a vertical federated learning capability type supported by the VFL server, a vertical federated learning group identifier (VFL group ID) supported by the VFL server, a vertical federated learning model type identifier (model type ID(s)) supported by the VFL server, or the like. Alternatively, the VFLSF network element may preconfigure the information about the VFL server. This is not specifically limited in embodiments of this application.

It may be understood that the vertical federated learning capability type supported by the VFL server may indicate whether the VFL server supports being used as a coordinator in vertical federated learning, that is, whether the VFL server supports functions such as maintaining a vertical federated learning process and authorizing admission and removal of a federated learning member.

In addition, in embodiments of this application, the vertical federated learning process may include a sample alignment process, a vertical federated learning model training process, or a vertical federated learning inference process. This is uniformly described herein, and details are not described below.

It should be understood that, in the process shown in FIG. 6A and FIG. 6B, the master participant may initiate vertical federated learning. For example, the master participant determines to train a model through vertical federated learning (for example, the master participant finds that training data cannot be collected due to privacy protection), and then initiates vertical federated learning. In addition, in the vertical federated learning process, the VFL server may be responsible for decrypting and transferring an intermediate calculation result in the vertical federated learning model training process, and may also be responsible for discovering (or selecting) a slave participant. The master participant may discover, through the VFLSF network element, a VFL server that meets a vertical federated learning requirement initiated by the master participant, and then discover the slave participant through the VFL server, to perform a subsequent process such as sample alignment, vertical federated learning model training, or vertical federated learning inference.

The following describes step S603 and step S604. Step S603 and step S604 are used by the master participant to discover the VFL server that meets the vertical federated learning requirement initiated by the master participant.

S603: The master participant sends a discovery request message to the VFLSF network element. Correspondingly, the VFLSF network element receives the discovery request message from the master participant. The discovery request message is used to request to discover the VFL server that meets the vertical federated learning requirement initiated by the master participant.

In a possible implementation, the discovery request message includes at least one of the following: a vertical federated learning group identifier, a vertical federated learning model type identifier, or a first vertical federated learning capability type indication.

The vertical federated learning group identifier (VFL group ID) may be a vertical federated learning group expected by the master participant in a plurality of candidate vertical federated learning groups, and the vertical federated learning group identifier may be used to determine, from the plurality of candidate vertical federated learning groups, the vertical federated learning group expected by the master participant. Each of the plurality of candidate vertical federated learning groups may include a plurality of slave participants and/or at least one VFL server. It may be understood that the plurality of candidate vertical federated learning groups may be preconfigured, or may be negotiated in advance between the master participant, the slave participant, and the VFLSF network element, or may be indicated by the VFLSF network element. This is not specifically limited in embodiments of this application.

In addition, the discovery request message may include one or more vertical federated learning group identifiers. When the discovery request message includes a plurality of vertical federated learning group identifiers, the master participant expects to perform vertical federated learning based on a plurality of vertical federated learning groups.

The vertical federated learning model type identifier (model type ID(s)) may be a type of a vertical federated learning model that the master participant expects to train, for example, a service experience model or a personalized recommendation model. It may be understood that the type of the vertical federated learning model and a corresponding identifier may be preconfigured in a protocol, or may be provided by the VFL server. This is not specifically limited in embodiments of this application.

In addition, there may be a plurality of vertical federated learning model type identifiers, that is, the master participant may obtain one or more VFL servers that support the plurality of vertical federated learning model type identifiers.

The first vertical federated learning capability type indication indicates to discover a VFL server, and the indication information may be indicated by a parameter VFL capability type=VFL server.

Optionally, the discovery request message may further indicate an expected time period for performing vertical federated learning and a supported training mode. The time period for performing vertical federated learning may include a time period for performing vertical federated learning model training, a time period for performing vertical federated learning inference, or a time period for performing sample alignment. The supported training mode may be a vertical federated learning model training mode or process. The mode or the process may be the model training process shown in FIG. 3, or may be another model training process. This is not specifically limited in embodiments of this application.

It may be understood that the expected time period for performing vertical federated learning and the supported training mode may be used by the VFLSF network element to better discover a VFL server that meets a requirement of the master participant.

In addition, the master participant may send actual code corresponding to the training mode. Alternatively, a protocol may stipulate or the participant and the VFLSF network element may negotiate in advance that a symbol (for example, a digit and/or a character) represents a training mode. For example, symbol c1 may represent training mode 1, symbol c2 may represent training mode 2, and symbol c3 may represent training mode 3. Alternatively, the training mode may be indicated in another manner. This is not specifically limited in embodiments of this application.

S604: The VFLSF network element sends a discovery response message to the master participant. Correspondingly, the master participant receives the discovery response message from the VFLSF network element.

The discovery response message indicates information about at least one VFL server. The at least one VFL server may be at least one VFL server determined by the VFLSF network element from a plurality of VFL servers based on the discovery request message. The information about the at least one VFL server may include at least one VFL server instance (VFL server instance), and each VFL server instance is represented by an identifier and/or an address of the VFL server.

It may be understood that, after discovering the VFL server by using step S603 and step S604, the master participant may discover a slave participant through the VFL server, so as to perform subsequent sample alignment and vertical federated learning model training.

The following describes steps S605 to S609. Steps S605 to S607 are used to discover a candidate slave participant (or referred to as a potential slave participant) that can perform sample alignment with the master participant.

S605: The master participant sends a vertical federated learning initiation request message to the VFL server. Correspondingly, the VFL server receives the vertical federated learning initiation request message from the master participant.

The VFL server is a VFL server determined by the master participant from the at least one VFL server. For example, when the discovery response message indicates a plurality of VFL servers, the master participant may randomly select one VFL server from the plurality of VFL servers. In addition, the master participant may alternatively select one VFL server from the plurality of VFL servers in another manner. This is not specifically limited in embodiments of this application.

It may be understood that the vertical federated learning initiation request message is used to initiate a vertical federated learning process, or may indicate to select a slave participant or request to select a slave participant.

In a possible implementation, the vertical federated learning initiation request message includes the following parameters: a vertical federated learning group identifier (VFL group ID), and a vertical federated learning model type identifier (mode type ID(s)). It may be understood that the vertical federated learning group identifier and the vertical federated learning model type identifier may be used to select a slave participant. In addition, for specific meanings of the vertical federated learning group identifier and the vertical federated learning model type identifier, refer to step S603. Details are not described again.

Optionally, the vertical federated learning initiation request message further includes the following parameter:
a master participant indicator (master VFL client indicator), where the master participant indicator indicates that an initiator of the vertical federated learning initiation request message is a master participant;
a participant selection flag (VFL client selection flag), where the participant selection flag indicates to select a participant, or indicates to select a slave participant; or
a slave participant requirement (slave VFL client requirement), where the slave participant requirement indicates a requirement for a slave participant, or indicates a condition for selecting a slave participant.

It may be understood that vertical federated learning may be initiated by a master participant, or may be initiated by a slave participant. In this way, it can be determined, by using the master participant indicator, whether the initiator of the vertical federated learning initiation request message is the master participant or the slave participant, so that the VFL server determines whether the master participant needs to be selected.

For example, if the vertical federated learning initiation request message carries the master participant indicator, the VFL server determines to select a slave participant; or if the vertical federated learning initiation request message carries a slave participant indicator to indicate that the initiator of the vertical federated learning initiation request message is a slave participant, the VFL server determines to select a master participant, or the VFL server determines to select a master participant and at least one slave participant.

The participant selection flag indicates to request to select a participant (that is, select a VFL client), or indicates to select a slave participant (that is, select a slave VFL client). When the vertical federated learning initiation request message includes the master participant indicator or the slave participant indicator, the vertical federated learning initiation request message may not carry the participant selection flag.

The slave participant requirement may specifically include a time period supporting vertical federated learning (time interval supporting VFL), and/or an expected training mode (training mode). The time period supporting vertical federated learning may include a time period supporting vertical federated learning model training, a time period supporting vertical federated learning inference, or a time period in which sample alignment is supported. The expected training mode may be a specific training mode or training process expected to be used by the master participant.

It should be understood that there may be one or more time periods supporting vertical federated learning, and there may be one or more expected training modes. When there are a plurality of time periods supporting vertical federated learning, the VFL server may select a participant based on one of the time periods. Similarly, when there are a plurality of expected training modes, the VFL server may select a participant based on one of the training modes.

It may be understood that, after the VFL server receives the vertical federated learning initiation request message of the master participant, the VFL server may determine, based on the parameter carried in the vertical federated learning initiation request message, the condition for selecting a slave participant, that is, trigger a participant discovery process (or referred to as a VFL client discovery process). In addition, the participant discovery process may also be understood as a participant selection process (or referred to as a VFL client selection process).

The following describes steps S606 and S607. Steps S606 and S607 are the participant discovery process.

S606: The VFL server sends a participant discovery request message to the VFLSF network element. Correspondingly, the VFLSF network element receives the participant discovery request message from the VFL server.

The participant discovery request message is used to request to discover a participant. The participant discovery request message may include: a vertical federated learning group identifier, a vertical federated learning model type identifier, a slave participant requirement, a second vertical federated learning capability type indication, and a sample alignment requirement.

It may be understood that, for details of the vertical federated learning group identifier and the vertical federated learning model type identifier, refer to the related descriptions in step S603. Details are not described again.

In addition, when the vertical federated learning initiation request message in step S605 includes a slave participant requirement, the slave participant requirement in step S606 is the same as the slave participant requirement in step S605, or the slave participant requirement in step S606 is determined from the slave participant requirement in step S605. This is not specifically limited in embodiments of this application.

When the vertical federated learning initiation request message in step S605 does not include a slave participant requirement, the slave participant requirement may be determined by the VFL server, or may be negotiated between the VFL server and the master participant. This is not specifically limited in embodiments of this application.

The second vertical federated learning capability type indication indicates to request to discover a slave participant, and may be represented by, for example, VFL capability type=slave VFL client.

The sample alignment requirement (or referred to as a sample alignment capability requirement (required sample alignment capability)) may indicate a sample alignment capability that a requested participant needs to be support. The sample alignment capability may include, for example, a sample alignment type, a sample alignment algorithm, or a time period for sample alignment.

For example, the sample alignment requirement may indicate a sample alignment type that the requested participant needs to support, for example, may indicate that the requested participant needs to support sample alignment, or indicate that the requested participant needs to support two-party sample alignment, or indicate that the requested participant needs to support multi-party sample alignment, or indicate that the requested participant needs to support both two-party sample alignment and multi-party sample alignment.

It may be understood that the VFLSF network element may select a participant based on the sample alignment type supported by the participant that is carried in the registration request message sent by the participant in step S601, and the indicated sample alignment type that the requested participant needs to support.

For another example, the sample alignment requirement may indicate a sample alignment algorithm that the requested participant needs to support (required sample alignment algorithm). If the indicated sample alignment algorithm that the requested participant needs to support includes only one sample alignment algorithm, the discovered participant supports the sample alignment algorithm. If the indicated sample alignment algorithm that the requested participant needs to support includes a plurality of sample alignment algorithms, the discovered participant only needs to support any one of the plurality of sample alignment algorithms, or the discovered participant needs to support all of the plurality of sample alignment algorithms.

It may be understood that the VFLSF network element may select a participant based on the sample alignment algorithm supported by the participant (supported sample alignment algorithm) that is carried in the registration request message sent by the participant in step S601, and the indicated sample alignment algorithm that the requested participant needs to support in step S606.

For another example, the sample alignment requirement may indicate a time period in which sample alignment is expected to be performed (expected sample alignment time period). It may be understood that the VFLSF network element may select a participant based on the time period in which sample alignment is supported (supported sample alignment time period) that is carried in the registration request message sent by the participant in step S601 and the time period in which sample alignment is expected to be performed.

It may be understood that the participant discovery request message carries the sample alignment requirement, so that the VFLSF network element can select a candidate slave participant (or referred to as a potential slave participant) that can perform sample alignment with the master participant, thereby improving a success rate and efficiency of negotiating a sample alignment manner (for example, a sample alignment type and algorithm, and a time period in which sample alignment is performed) between the master participant and the candidate slave participant.

It should be understood that, for details of the sample alignment capability, refer to the related descriptions of the sample alignment capability in step S601. Details are not described again.

In addition, a plurality of sample alignment types and a plurality of sample alignment algorithms may be preconfigured in the VFL server, so that the VFL server indicates the sample alignment capability that the requested participant needs to support. It may be understood that the plurality of sample alignment types and the plurality of sample alignment algorithms may alternatively be negotiated in advance between the VFL server and the VFLSF network element, or may be indicated by the VFLSF network element. This is not specifically limited in embodiments of this application.

It should be understood that the vertical federated learning initiation request message in step S605 may further include sample alignment requirements, and the sample alignment requirement included in the participant discovery request message in step S606 is one or more of the sample alignment requirements included in the vertical federated learning initiation request message in step S605. If the vertical federated learning initiation request message in step S605 does not include a sample alignment requirement, the sample alignment requirement included in the participant discovery request message in step S606 is determined by the VFL server, or negotiated between the VFL server and the master participant. This is not specifically limited in embodiments of this application.

S607: The VFLSF network element sends a participant discovery response message to the VFL server. Correspondingly, the VFL server receives the participant discovery response message from the VFLSF network element.

The participant discovery response message includes information about at least one candidate slave participant. The information about the at least one candidate slave participant may include an identifier or an address of the at least one candidate slave participant. The identifier or the address of the at least one candidate slave participant may be used by the VFL server or the master participant to communicate with the at least one candidate slave participant.

It should be understood that the at least one candidate slave participant may include n candidate slave participants, where n is an integer greater than or equal to 1. For example, n may be 1, 2, 3, or a larger value. This is not specifically limited in embodiments of this application.

In a possible implementation, the information about the at least one candidate slave participant may further include a sample alignment capability of each of the at least one candidate slave participant. The sample alignment capability of each candidate slave participant may include: a sample alignment type supported by each candidate slave participant, a sample alignment algorithm supported by each candidate slave participant, or a time period in which each candidate slave participant supports sample alignment.

It may be understood that, for details of the sample alignment capability, refer to the related descriptions in step S601. Details are not described again.

It should be understood that, after the VFL server determines the candidate slave participant that can perform sample alignment with the master participant, the VFL server may trigger, by using steps S608 and S609, the master participant and the at least one candidate slave participant to perform vertical federated learning.

The following describes steps S608 and S609.

S608: The VFL server sends a first vertical federated learning request message to the at least one candidate slave participant. Correspondingly, the at least one candidate slave participant receives the first vertical federated learning request message from the VFL server.

The first vertical federated learning request message is used to initiate a vertical federated learning process, or the first vertical federated learning request message indicates to initiate a vertical federated learning preparation process. In other words, by sending the first vertical federated learning request message to the at least one candidate slave participant, the VFL server may notify the at least one candidate slave participant that the vertical federated learning process needs to be performed subsequently, so that the at least one candidate slave participant prepares a related configuration for performing the vertical federated learning process in advance.

It may be understood that the at least one candidate slave participant is a candidate slave participant (or referred to as a potential slave participant) that can perform sample alignment with the master participant.

In a possible implementation, the first vertical federated learning request message includes information about the master participant. The information about the master participant may include an identifier or an address of the master participant. In other words, the VFL server may notify the at least one candidate slave participant that can perform sample alignment with the master participant of the information about the master participant by using the first vertical federated learning request message. It should be understood that the at least one candidate slave participant may verify, based on the identifier or the address of the master participant, whether a subsequently received message about sample alignment is sent by the master participant, so as to improve security.

For example, the information about the master participant may further include a vertical federated learning group identifier supported by the master participant, a vertical federated learning model type identifier supported by the master participant, a training mode supported by the master participant, or a sample alignment capability supported by the master participant. The sample alignment capability supported by the master participant may include at least one of the following: a sample type supported by the master participant, a sample alignment algorithm supported by the master participant, or a time period in which the master participant supports sample alignment. This is not specifically limited in embodiments of this application.

Optionally, the first vertical federated learning request message may include a vertical federated learning preparation flag (VFL preparation flag), and the vertical federated learning preparation flag may indicate to initiate the vertical federated learning preparation process. It may be understood that, if the first vertical federated learning request message indicates to initiate the vertical federated learning preparation process, the first vertical federated learning request message may not carry the vertical federated learning preparation flag.

It may be further understood that, that the VFL server sends the first vertical federated learning request message to the at least one candidate slave participant may be that the VFL server sends the first vertical federated learning request message to each of the at least one candidate slave participant.

S609: The VFL server sends a second vertical federated learning request message to the master participant. Correspondingly, the master participant receives the second vertical federated learning request message from the VFL server.

The second vertical federated learning request message is similar to the first vertical federated learning request message in that the second vertical federated learning request message may indicate to initiate a vertical federated learning process, or may indicate to initiate a vertical federated learning preparation process. In addition, if the second vertical federated learning request message does not indicate to initiate the vertical federated learning preparation process, the second vertical federated learning request message may include the vertical federated learning preparation flag.

It should be understood that the second vertical federated learning request message is different from the first vertical federated learning request message in that the second vertical federated learning request message does not include information about the master participant, but includes information about the at least one candidate slave participant in step S607. The information about the at least one candidate slave participant may include an identifier and/or an address of each of the at least one candidate slave participant. In addition, the information about the at least one candidate slave participant may further include a supported sample alignment capability.

The sample alignment capability supported by each of the at least one candidate slave participant may include at least one of the following: a supported sample type, a supported sample alignment algorithm, or a time period in which sample alignment is supported. In addition, for details of the sample alignment capability supported by each candidate slave participant, refer to the related descriptions in step S601. Details are not described again.

It may be understood that the identifier or the address of each candidate slave participant may be used by the master participant to communicate with each candidate slave participant. The sample alignment capability supported by each candidate slave participant may be used by the master participant to determine a sample alignment algorithm, a time period, or the like jointly supported by the master participant and the at least one candidate slave participant, so that the sample alignment algorithm, the time period, or the like can be more effectively negotiated between the master participant and the at least one candidate slave participant.

It should be understood that, after the master participant obtains the related information of the at least one candidate slave participant by using the second vertical federated learning request message, the master participant may initiate a sample alignment process. The sample alignment process may include a sample alignment negotiation process and a sample alignment execution process. The sample alignment negotiation process may be used to determine a target slave participant that actually performs sample alignment, an actually used target sample alignment algorithm, a target time period in which sample alignment is actually performed, and the like. The sample alignment execution process may be a process of performing sample alignment between the master participant and the target slave participant, where the target slave participant is a candidate slave participant determined by the master participant from the at least one candidate slave participant.

It may be understood that the sample alignment negotiation process is merely an example name, and may also be referred to as a sample alignment auxiliary process or another name. This is not specifically limited in embodiments of this application.

The following describes steps S610 to S612. Steps S610 to S612 are the sample alignment negotiation process.

S610: The master participant sends a sample alignment request message to the at least one candidate slave participant. Correspondingly, the at least one candidate slave participant receives the sample alignment request message from the master participant.

The sample alignment request message may be used to request to perform sample alignment, or the sample alignment request message may be used to negotiate a sample alignment manner. The sample alignment manner may include a sample alignment type, a sample alignment algorithm, a time period for sample alignment, or the like.

In a possible implementation, the sample alignment request message includes first information, and the first information indicates a first common sample alignment algorithm supported between the master participant and the at least one candidate slave participant. In other words, the master participant may determine the first common sample alignment algorithm supported between the master participant and the at least one candidate slave participant, and send the first common sample alignment algorithm to the at least one candidate slave participant by using the sample alignment request message, to indicate that sample alignment may be performed by using the first common sample alignment algorithm, thereby reducing a probability that the at least one candidate slave participant does not support sample alignment, and improving a success rate and efficiency of sample alignment negotiation.

For example, the master participant may determine, based on the second vertical federated learning request message in step S609, the sample alignment algorithm supported by each of the at least one candidate slave participant, and obtain an intersection between the sample alignment algorithm supported by the master participant and the sample alignment algorithm supported by each candidate slave participant, to obtain an intersection including the first common sample alignment algorithm.

In addition, the intersection may include one or more first common sample alignment algorithms. For example, for ease of description, symbol "01" represents PSI based on Diffie-Hellman, symbol "02" represents PSI based on homomorphic encryption, symbol "03" represents PSI based on RSA and hash (hash) algorithms, and symbol "04" represents PSI based on OT-PRF. It is assumed that the at least one candidate slave participant includes candidate slave participant 1 and candidate slave participant 2, a sample alignment algorithm supported by candidate slave participant 1 is [01, 02, 03], a sample alignment algorithm supported by candidate slave participant 2 is [02, 03, 04], and the sample alignment algorithm supported by the master participant is [01, 02, 03, 04]. In this way, an intersection among the master participant, candidate slave participant 1, and candidate slave participant 2 is [02, 03]. That is, the intersection includes two first common sample alignment algorithms.

It should be understood that, if the intersection includes only one sample alignment algorithm, the first information may indicate the sample alignment algorithm. If the intersection includes a plurality of sample alignment algorithms, the first information may indicate the plurality of sample alignment algorithms, or indicate at least one of the plurality of sample alignment algorithms (that is, a subset of the intersection). This is not specifically limited in embodiments of this application.

It may be understood that the master participant may select, from the plurality of sample alignment algorithms, at least one of sample alignment algorithms that have a small computing power requirement for a candidate slave participant (for example, a small computing power requirement for participant A in example 2). In this way, a probability that the candidate slave participant does not support sample alignment due to a large computing power requirement can be reduced, thereby improving a success rate and efficiency of sample alignment negotiation.

In addition, a name of the first common sample alignment algorithm is merely an example. The first common sample alignment algorithm may also be referred to as an available sample alignment algorithm (available sample alignment algorithms) or another name. This is not specifically limited in embodiments of this application.

In a possible implementation, the first information further indicates at least one of the following: a quantity of samples supported by the master participant for sample alignment, a sample alignment type supported by the master participant, or at least one time period in which the master participant supports sample alignment.

The quantity of samples (number of samples) supported by the master participant for sample alignment may be used by the candidate slave participant to determine a computing power requirement of a sample alignment algorithm. For example, for a sample alignment algorithm (for example, the sample alignment algorithm of PSI based on Diffie-Hellman in example 1) that has a same computing power requirement for participants, a computing power requirement of the sample alignment algorithm is not only related to a quantity of samples of the candidate slave participant, but also related to a quantity of samples of the master participant. Therefore, the candidate slave participant may determine a computing power requirement of the first common sample alignment algorithm based on the quantity of samples of the candidate slave participant and the quantity of samples of the master participant, so that the candidate slave participant can determine whether computing power of the candidate slave participant can support performing sample alignment by using the first common sample alignment algorithm, thereby improving a success rate of sample alignment.

In addition, the quantity of samples supported by the master participant for sample alignment may be a quantity of samples of all samples in a dataset of the master participant for vertical federated learning model training, or a subset of the quantity of samples of all the samples in the dataset. It may be understood that the subset of the quantity of samples of all the samples may indicate that the master participant expects to use the quantity of samples corresponding to the subset to perform sample alignment.

It may be understood that, when the first common sample alignment algorithm is a sample alignment algorithm that has a same computing power requirement for participants, the master participant indicates, by using the first information, the quantity of samples supported by the master participant for sample alignment. Alternatively, when the first common sample alignment algorithm is a sample alignment algorithm that has different computing power requirements for participants, the master participant indicates, by using the first information, the quantity of samples supported by the master participant for sample alignment.

The sample alignment type supported by the master participant may be a sample alignment type that can be supported by the master participant, or may indicate a sample alignment type of sample alignment that the master participant expects to perform. For example, the sample alignment type supported by the master participant may be two-party sample alignment and/or multi-party sample alignment. It may be understood that, for a sample alignment algorithm that can support both two-party sample alignment and multi-party sample alignment, computing power requirements of the sample alignment algorithm for two-party sample alignment and multi-party sample alignment may be different. Therefore, the sample alignment type supported by the master participant may be used to assist the candidate slave participant in determining the computing power requirement of the sample alignment algorithm, so that the candidate slave participant determines whether sample alignment is supported.

The at least one time period in which the master participant supports sample alignment may be used by the candidate slave participant to determine whether sample alignment is supported. For example, the candidate slave participant may determine, based on the at least one time period and a load status of the candidate slave participant in the at least one time period, whether sample alignment is supported. For example, if the load of the candidate slave participant in the at least one time period is less than threshold 1, the candidate slave participant may provide sufficient local resources for sample alignment in the at least one time period, that is, the candidate slave participant determines that sample alignment is supported in the at least one time period. For another example, if the load of the candidate slave participant in the at least one time period is greater than threshold 2, a local resource that can be invoked by the candidate slave participant in the at least one time period does not match the computing power requirement of the sample alignment algorithm, that is, the candidate slave participant determines that sample alignment cannot be supported in the at least one time period.

It may be understood that specific values of threshold 1 and threshold 2 depend on actual implementation. This is not specifically limited in embodiments of this application.

For example, the local resource may include a computing resource, a storage resource, and a network resource. The computing resource may include a frequency of a processor, the storage resource may include a memory size and a storage capacity of a local memory, and the network resource may include a throughput.

Optionally, the at least one first common sample alignment algorithm may be associated with the at least one time period.

It may be understood that, considering that load of the master participant is different in different time periods, computing power supported by local resources that can be invoked in different time periods is also different, that is, first common sample alignment algorithms supported by the master participant in different time periods may be different. In other words, because the first common sample alignment algorithms supported by the master participant in different time periods may be different, the at least one first common sample alignment algorithm is associated with the at least one time period, so that the candidate slave participant can determine the first common sample alignment algorithms supported by the master participant in the different time periods, and determine, based on the local resources that can be invoked in the different time periods, whether to support computing power requirements of the first common sample alignment algorithms corresponding to the different time periods, to further determine whether execution of sample alignment is supported.

For example, the first information indicates first common sample alignment algorithm 1 and first common sample alignment algorithm 2, and the at least one time period includes time period 1 and time period 2. First common sample alignment algorithm 1 is associated with time period 1, which may indicate that the master participant may support performing sample alignment by using first common sample alignment algorithm 1 in time period 1, and first common sample alignment algorithm 2 is associated with time period 2, which may indicate that the master participant may support performing sample alignment by using first common sample alignment algorithm 2 in time period 2.

In addition, one first common sample alignment algorithm may be associated with at least two time periods. For example, first common sample alignment algorithm 1 is separately associated with time period 1 and time period 2, to indicate that the master participant supports performing sample alignment by using first common sample alignment algorithm 1 in time period 1 and time period 2.

Alternatively, one time period may be associated with at least two first common sample alignment algorithms. For example, time period 1 is associated with first common sample alignment algorithm 1 and first common sample alignment algorithm 2, to indicate that the master participant supports performing sample alignment by using first common sample alignment algorithm 1 or first common sample alignment algorithm 2 in time period 1.

It should be understood that the quantity of samples supported by the master participant for sample alignment, the sample alignment type supported by the master participant, or the at least one time period in which the master participant supports sample alignment may be indicated by a parameter other than the first information. This is not specifically limited in embodiments of this application.

S611: The at least one candidate slave participant sends a sample alignment response message to the master participant. Correspondingly, the master participant receives the sample alignment response message from the at least one candidate slave participant.

The sample alignment response message may indicate that execution of sample alignment is supported, and/or a second common sample alignment algorithm, where the second common sample alignment algorithm is a sample alignment algorithm determined from a plurality of first common sample alignment algorithms; or the sample alignment response message may indicate that execution of sample alignment is not supported and/or a reason why execution of sample alignment is not supported.

It may be understood that, that the at least one candidate slave participant sends the sample alignment response message to the master participant may include: Each of the at least one candidate slave participant sends the sample alignment response message to the master participant. Correspondingly, that the master participant receives the sample alignment response message from the at least one candidate slave participant may include: The master participant receives the sample alignment response message from each of the at least one candidate slave participant.

It should be understood that each of the at least one candidate slave participant may determine, based on the sample alignment request message and local information of each candidate slave participant, whether to support performing sample alignment by using the first common sample alignment algorithm indicated by the first information. The local information of the candidate slave participant may include a usage condition of a local resource or an invocable local resource. For details about the local resource, refer to the descriptions about the local resource in step S610. Details are not described again.

In addition, if the candidate slave participant supports performing sample alignment by using the first common sample alignment algorithm, the second common sample alignment algorithm indicated by the candidate slave participant may be the first common sample alignment algorithm.

It may be understood that the candidate slave participant determines, based on the sample alignment request message and the local information, whether execution of sample alignment is supported. For a specific principle, refer to the related descriptions of the first information in step S610. The following lists two examples for further description.

For example, when the first common sample alignment algorithm is PSI based on RSA and hash algorithms in example 2, the slave participant may determine a computing power requirement of the first common sample alignment algorithm based on the first common sample alignment algorithm and a quantity of samples included in a dataset of the slave participant for vertical federated learning model training, and determine, based on whether an invocable local resource meets the computing power requirement, whether to support performing sample alignment by using the first common sample alignment algorithm. In addition, when the first information further indicates the at least one time period supported by the master participant for sample alignment, the slave participant may further estimate a load status corresponding to the at least one time period, and determine whether an invocable local resource corresponding to the at least one time period meets the computing power requirement, to determine whether to support performing sample alignment by using the first common sample alignment algorithm in the at least one time period. If the slave participant determines to support performing sample alignment by using the first common sample alignment algorithm in the at least one time period, the first common sample alignment algorithm is the second common sample alignment algorithm; or otherwise, the first common sample alignment algorithm is not the second common sample alignment algorithm.

For example, when the first common sample alignment algorithm is PSI based on Diffie-Hellman in example 1, the slave participant may determine a computing power requirement of the first common sample alignment algorithm based on the quantity of samples supported by the master participant for sample alignment that is indicated by the first information and a quantity of samples included in a dataset of the slave participant for vertical federated learning model training, and determine, based on whether an invocable local resource meets the computing power requirement, whether to support performing sample alignment by using the first common sample alignment algorithm. If the slave participant determines to support performing sample alignment by using the first common sample alignment algorithm, the first common sample alignment algorithm is the second common sample alignment algorithm; or otherwise, the first common sample alignment algorithm is not the second common sample alignment algorithm. In addition, when the first information further indicates the at least one time period supported by the master participant for sample alignment, the slave participant may further estimate a load status corresponding to the at least one time period, and determine whether an invocable local resource corresponding to the at least one time period meets the computing power requirement, to determine whether to support performing sample alignment by using the first common sample alignment algorithm in the at least one time period. If the slave participant determines to support performing sample alignment by using the first common sample alignment algorithm in the at least one time period, the first common sample alignment algorithm is the second common sample alignment algorithm; or otherwise, the first common sample alignment algorithm is not the second common sample alignment algorithm.

It may be understood that, when the first information indicates a plurality of first common sample alignment algorithms, the slave participant may traverse, based on the foregoing example of determining whether to perform sample alignment by using the first common sample alignment algorithm, each of the plurality of first common sample alignment algorithms, to determine whether execution of sample alignment is supported.

In addition, there may be a plurality of second common sample alignment algorithms. For example, the plurality of first common sample alignment algorithms are sample alignment algorithm 1, sample alignment algorithm 2, and sample alignment algorithm 3, and the second common sample alignment algorithms may be sample alignment algorithm 2 and sample alignment algorithm 3.

It should be understood that the foregoing related implementation of determining, by the slave participant, whether execution of sample alignment is supported is merely an example. The slave participant may perform determining in another manner based on the first information. For a specific implementation, refer to step S610. This is not specifically limited in embodiments of this application.

The following describes the sample alignment response message in two cases based on whether the slave participant supports performing sample alignment.

Case 1: The slave participant supports performing sample alignment.

When the slave participant supports performing sample alignment, the sample alignment response message may indicate that execution of sample alignment is supported, and/or the second common sample alignment algorithm.

It may be understood that, when the first information in step S610 indicates only one first common sample alignment algorithm, to reduce network overheads, the sample alignment response message may indicate only that execution of sample alignment is supported. When the first information indicates a plurality of first common sample alignment algorithms, if the slave participant supports the plurality of first common sample alignment algorithms, to reduce network overheads, the sample alignment response message may indicate only that execution of sample alignment is supported. If the slave participant supports a second common sample alignment algorithm in the plurality of first common sample alignment algorithms, to reduce network overheads, the sample alignment response message may indicate only the second common sample alignment algorithm, to indicate that the slave participant supports performing sample alignment by using the second common sample alignment algorithm in the plurality of first common sample alignment algorithms. Certainly, the sample alignment response message may also indicate that execution of sample alignment is supported and the second common sample alignment algorithm. This is not specifically limited in embodiments of this application.

Optionally, the sample alignment response message may further indicate a time period in which the slave participant supports sample alignment, and/or a quantity of samples supported by the slave participant for sample alignment.

It may be understood that the time period in which the slave participant supports sample alignment may be used by the master participant to determine a time period in which the slave participant can perform sample alignment, so that the master participant determines, based on the time period, whether the slave participant can be selected to perform sample alignment. The time period in which the slave participant supports sample alignment may include one or more time periods, and the one or more time periods may be associated with the second common sample alignment algorithm. For example, the time periods in which the slave participant supports sample alignment include time period 3 and time period 4, the plurality of second common sample alignment algorithms include sample alignment algorithm 1 and sample alignment algorithm 2, and sample alignment algorithm 1 may be associated with time period 3, to indicate that the slave participant supports performing sample alignment by using sample alignment algorithm 1 in time period 3. Similarly, sample alignment algorithm 2 may be associated with time period 4, to indicate that the slave participant supports performing sample alignment by using sample alignment algorithm 2 in time period 4. Certainly, sample alignment algorithm 1 may be separately associated with time period 3 and time period 4, to indicate that the slave participant supports performing sample alignment by using sample alignment algorithm 1 in time period 3 and time period 4.

In addition, when the first information in step S610 further indicates the at least one time period in which the master participant supports sample alignment (the at least one time period may be associated with the first common sample alignment algorithm), the time period in which the slave participant supports sample alignment may be one or more of the at least one time period, or a combination of a subset of one or more of the at least one time period.

For example, assuming that the at least one time period in which the master participant supports sample alignment includes [9:00-12:00] and [14:00-18:00], the time period in which the slave participant supports sample alignment may be one or more of the at least one time period, for example, may be [9:00-12:00], [14:00-18:00], or [9:00-12:00] and [14:00-18:00]. Alternatively, the time period in which the slave participant supports sample alignment may be a subset of one or more of the at least one time period, for example, may be subset [9:30-11:00] of [9:00-12:00], subset [15:00-17:30] of [14:00-18:00], or subset [9:45-11:25] of [9:00-12:00] and subset [14:30-17:45] of [14:00-18:00].

The quantity of samples supported by the slave participant for sample alignment may be used by the master participant to determine a computing power requirement of the second common sample alignment algorithm. It may be understood that, when the second common sample alignment algorithm is a sample alignment algorithm (for example, PSI based on Diffie-Hellman in example 1) that has a same computing power requirement for participants, a computing power requirement of the sample alignment algorithm is not only related to a quantity of samples of the master participant, but also related to a quantity of samples of the slave participant. Therefore, the master participant may determine a computing power requirement of the second common sample alignment algorithm based on the quantity of samples of the master participant and the quantity of samples of the slave participant, to determine whether sample alignment can be supported in an actual process of performing sample alignment, thereby improving a success rate of sample alignment.

In addition, the quantity of samples supported by the slave participant for sample alignment may be a quantity of samples of all samples in a dataset of the slave participant for vertical federated learning model training, or a subset of the quantity of samples of all the samples in the dataset. It may be understood that the subset of the quantity of samples of all the samples may indicate that the slave participant expects to use the samples corresponding to the subset to perform vertical federated learning model training. For example, if the slave participant determines that local computing power cannot support performing sample alignment on all the samples by using the second common sample alignment algorithm, the slave participant may perform sample alignment and subsequent vertical federated learning model training by using the samples corresponding to the subset of all the samples.

For example, it is assumed that the first information indicates two first common sample alignment algorithms: sample alignment algorithm 1 and sample alignment algorithm 2, the first information further indicates that the quantity of samples supported by the master participant for sample alignment is 1 billion, and the slave participant determines that the quantity of samples included in the dataset used for vertical federated learning model training is 100,000. Based on the foregoing conditions, the slave participant determines that sample alignment algorithm 1 can be supported but sample alignment algorithm 2 cannot be supported. In this case, the sample alignment response message may include: sample alignment algorithm 1 (that is, the second common sample alignment algorithm), the quantity of samples supported by the slave participant for sample alignment, that is, 100,000, and the time period in which the slave participant supports performing sample alignment by using sample alignment algorithm 1.

Case 2: The slave participant does not support performing sample alignment.

When the slave participant does not support performing sample alignment, the sample alignment response message may indicate that execution of sample alignment is not supported, and/or a reason why execution of sample alignment is not supported.

It may be understood that, after determining that execution of sample alignment is not supported, the slave participant may send the response message to the master participant, to indicate that execution of sample alignment is not supported. In this way, the master participant can be notified that the slave participant cannot support performing sample alignment. Alternatively, after the slave participant determines that execution of sample alignment is not supported, the slave participant may send the reason why execution of sample alignment is not supported, to assist the master participant in adjusting, when subsequently initiating a sample alignment request again, a parameter indicated by the first information, such as the first common sample alignment algorithm, the quantity of samples supported by the master participant for sample alignment, or the time period in which the master participant supports sample alignment, thereby improving a success rate of negotiating a related configuration for sample alignment (for example, a sample alignment algorithm, a quantity of samples, or a time period for sample alignment).

In addition, the reason why sample alignment is not supported may include one or more reasons. For example, computing power does not support sample alignment, or a time period does not support sample alignment. That the computing power does not support sample alignment may include that the quantity of samples supported by the master participant for sample alignment is excessively large, or the quantity of samples corresponding to the dataset of the slave participant for vertical federated learning model training is excessively large, or the like. It may be understood that the foregoing reason why execution of sample alignment is not supported is merely an example, and there may be another reason. This is not specifically limited in embodiments of this application.

For example, the sample alignment response message may include a parameter cause value (or referred to as a failure indication with cause code (failure indication with cause code)), and the cause value indicates the reason why execution of sample alignment is not supported. It may be understood that, that the cause value indicates the reason why sample alignment is not performed can reduce indication overheads and improve reliability.

For example, the cause value may be preconfigured in a protocol. For example, it is preconfigured that symbol "01" indicates that the reason why execution of sample alignment is not supported is that the computing power does not support sample alignment, and "02" indicates that the reason why execution of sample alignment is not supported is that the time period does not support sample alignment. For another example, it is preconfigured that symbol "01" indicates that the reason why execution of sample alignment is not supported is that the quantity of samples supported by the master participant for sample alignment is excessively large, and "02" indicates that the reason why execution of sample alignment is not supported is that the time period does not support sample alignment.

It may be understood that, that the cause value is preconfigured in the protocol is merely an example. A symbol corresponding to the cause value may alternatively be negotiated in advance between the slave participant, the master participant, and the VFLSF network element, and the symbol corresponding to the cause value may alternatively be represented in another manner (for example, a bit). This is not specifically limited in embodiments of this application.

In addition, the sample alignment response message may include two parameters: a failure indication and a cause value. The failure indication indicates that the slave participant does not support performing sample alignment, and the cause value indicates a reason why execution of sample alignment is not supported. This is not specifically limited in embodiments of this application.

Optionally, the sample alignment response message may indicate a maximum quantity of samples expected to be used by the master participant.

It may be understood that the maximum quantity of samples expected to be used by the master participant may indicate a maximum quantity of samples that the slave participant can allow the master participant to use when performing sample alignment based on the local resource. If the master participant may perform sample alignment by using datasets corresponding to samples less than or equal to the maximum quantity of samples expected to be used by the master participant, the slave participant may support performing sample alignment.

In addition, when the first information indicates a plurality of first common sample alignment algorithms, the sample alignment response message may further indicate a first common sample alignment algorithm associated with the maximum quantity of samples expected to be used by the master participant. In this way, the master participant can determine a maximum quantity of samples corresponding to a specific sample alignment algorithm that is the maximum quantity of samples expected to be used by the master participant that is indicated by the sample alignment response message. This can assist the master participant in adjusting, when subsequently initiating a sample alignment request again (that is, step S610), the quantity of samples supported by the master participant for sample alignment that corresponds to the first common sample alignment algorithm.

For example, it is assumed that the first information indicates two first common sample alignment algorithms: sample alignment algorithm 1 and sample alignment algorithm 2, the first information further indicates that the quantity of samples supported by the master participant for sample alignment is 1 billion, and the slave participant determines that the quantity of samples included in the dataset used for vertical federated learning model training is 100,000. Based on the foregoing conditions, the slave participant determines that computing power does not support sample alignment because the quantity of samples supported by the master participant for sample alignment is excessively large. In this case, if the quantity of samples supported by the master participant for sample alignment is 500 million, the slave participant may support sample alignment algorithm 1; or if the quantity of samples supported by the master participant for sample alignment is 700 million, the slave participant may support sample alignment algorithm 2. Therefore, the sample alignment response message may include: the failure indication, the cause value (for example, the quantity of samples supported by the master participant for sample alignment is excessively large), the first maximum quantity of samples expected to be used by the master participant that is associated with sample algorithm 1, that is, 500 million, and the second maximum quantity of samples expected to be used by the master participant that is associated with sample algorithm 2, that is, 700 million.

In addition, the foregoing is merely an example. The sample alignment response message may be a combination of one or more of the failure indication, the cause value, and the maximum quantity of samples that the slave participant expects the master participant to use. This is not specifically limited in embodiments of this application.

It should be understood that, when the slave participant does not support performing sample alignment, the sample alignment response message may further include other information such as a time period in which the slave participant expects to perform sample alignment. This is not specifically limited in embodiments of this application.

It may be understood that, if sample alignment response information of each of the at least one candidate slave participant indicates that execution of sample alignment is not supported, the sample alignment negotiation fails, and the master participant may initiate a sample alignment negotiation process again. For example, the master participant may adjust one or more of the first common sample alignment algorithm, the quantity of samples supported by the master participant for sample alignment, and the at least one time period in which the master participant supports sample alignment, and send an adjusted sample alignment request message, so as to improve a success rate of negotiating a related configuration for sample alignment. In addition, if the sample alignment negotiation fails again, the master participant may further initiate a sample alignment negotiation process again until the sample alignment negotiation succeeds, or a quantity of times of repeatedly performing the sample alignment negotiation process reaches an upper limit. The upper limit may be preconfigured in a protocol, or may be negotiated in advance by at least two of the master participant, the slave participant, the VFL server, or the VFLSF network element. This is not specifically limited in embodiments of this application.

It may be further understood that, if sample alignment response messages of at least some of the at least one candidate slave participant indicate that execution of sample alignment is supported, the master participant may perform step S612. Step S612 indicates a target sample alignment algorithm to at least one target slave participant that meets a sample alignment execution condition in the at least some slave participants. In addition, the master participant may further indicate, to a slave participant that does not meet the sample alignment execution condition in the at least some slave participants, that sample alignment is not performed, so as to notify the slave participant that does not meet the sample alignment execution condition that sample alignment is not performed subsequently.

The following describes step S612.

S612: The master participant sends a first sample alignment negotiation result message to the target slave participant. Correspondingly, the target slave participant receives the first sample alignment negotiation result message from the master participant. The first sample alignment negotiation result message indicates the target sample alignment algorithm.

It may be understood that the master participant may determine the target slave participant and the target sample alignment algorithm based on the sample alignment response message of the at least one candidate slave participant. For example, when the sample alignment response message of the at least one candidate slave participant indicates that there is only one slave participant supporting performing sample alignment, the target slave participant is the slave participant supporting performing sample alignment, and the target sample alignment algorithm is a second common sample alignment algorithm indicated by the sample alignment response message indicating that execution of sample alignment is supported. In addition, when the sample alignment response message of the at least one candidate slave participant indicates that there is only one slave participant supporting performing sample alignment, and the sample alignment response message of the slave participant indicates a plurality of second common sample alignment algorithms, the master participant may determine one second common sample alignment algorithm from the plurality of second common sample alignment algorithms as the target sample alignment algorithm. There may be a plurality of implementations in which the master participant determines one second common sample alignment algorithm from the plurality of second common sample alignment algorithms. For example, the master participant randomly selects one second common sample alignment algorithm from the plurality of second common sample alignment algorithms, or the master participant selects a second common sample alignment algorithm with a minimum computing power requirement (that is, computing complexity) from the plurality of second common sample alignment algorithms. This is not specifically limited in embodiments of this application.

In addition, when the sample alignment response message of the at least one candidate slave participant indicates that there are a plurality of slave participants supporting performing sample alignment, the master participant may determine the target slave participant from the plurality of slave participants and the target sample alignment algorithm based on the sample alignment response messages of the plurality of slave participants. For example, the sample alignment response message of the at least one candidate slave participant is the sample alignment response message of the at least one candidate slave participant in step S611. The master participant may determine, based on the sample alignment response message of the at least one candidate slave participant, the plurality of slave participants supporting performing sample alignment, and determine the target slave participant and the target sample alignment algorithm based on an intersection between the second common sample alignment algorithms indicated by the plurality of participants.

In other words, the master participant may determine, based on the sample alignment response message of the at least one candidate slave participant, the slave participants supporting performing sample alignment, and further determine, based on the plurality of slave participants supporting performing sample alignment, the target sample alignment algorithm used for performing sample alignment and the target slave participant that meets a computing power requirement of the target sample alignment algorithm, to avoid a sample alignment failure caused by a failure to meet the computing power requirement of the sample alignment algorithm in a sample alignment process, and improve a success rate and efficiency of sample alignment.

It should be understood that the master participant may determine the target slave participant and the target sample alignment algorithm based on the sample alignment response message of the at least one candidate slave participant in a plurality of manners, which are separately described below.

Example A: The master participant determines, based on the sample alignment response message of the at least one candidate slave participant, a combination of a plurality of slave participants supporting a same sample alignment algorithm, and selects a combination with a largest quantity of supported slave participants as the target sample alignment algorithm and the target slave participant.

For example, the at least one candidate slave participant in step S611 includes candidate slave participants 1 to 5, second common sample alignment algorithms indicated by a sample alignment response message of candidate slave participant 1 are sample alignment algorithm 1 and sample alignment algorithm 2, second common sample alignment algorithms indicated by a sample alignment response message of candidate slave participant 2 are sample alignment algorithm 2 and sample alignment algorithm 3, a sample alignment response message of candidate slave participant 3 indicates that execution of sample alignment is not supported, second common sample alignment algorithms indicated by a sample alignment response message of candidate slave participant 4 are sample alignment algorithm 3 and sample alignment algorithm 4, and a second common sample alignment algorithm indicated by a sample alignment response message of candidate slave participant 5 is sample alignment algorithm 2. Therefore, a combination of a plurality of participants supporting a same sample alignment algorithm in an intersection of the second common sample alignment algorithms of the different participants includes: candidate slave participant 1, candidate slave participant 2, and candidate slave participant 5 support sample alignment algorithm 2, and candidate slave participant 2 and candidate slave participant 4 support sample alignment algorithm 3.

Based on the foregoing two combinations, the master participant may select a combination with a maximum quantity of supported candidate slave participants as the target sample alignment algorithm and the target slave participant. To be specific, the master participant may determine that the target slave participants are respectively candidate slave participant 1, candidate slave participant 2, and candidate slave participant 5, and the target sample alignment algorithm is sample alignment algorithm 2. Further, the master participant may separately send a first sample alignment negotiation result message to candidate slave participant 1, candidate slave participant 2, and candidate slave participant 5, where the first sample alignment negotiation result message indicates that the target sample alignment algorithm for performing sample alignment is sample alignment algorithm 2.

It may be understood that an objective of vertical federated learning model training is to improve model training accuracy by extending a quantity of features. Therefore, in a sample alignment process, the master participant determines more target slave participants to perform sample alignment, so that a quantity of extended features can be increased, thereby improving model training accuracy.

Example B: When there are at least two different combinations with a maximum quantity of supported candidate slave participants, the master participant may randomly select one of the combinations to determine the target slave participant and the target sample alignment algorithm.

For example, it is assumed that a difference between example B and example A in the sample alignment response message of the at least one candidate slave participant lies in that the second common sample alignment algorithms indicated by the sample alignment response message of candidate slave participant 5 in example B are sample alignment algorithm 2 and sample alignment algorithm 3. To be specific, a combination of a plurality of participants supporting a same sample alignment algorithm in an intersection of the second common sample alignment algorithms of the different participants includes: candidate slave participant 1, candidate slave participant 2, and candidate slave participant 5 support sample alignment algorithm 2, and candidate slave participant 2, candidate slave participant 4, and candidate slave participant 5 support sample alignment algorithm 3.

Because the quantities of candidate slave participants corresponding to the foregoing two combinations are the same, the master participant may randomly select one of the combinations to determine the target slave participant and the target sample alignment algorithm. For example, the master participant may separately send a first sample alignment negotiation result message to candidate slave participant 1, candidate slave participant 2, and candidate slave participant 5, where the first sample alignment negotiation result message indicates that the target sample alignment algorithm is sample alignment algorithm 2; or the master participant may separately send a first sample alignment negotiation result message to candidate slave participant 2, candidate slave participant 4, and candidate slave participant 5, where the first sample alignment negotiation result message indicates that the target sample alignment algorithm is sample alignment algorithm 3.

Example C: The master participant may determine the target slave participant and the target sample alignment algorithm based on a range of a quantity of slave participants performing sample alignment and the sample alignment response message of the at least one candidate slave participant.

It may be understood that the range of the quantity of slave participants performing sample alignment may include a maximum quantity and/or a minimum quantity of slave participants performing sample alignment. For example, if the maximum quantity of slave participants performing sample alignment may be indicated by a first threshold, the range of the quantity of slave participants performing sample alignment is [1, first threshold]. For another example, if the minimum quantity of slave participants performing sample alignment may be indicated by a second threshold, the range of the quantity of slave participants performing sample alignment is [second threshold, +∞). For still another example, if the minimum quantity of slave participants performing sample alignment is a second threshold, and the maximum quantity of slave participants performing sample alignment is a first threshold, the range of the quantity of slave participants performing sample alignment is [second threshold, first threshold].

For example, it is assumed that a difference between example C and example B in the sample alignment response message of the at least one candidate slave participant lies in that the second common sample alignment algorithms indicated by the sample alignment response message of candidate slave participant 1 in example C are sample alignment algorithms 1 to 3. Therefore, a combination of a plurality of participants supporting a same sample alignment algorithm in an intersection of the second common sample alignment algorithms of the different participants includes: candidate slave participants 1, 2, 4, and 5 support sample alignment algorithm 3, and candidate slave participants 1, 2, and 5 support sample alignment algorithms 2 and 3.

For example, the range of the quantity of slave participants performing sample alignment includes the minimum quantity of 4. The master participant may select sample alignment algorithm 3 supported by candidate slave participants 1, 2, 4, and 5 as the target sample alignment algorithm. That is, the master participant may separately send a first sample alignment negotiation result message to candidate slave participants 1, 2, 4, and 5, where the first sample alignment negotiation result message indicates that the target sample alignment algorithm is sample alignment algorithm 3.

For example, the range of the quantity of slave participants performing sample alignment includes the minimum quantity of 3. The master participant may determine the target slave participant and the target sample alignment algorithm based on any one of the foregoing two combinations.

For example, the range of the quantity of slave participants performing sample alignment includes the maximum quantity of 3. The master participant may determine the target slave participant and the target sample alignment algorithm based on that candidate slave participants 1, 2, and 5 support sample alignment algorithms 2 and 3 in the foregoing combination. For example, the target slave participants are respectively candidate slave participants 1, 2, and 5, and the sample alignment algorithm may be sample alignment algorithm 2 and/or sample alignment algorithm 3.

For example, the range of the quantity of slave participants performing sample alignment includes the minimum quantity of 4 and the maximum quantity of 6. The master participant may select sample alignment algorithm 3 supported by candidate slave participants 1, 2, 4, and 5 as the target sample alignment algorithm.

It may be understood that the master participant may determine, based on the range of the quantity of slave participants performing sample alignment, the target slave participant and the target sample alignment algorithm that meet a requirement for a quantity of samples for performing sample alignment, so as to further avoid a problem that efficiency and a success rate of sample alignment are affected due to an excessively large computing power requirement caused by an excessively large quantity of target slave participants participating in sample alignment, thereby improving a success rate and efficiency of sample alignment.

It should be understood that examples A to C are examples based on that the sample alignment response message indicates the second common sample alignment algorithm. When the sample alignment response message of the candidate slave participant indicates only that execution of sample alignment is supported, the master participant may consider by default that the candidate slave participant supports the first common sample alignment algorithm indicated by the sample alignment request message in step S610.

In addition, in addition to indicating the second common sample alignment algorithm, the sample alignment response message further indicates the time period in which the slave participant supports sample alignment, and/or the quantity of samples supported by the slave participant for sample alignment, the master participant may determine the target slave participant and the target sample alignment algorithm based on the second common sample alignment algorithm indicated by each candidate slave participant, the time period in which the slave participant supports sample alignment, or the quantity of samples supported by the slave participant for sample alignment, which are separately described below.

Example D: The master participant may determine the target slave participant and the target sample alignment algorithm based on the second common sample alignment algorithm indicated by the sample alignment response message of the at least one candidate slave participant and the time period in which the slave participant supports sample alignment.

For example, on the basis that the target sample alignment algorithm is determined as sample alignment algorithm 2 in example A, it is assumed that a difference between example D and example A in the sample alignment response message of the at least one candidate slave participant lies in that the sample alignment response message of candidate slave participant 1 further indicates time period 1 [14:00-17:00] associated with sample alignment algorithm 2, the sample alignment response message of candidate slave participant 2 further indicates time period 2 [9:00-11:00] associated with sample alignment algorithm 2, and the sample alignment response message of candidate slave participant 5 further indicates time period 3 [15:00-17:00] associated with sample alignment algorithm 2. Therefore, the master participant further determines, based on whether the time periods of candidate slave participants 1, 2, and 5 have an intersection, that time period 2 does not overlap time period 1 and time period 3, that is, candidate slave participant 2 is not the target slave participant. That is, the master participant determines that the target slave participants are candidate slave participants 1 and 5, the target sample alignment algorithm is sample alignment algorithm 2, and the target time period for sample alignment is time period 3.

In addition, assuming that time period 2 is [16:30-17:00], there is an intersection between the time periods supported by candidate slave participants 1, 2, and 5 for sample alignment. However, the intersection time period is only [16:30-17:00], that is, the intersection time period is excessively short. Therefore, the master participant may also determine that candidate slave participant 2 is not suitable as the target slave participant.

It should be understood that, assuming that the time period indicated by the sample response message of each candidate slave participant is not a subset of the at least one time period supported by the master participant, the master participant first determines an intersection between the time period indicated by each candidate slave participant and the at least one time period, and determines the target slave participant and the target time period based on the intersection.

Example E: The master participant may determine the target slave participant and the target sample alignment algorithm based on the second common sample alignment algorithm indicated by the sample alignment response message of the at least one candidate slave participant and the quantity of samples supported by the slave participant for sample alignment.

For example, it is assumed that a difference between example E and example A in the sample alignment response message of the at least one candidate slave participant lies in that the sample alignment response message of candidate slave participant 1 further indicates that a quantity of samples supported by candidate slave participant 1 for sample alignment is 100,000, the sample alignment response message of candidate slave participant 2 further indicates that a quantity of samples supported by the candidate slave participant 2 for sample alignment is 500,000, and the sample alignment response message of candidate slave participant 5 further indicates that a quantity of samples supported by candidate slave participant 5 for sample alignment is 2 million. If the master participant determines that a computing power requirement of sample alignment algorithm 2 is not met when the quantity of samples of candidate slave participant 5 is 2 million, the master participant determines that candidate slave participant 5 is not the target slave participant, that is, the target slave participants are candidate slave participants 1 and 2, and the target sample alignment algorithm is sample alignment algorithm 2.

Example F: The master participant may determine the target slave participant and the target sample alignment algorithm based on the second common sample alignment algorithm indicated by the sample alignment response message of the at least one candidate slave participant, the time period in which the slave participant supports sample alignment, and the quantity of samples supported by the slave participant for sample alignment.

For example, on the basis that the target sample alignment algorithm is determined as sample alignment algorithm 2 in example A, it is assumed that a difference between example F and example A in the sample alignment response message of the at least one candidate slave participant lies in that the sample alignment response message of candidate slave participant 1 further indicates time period 1 [14:00-15:00] associated with sample alignment algorithm 2, and the quantity of samples supported by candidate slave participant 1 for sample alignment is 2 million; the sample alignment response message of candidate slave participant 2 further indicates time period 2 [14:00-17:00] associated with sample alignment algorithm 2, and the quantity of samples supported by candidate slave participant 2 for sample alignment is 100,000; and the sample alignment response message of candidate slave participant 5 further indicates time period 3 [15:00-17:00] associated with sample alignment algorithm 2, and the quantity of samples supported by candidate slave participant 5 for sample alignment is 500,000. Therefore, the master participant determines that candidate slave participants 1, 2, and 5 jointly support sample alignment algorithm 2, an intersection between time period 1 of candidate slave participant 1 and time period 2 of candidate slave participant 2 is [14:00-15:00], and an intersection between time period 2 of candidate slave participant 2 and time period 3 of candidate slave participant 5 is [15:00-17:00]. In addition, the master participant determines that a computing power requirement of sample alignment algorithm 2 is not met when the quantity of samples of the slave participant is 2 million. In this way, the master participant may determine that candidate slave participant 1 is not the target slave participant, the target slave participants are respectively candidate slave participants 2 and 5, the target sample alignment algorithm is sample alignment algorithm 2, and the target time period for sample alignment is [15:00-17:00].

It may be understood that, on the basis of the second common sample alignment algorithm, the master participant further determines the target slave participant and the target sample alignment algorithm based on the time period in which the slave participant supports sample alignment and/or the quantity of samples supported by the slave participant for sample alignment, so as to further reduce a probability of a sample alignment failure or efficiency reduction caused by a failure to meet a computing power requirement of the sample alignment algorithm.

It should be understood that the foregoing examples A to F are merely examples, and the master participant may alternatively determine the target slave participant and the target sample alignment algorithm in another manner. This is not specifically limited in embodiments of this application.

Optionally, the first sample alignment negotiation result message further indicates a target time period for sample alignment.

It may be understood that the target time period may be an intersection between time periods indicated by sample alignment response messages of target participants, for example, the target time period in example D.

In other words, the participant may further indicate, by using the first sample alignment negotiation result message, the target time period for performing sample alignment, to help the participant perform a sample alignment process in the target time period, so as to prevent the participant from performing the sample alignment process in a time period in which the participant may not be able to meet a computing power requirement of the target sample alignment algorithm, thereby further improving a success rate and efficiency of sample alignment.

Optionally, the method process shown in FIG. 6A and FIG. 6B further includes step S613.

S613: The master participant sends a second sample alignment negotiation result message to a slave participant other than the target slave participant in the plurality of slave participants supporting performing sample alignment. Correspondingly, the slave participant other than the target slave participant in the plurality of slave participants supporting performing sample alignment receives the second sample alignment negotiation result message from the master participant.

The second sample alignment negotiation result message indicates that sample alignment is not performed, and/or a reason why sample alignment is not performed. In other words, the master participant sends the second sample alignment negotiation result message to the another slave participant, to indicate that sample alignment is not performed, and may notify the another slave participant in time that sample alignment is not performed subsequently. In addition, the second sample alignment negotiation result message indicates the reason why sample alignment is not performed, so that when the master participant subsequently initiates a sample alignment negotiation process again, adjustment of the second common sample alignment algorithm indicated by the sample alignment response message fed back by the slave participant, the quantity of samples supported by the slave participant for sample alignment, the time period supported by the slave participant for sample alignment, or the like can be facilitated, thereby improving a success rate and efficiency of sample alignment negotiation.

It may be understood that the plurality of slave participants supporting performing sample alignment may be, for example, a plurality of slave participants supporting performing the sample alignment algorithm by sending the sample alignment response message in the at least one candidate slave participant. The slave participant other than the target slave participant in the plurality of slave participants may be, for example, a slave participant that is not selected by the master participant in the plurality of participants as the target slave participant, for example, candidate slave participant 4 in examples A to F, candidate slave participant 2 in example D, candidate slave participant 5 in example E, and candidate slave participant 1 in example F.

In addition, there may be a plurality of reasons why sample alignment is not performed. For example, a reason why candidate slave participant 4 in examples A to F does not perform sample alignment is that sample alignment algorithms 3 and 4 supported by candidate slave participant 4 are not used. For another example, a reason why candidate slave participant 2 in example D does not perform sample alignment is that there is no intersection between time period 2 supported by candidate slave participant 2 for sample alignment and time periods 1 and 3. For another example, a reason why candidate slave participant 5 in example E does not perform sample alignment is that the master participant determines that the computing power requirement of sample alignment algorithm 2 is not met when the quantity of samples of candidate slave participant 5 is 2 million. For another example, a reason why candidate slave participant 1 in example F does not perform sample alignment is that there is no intersection between time period 1 supported by candidate slave participant 1 for sample alignment and time period 3, and the master participant determines that the computing power requirement of sample alignment algorithm 2 is not met when the quantity of samples of candidate slave participant 1 is 2 million.

It should be understood that the foregoing reason why sample alignment is not performed is merely an example, and there may be another reason why sample alignment is not performed during actual implementation. This is not specifically limited in embodiments of this application.

In addition, the second sample alignment negotiation result message may indicate, by using a parameter cause value, the foregoing reason why sample alignment is not performed. For details, refer to case 2 in step S611. Details are not described again.

It may be understood that step S613 is an optional step, that is, the master participant may not send the second sample alignment negotiation result message to a slave participant other than the target slave participant in the plurality of slave participants supporting performing sample alignment. The another slave participant may start timing when sending the sample alignment response message to the master participant. If the first sample alignment negotiation result message of the master participant is not received when a time threshold is exceeded, it may be determined that the master participant indicates that sample alignment is not performed.

In addition, the time threshold may be pre-agreed on in a protocol, or may be negotiated in advance between the candidate slave participant and the master participant, or may be indicated by another network element (for example, the VFL server or the master participant). This is not specifically limited in embodiments of this application.

It should be understood that, in step S611, when the sample alignment response message of the at least one candidate slave participant indicates that there are a plurality of slave participants supporting performing sample alignment, the master participant may determine, based on sample alignment response messages of the plurality of slave participants, that sample alignment cannot be performed between the master participant and the plurality of slave participants, that is, the sample alignment negotiation fails. For example, there is no intersection between the second common sample alignment algorithms indicated by the sample alignment response messages of the plurality of slave participants. For another example, a quantity (or number) of slave participants whose second common sample alignment algorithms indicated by the sample alignment response messages of the plurality of slave participants have an intersection is less than or equal to a second threshold, that is, a minimum quantity of slave participants performing sample alignment. For still another example, there is no intersection between time periods supporting sample alignment that are indicated by the sample alignment response messages of the plurality of slave participants, or a quantity of slave participants whose time periods supporting sample alignment have an intersection is less than or equal to a second threshold. This is not specifically limited in embodiments of this application.

In addition, when the master participant determines that sample alignment cannot be performed with the plurality of slave participants, the master participant may send a second sample alignment response message to the plurality of slave participants supporting performing sample alignment, to indicate that sample alignment is not performed and/or a reason why sample alignment is not performed.

It may be understood that, when the sample alignment negotiation fails, the master participant may initiate a sample alignment negotiation process again. For example, the master participant may adjust one or more of the first common sample alignment request, the quantity of samples supported by the master participant for sample alignment, and the at least one time period in which the master participant supports sample alignment, and send an adjusted sample alignment request message, so as to improve a success rate of negotiating a related configuration for sample alignment.

S614: The master participant and the target slave participant perform a sample alignment process.

It may be understood that, based on step S612, the master participant and the target slave participant may determine a target sample alignment algorithm for performing sample alignment (for example, may further include a target time period for sample alignment), and the master participant and the target slave participant may perform the sample alignment process based on the target sample alignment algorithm, to obtain a sample alignment result. The sample alignment result may include a common sample between the master participant and the plurality of target slave participants.

In addition, the sample alignment process may include a two-party sample alignment process and/or a multi-party sample alignment process. For specific implementation of the two-party sample alignment process and/or the multi-party sample alignment process, refer to the related descriptions (for example, example 1 and example 2) in the "sample alignment" part in the specific implementation. Details are not described again.

It should be understood that the master participant and the target slave participant may determine a common sample and/or a common sample identifier between the master participant and the target slave participant based on the sample alignment result.

S615: The participant sends a vertical federated learning response message to the VFL server. Correspondingly, the VFL server receives the vertical federated learning response message from the participant.

The vertical federated learning response message indicates whether the participant joins vertical federated learning. It should be understood that, joining vertical federated learning may be joining a vertical federated learning model training process and/or a vertical federated learning inference process. This is not specifically limited in embodiments of this application.

In addition, a meaning of joining vertical federated learning and a meaning of participating in vertical federated learning are the same, and may be replaced with each other. This is uniformly described herein, and details are not described below.

It may be understood that the participant may include a master participant and a target slave participant, and the vertical federated learning response message may include a first vertical federated learning response message and a second vertical federated learning response message. Further, step S615 may include:
S615a: The target slave participant sends a first vertical federated learning response message to the VFL server. Correspondingly, the VFL server receives the first vertical federated learning response message from the target slave participant.
   It may be understood that the first vertical federated learning response message may be understood as a response message of the first vertical federated learning request message in step S608, that is, the first vertical federated learning response message may also be understood as a response message of the vertical federated learning preparation process, and indicates whether the target slave participant joins vertical federated learning.
S615b: The master participant sends a second vertical federated learning response message to the VFL server. Correspondingly, the VFL server receives the second vertical federated learning response message from the master participant.

It may be understood that the second vertical federated learning response message may be understood as a response message of the second vertical federated learning request message in step S609, that is, the second vertical federated learning response message may also be understood as a response message of the vertical federated learning preparation process, and indicates whether the master participant joins vertical federated learning.

It should be understood that the master participant and the target slave participant may determine, based on the sample alignment result, whether to join vertical federated learning. For example, if there are only a small quantity of common samples between a first participant (any one of the master participant and the plurality of target slave participants) and the other participants, or a quantity of common samples is less than or equal to a third threshold, the first participant may determine not to join vertical federated learning. The third threshold may be 10%, 20%, 30%, or another value of samples corresponding to a dataset that is provided by the first participant and that is used for vertical federated learning model training. This specifically depends on actual implementation. This is not specifically limited in embodiments of this application.

In addition, the first participant may further determine, based on other information, whether to join vertical federated learning. For example, the first participant determines that the first participant is overloaded, and determines not to participate in vertical federated learning. This is not specifically limited in embodiments of this application.

S616: The VFL server determines, based on the vertical federated learning response message of the participant, a target participant joining vertical federated learning.

It may be understood that the target participant joining vertical federated learning may be, for example, a participant joining vertical federated learning model training. After completing the sample alignment process, each target participant may determine a common sample, and may perform the vertical federated learning model training process. For details of the vertical federated learning model training process, refer to the process shown in FIG. 3. Details are not described again.

According to the information transmission method process shown in FIG. 6A and FIG. 6B in embodiments of this application, each participant may register the sample alignment capability with the VFLSF network element. Therefore, when the master participant initiates vertical federated learning, the master participant may discover the coordinator VFL server of vertical federated learning through the VFLSF network element, and send the discovery request message to the VFL server, so that the VFL server discovers, through the VFLSF network element, at least one candidate slave participant that meets the sample alignment requirement, obtains the sample alignment capability (for example, the sample alignment algorithm) of the at least one candidate slave participant, and sends the sample alignment capability of the at least one candidate slave participant to the master participant. In this way, the master participant can perform sample alignment negotiation with the at least one candidate slave participant based on the first common sample alignment algorithm jointly supported by the master participant and the at least one candidate slave participant, thereby improving a success rate and efficiency of sample alignment negotiation. Further, through sample alignment negotiation, the master participant may determine, based on the response of the at least one candidate slave participant, the target slave participant whose local computing power can support execution of sample alignment and the target sample alignment algorithm, so as to avoid a problem that the sample alignment fails because the computing power requirement of the sample alignment algorithm is not met in a sample alignment process, and improve a success rate and efficiency of sample alignment.

It may be understood that, in the information transmission method process shown in FIG. 6A and FIG. 6B, the master participant is the initiator of vertical federated learning. In another implementation, the slave participant may alternatively initiate vertical federated learning, and the VFL server is responsible for discovering the master participant and the candidate slave participant. For example, the slave participant finds that the training data cannot be collected due to privacy protection, and then initiates vertical federated learning. The slave participant may perform step S603 to send the discovery request message to the VFLSF network element, and determine the VFL server by performing step S604. Further, the slave participant may perform step S605, that is, the slave participant may send the vertical federated learning initiation request message to the VFL server, so that the VFL server and the VFLSF network element perform steps S606 and S607 to determine the master participant and the candidate slave participant, and then the VFL server sends the vertical federated learning request message to the slave participant, the master participant, and the candidate slave participant (that is, steps S608 and S609), so as to perform the sample alignment negotiation process (that is, steps S610 to S613) and the sample alignment execution process (that is, step S614) between the master and the slave participant, and the process (that is, steps S615 and S616) in which the VFL server determines the target participant joining vertical federated learning.

In addition, in the foregoing example in which the slave participant initiates vertical federated learning, the slave participant may initiate the sample alignment negotiation process, that is, the slave participant may perform step S610, that is, the slave participant may send the sample alignment request message to the master participant and the candidate slave participant.

It should be understood that, in the information transmission method process shown in FIG. 6A and FIG. 6B, the participant (for example, the master participant or the slave participant) may be a trusted network element in a core network (or a network element located in a same trusted domain as the VFLSF network element). For example, the participant may be an application function network element in an operator, and the participant may directly interact with a network function network element such as the VFLSF network element (or the network repository function network element), the VFL server, or the network data analytics function network element. When the participant is a third-party application function network element (or referred to as an untrusted application function (untrusted AF) network element), the participant and the network function network element are not in a same trusted domain, and the network exposure function network element may provide a network function for the participant to securely access the network function network element, that is, the participant may interact with the network function network element through the network exposure function network element.

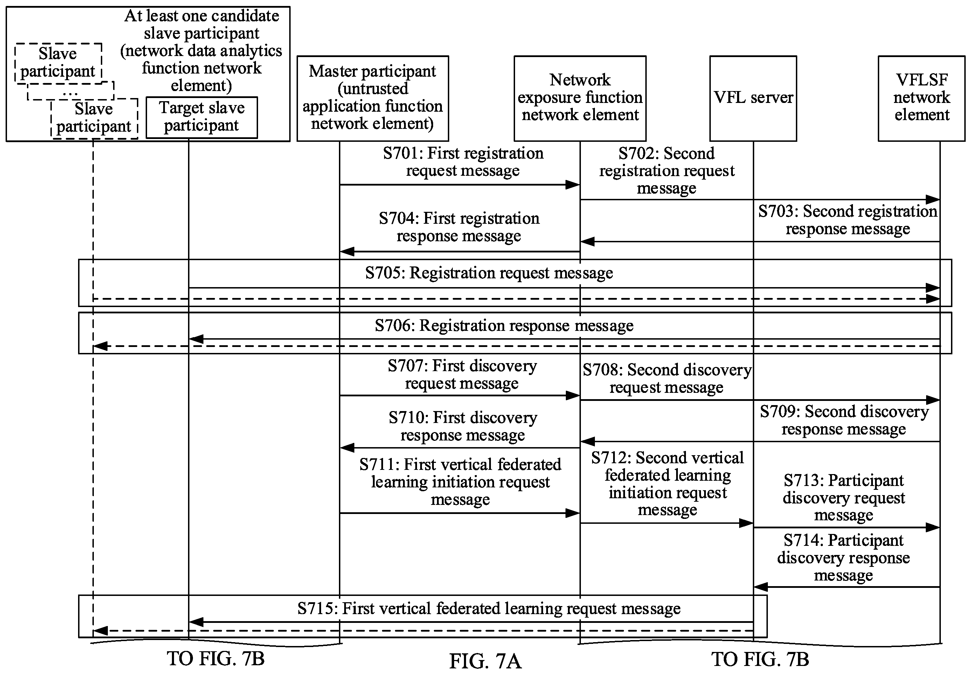

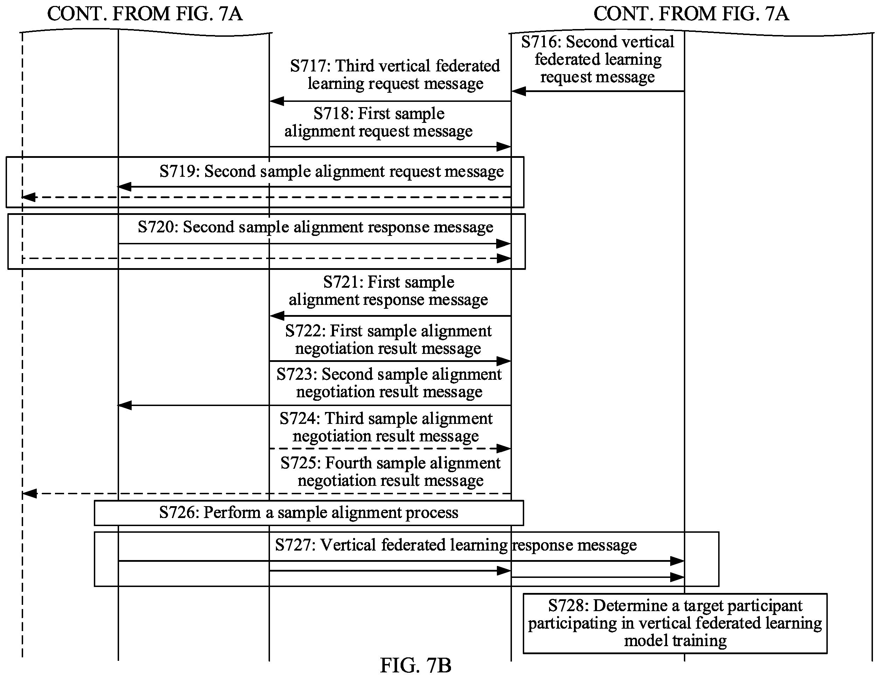

The following further describes the information transmission method process shown in FIG. 6A and FIG. 6B with reference to FIG. 7A and FIG. 7B by using an example in which the master participant in FIG. 6A and FIG. 6B is an untrusted application function network element, the candidate slave participant in the at least one candidate slave participant is a network data analytics function network element, the VFL server is the VFL server in FIG. 5, and the VFLSF network element is the VFLSF network element or the network repository function network element in FIG. 5.

FIG. 7A and FIG. 7B are a schematic flowchart 2 of an information transmission method according to an embodiment of this application. As shown in FIG. 7A and FIG. 7B, the information transmission method process includes steps S701 to S728. Steps S705 and S706 are the same as steps S601 and S602, steps S713 to S715 are the same as steps S606 to S608, and step S728 is the same as step S616. Details are not described again.

The following describes steps S701 to S704, S707 to S712, and S716 to S727.

S701: The master participant sends a first registration request message to a network exposure function network element. Correspondingly, the network exposure function network element receives the first registration request message from the master participant.

It may be understood that, for the first registration request message, refer to the registration request message in step S601 in FIG. 6A. Details are not described herein again.

It should be understood that the network exposure function network element may support the following functions: capability and event exposure, verification and authorization, and internal and external information conversion. For example, capability and event exposure may be that a network function network element in a network may securely expose a capability and an event to the untrusted application function network element through the network exposure function network element. For example, verification and authorization may be that the network exposure function network element may perform verification and authorization on behavior of the untrusted application function network element, to implement a function of securely sending information to the network function network element by the untrusted application function network element. For example, internal and external information conversion may be converting information exchanged between the untrusted application function network element and the network function network element. In addition, to improve security, the network exposure function network element may further shield information about the untrusted application function network element and sensitive information of the network function network element.

For example, the master participant may send the first registration request information by invoking a first service operation provided by the network exposure function network element. The first service operation may be a service operation related to vertical federated learning registration. For example, the first service operation may be a vertical federated learning registration request service operation.

In addition, the master participant may interact with the network exposure function network element through a service interface Nnef of the network exposure function network element.

It should be understood that, that the master participant sends the first registration request message by invoking the first service operation provided by the network exposure function network element is merely an example. The master participant may alternatively send the first registration request message by invoking another service function or service operation provided by the network exposure function network element, or send the first registration request message in another manner. This is not specifically limited in embodiments of this application.

It may be understood that, when the network exposure function network element performs verification and authorization on the first registration request message of the master participant, and the authorization succeeds, the network exposure function network element can provide the VFLSF network element with information included in the first registration request message (that is, step S702).

In addition, that step S701 is performed by the master participant is merely an example. As shown in the related descriptions in step S601 in FIG. 6A, participants in vertical federated learning in embodiments of this application may not be distinguished as a master participant and a slave participant, that is, there is no need to distinguish between the master participant and the slave participant, provide that step S701 is performed by an untrusted network element. In addition, as shown in the related descriptions in step S605 in FIG. 6A, when participants are distinguished as a master participant and a slave participant, an initiator of vertical federated learning may also be the slave participant, that is, step S701 may also be performed by the slave participant. This is uniformly described herein, and details are not described below.

S702: The network exposure function network element sends a second registration request message to the VFLSF network element. Correspondingly, the VFLSF network element receives the second registration request message from the network exposure function network element.

It may be understood that the second registration request message may include the information included in the first registration request message.

For example, the network exposure function network element may send the second registration request message by invoking a second service operation provided by the VFLSF network element. If the VFLSF network element is the VFLSF network element in FIG. 5, the second service operation may be a service operation (for example, Nvflsf Management Register Request) that is provided by the VFLSF network element and that is related to vertical federated learning registration. If the VFLSF network element is the network repository function network element in FIG. 5, the second service operation may be a network function management service operation (for example, Nnrf_NFManagement NFRegister Request) provided by the network repository function network element.

In addition, the second service operation may be different from the first service operation in step S701. To be specific, the master participant sends the first registration request message to the network exposure function network element, and the network exposure function network element sends the second registration request message to the VFLSF network element. Service operations used by the two operations are different.

It should be understood that, that the network exposure function network element sends the second registration request message by invoking the second service operation provided by the VFLSF network element is merely an example. The network exposure function network element may alternatively send the second registration request message by invoking another service function or service operation provided by the VFLSF network element, or send the second registration request message in another manner. This is not specifically limited in embodiments of this application.

S703: The VFLSF network element sends a second registration response message to the network exposure function network element. Correspondingly, the network exposure function network element receives the second registration response message from the VFLSF network element.

It may be understood that the second registration response message indicates whether the registration succeeds.

In addition, the VFLSF network element may send the second registration response message by invoking a third service operation. For example, if the VFLSF network element is the VFLSF network element in FIG. 5, the third service operation may be a service operation (for example, Nvflsf Management Register Response) that is provided by the VFLSF network element and that is related to vertical federated learning registration. For another example, if the VFLSF network element is the network repository function network element, the third service operation may be a network function management service operation (for example, Nnrf_NFManagement NFRegister Response) provided by the network repository function network element.

S704: The network exposure function network element sends a first registration response message to the master participant. Correspondingly, the master participant receives the first registration response message from the network exposure function network element.

It may be understood that information included in the first registration response message may include information included in the second registration response message.

In addition, the network exposure function network element may send the first registration response message by invoking a fourth service operation. For example, the fourth service operation may be a vertical federated learning registration response service operation provided by the network exposure function network element.

S707: The master participant sends a first discovery request message to the network exposure function network element. Correspondingly, the network exposure function network element receives the first discovery request message from the master participant.

It may be understood that, for the first discovery request message, refer to the discovery request message in step S603 in FIG. 6A. Details are not described herein again.

In addition, the master participant may send the first discovery request message by invoking a related service operation provided by the network exposure function network element. For example, the master participant may send the first discovery request message by invoking a vertical federated learning participant discovery request (Nnef VFL ParticipantDiscovery Request) service operation provided by the network exposure function.

It may be understood that, when the network exposure function network element performs verification and authorization on the first discovery request message sent by the master participant, and the authorization succeeds, the network exposure function network element can provide the VFLSF network element with information included in the first discovery request message (that is, step S708).

S708: The network exposure function network element sends a second discovery request message to the VFLSF network element. Correspondingly, the VFLSF network element receives the second discovery request message from the network exposure function network element.

It may be understood that the second discovery request message may include the information included in the first discovery request message.

For example, if the VFLSF network element is the VFLSF network element in FIG. 5, the network exposure function network element may send the second discovery request message by invoking a vertical federated learning participant discovery request (Nvflsf VFL ParticipantDiscovery Request) service operation provided by the VFLSF network element. If the VFLSF network element is the network repository function network element in FIG. 5, the network exposure function network element may send the second discovery request message by invoking a network function discovery request (Nnrf NFDiscovery Request) service operation provided by the network repository function network element.

S709: The VFLSF network element sends a second discovery response message to the network exposure function network element. Correspondingly, the network exposure function network element receives the second discovery response message from the VFLSF network element.

It may be understood that, for details of the second discovery response message, refer to the discovery response message in step S604 in FIG. 6A. Details are not described herein again.

S710: The network exposure function network element sends a first discovery response message to the master participant. Correspondingly, the master participant receives the first discovery response message from the network exposure function network element.

In a possible implementation, the first discovery response message includes information included in the second discovery response message. In other words, the first discovery response message may include an identifier or an address of at least one VFL server included in the discovery response message in step S604.

In another possible implementation, the first discovery response message includes a first identifier or a first address allocated (or configured or provided) by the network exposure function network element to at least one VFL server indicated by the second discovery response message, the first identifier of each of the at least one VFL server is different from an identifier of each VFL server, and the first address of each VFL server is different from an address of each VFL server. In other words, the network exposure function network element may allocate the first identifier or the first address to each of the at least one VFL server indicated by the second discovery response message, to avoid exposing a real identifier or a real address of the VFL server, thereby improving security.

For example, it is assumed that the at least one VFL server indicated by the second discovery response message includes VFL server 1, VFL server 2, and VFL server 3. An identifier of VFL server 1 is identifier A, an identifier of VFL server 2 is identifier B, and an identifier of VFL server 3 is identifier C. Based on the foregoing conditions, a first identifier allocated by the network exposure function network element to VFL server 1 is identifier #1, a first identifier allocated by the network exposure function network element to VFL server 2 is identifier #2, and a first identifier allocated by the network exposure function network element to VFL server 3 is identifier #3. Therefore, the first discovery response message includes identifier #1, identifier #2, and identifier #3. Therefore, the master participant obtains the first identifier of the VFL server rather than the real identifier of the VFL server, to avoid exposing the real identifier of the VFL server.

In addition, a principle of allocating the first address by the network exposure function network element to the at least one VFL server is similar to the foregoing example of allocating the first identifier, and details are not described herein again.

It may be understood that the network exposure function network element may store or maintain a correspondence between an identifier of a VFL server and a first identifier of the VFL server, and/or a correspondence between an address of a VFL server and a first address of the VFL server. In this way, the network exposure function network element can determine a real identifier of the VFL server based on the correspondence and the first identifier of the VFL server, and/or determine a real address of the VFL server based on the correspondence and the first address of the VFL server.

It may be understood that the foregoing description of the first identifier is merely an example. The network exposure function network element may alternatively allocate the first identifier in another manner. This is not specifically limited in embodiments of this application.

S711: The master participant sends a first vertical federated learning initiation request message to the network exposure function network element. Correspondingly, the network exposure function network element receives the first vertical federated learning initiation request message from the master participant.

It may be understood that, for the first vertical federated learning initiation request message, refer to the vertical federated learning initiation request message in step S605 in FIG. 6A. Details are not described herein again.

In addition, as shown in the related descriptions in step S605, the master participant may determine one VFL server from the at least one VFL server. Therefore, the first vertical federated learning initiation request message in step S711 may include an identifier and/or an address of the VFL server. In this way, the network exposure function network element can determine, based on the identifier and/or the address of the VFL server, a specific VFL server in the at least one VFL server to which information included in the first vertical federated learning initiation request message is sent.

It may be understood that, when the first discovery response message in step S710 includes the first identifier and/or the first address of each of the at least one VFL server, the first vertical federated learning initiation request message includes the first identifier and/or the first address of the VFL server determined by the master participant from the at least one VFL server.

It should be understood that the VFL server indicated by the first vertical federated learning initiation request message in step S711 corresponds to the master participant, that is, the VFL server is a VFL server corresponding to a vertical federated learning process initiated by the master participant. Because the network exposure function network element may provide a service for an initiator of another vertical federated learning process other than the master participant, to distinguish between the VFL server corresponding to the master participant and a VFL server corresponding to the another initiator, the network exposure function network element may maintain VFL servers corresponding to different initiators. In other words, the network exposure function network element may maintain a correspondence between the master participant and a VFL server selected by the master participant, to determine, based on the correspondence, a specific VFL server in a plurality of VFL servers to which a message of the master participant is sent and a specific initiator in a plurality of initiators to which a message of the VFL server is sent.

In a possible implementation, the first vertical federated learning initiation request message further includes a correlation identifier (correlation ID), and the correlation identifier is correlated with a vertical federated learning process between the master participant and the VFL server. It may be understood that the master participant may concurrently perform a plurality of different vertical federated learning processes, and the plurality of different vertical federated learning processes may be distinguished by using correlation identifiers. For example, the vertical federated learning process is a sample alignment process. It is assumed that the master participant and slave participant 1 perform sample alignment process #1, and the master participant and slave participant 2 perform sample alignment process #2. The two sample alignment processes are different. For example, common samples determined in the two sample alignment processes are used for training two different vertical federated learning models. For another example, sample alignment algorithms and/or datasets used for vertical federated learning model training in the two sample alignment processes are different. In addition, the vertical federated learning process may alternatively be a vertical federated learning model training process or a vertical federated learning inference process. The master participant may concurrently perform a plurality of different vertical federated learning model training processes, vertical federated learning inference processes, or the like with different slave participants.

Further, the plurality of different vertical federated learning processes concurrently performed by the master participant may correspond to a same VFL server. Therefore, the correlation identifier is added to a message exchanged between the master participant, the VFL server, and the slave participant through the network exposure function network element, so that the master participant, the VFL server, the slave participant, or the network exposure function network element can distinguish between the plurality of different vertical federated learning processes that are concurrently performed. For example, the network exposure function network element may determine, based on the correlation identifier, a specific vertical federated learning process of the master participant to which the first vertical federated learning initiation request message belongs, and when sending the information included in the first vertical federated learning initiation request message to a VFL server corresponding to the vertical federated learning process of the master participant, the network exposure function network element may also send the correlation identifier. In this way, the VFL server can determine, based on the correlation identifier, a specific vertical federated learning process to which the received message is related.

It may be understood that the correlation identifier is allocated (or generated) by the master participant. In another implementation, the correlation identifier may alternatively be allocated by the network exposure function network element. For details, refer to step S712.

It should be understood that the foregoing examples of the vertical federated learning process are merely limited examples. The vertical federated learning process may further include a vertical federated learning inference process, a sample alignment process, and the like. This is not specifically limited in embodiments of this application.

S712: The network exposure function network element sends a second vertical federated learning initiation request message to the VFL server. Correspondingly, the VFL server receives the second vertical federated learning initiation request message from the network exposure function network element.

It may be understood that the VFL server may be the VFL server in step S605, and the second vertical federated learning initiation request message includes the information included in the first vertical federated learning initiation request message.

In a possible implementation, the second vertical federated learning initiation request message may include a second identifier and/or a second address allocated by the network exposure function network element to the master participant. It may be understood that, similar to step S710 in which the network exposure function network element allocates the first identifier and/or the first address to the at least one VFL server, the network exposure function network element may also allocate the second identifier and/or the second address to the master participant, to avoid exposing a real identifier and a real address of the master participant.

In addition, in the following steps, when the network exposure function network element sends a message of the master participant to another network element, the network exposure function network element may add the second identifier and/or the second address of the master participant to the message. This is uniformly described herein, and details are not described below.

It may be understood that, when the first vertical federated learning initiation request message includes no correlation identifier (that is, no correlation identifier is allocated to the master participant), the network exposure function network element may allocate the correlation identifier, and add the correlation identifier to the second vertical federated learning initiation request message. For example, the network exposure function network element may determine, based on the information included in the first vertical federated learning initiation request message, vertical federated learning process #1 of the master participant corresponding to the first vertical federated learning initiation request message, and allocate a correlation identifier to vertical federated learning process #1. In addition, the network exposure function network element may determine, based on the first vertical federated learning initiation request message, the VFL server selected by the master participant, and add the correlation identifier to the second vertical federated learning initiation request message sent to the VFL server. In this way, the VFL server can determine, based on the correlation identifier, that the second vertical federated learning initiation request message belongs to vertical federated learning process #1. In addition, after allocating the correlation identifier, the network exposure function network element may send the correlation identifier to each participant (for example, the master participant, the VFL server, or the at least one candidate slave participant) in the vertical federated learning process corresponding to the correlation identifier, so that each participant in the vertical federated learning process can determine, based on the correlation identifier, a specific vertical federated learning process to which the sent or received message belongs. For example, for the VFL server, the network exposure function network element may send the correlation identifier to the VFL server by using the second vertical federated learning initiation request message, so that the VFL server can determine that the second vertical federated learning initiation request message is a request message of the vertical federated learning process of the master participant. In addition, the VFL server performs steps S713 and S714 (that is, the VFL server obtains information about the at least one candidate slave participant) based on the second vertical federated initiation request message, so that the VFL server can be triggered to send a second vertical federated learning request message to the network exposure function network element (that is, step S716). In this way, when the network exposure function network element receives the second vertical federated learning request message from the VFL server, to trigger a third vertical federated learning request message to be sent to the master participant (that is, step S717), the correlation identifier may be sent to the master participant by using the third vertical federated learning request message.

For another example, in a subsequent sample alignment negotiation process, the network exposure function network element may send the correlation identifier to the at least one candidate slave participant by using a second sample alignment request message in step S719.

S716: The VFL server sends the second vertical federated learning request message to the network exposure function network element. Correspondingly, the network exposure function network element receives the second vertical federated learning request message from the VFL server.

It may be understood that, for the second vertical federated learning request message, refer to the second vertical federated learning request message in step S609 in FIG. 6A. Details are not described herein again.

In addition, based on the related descriptions of the correlation identifier in step S711 and step S712, the second vertical federated learning request message may further include the correlation identifier corresponding to the vertical federated learning process between the master participant, the VFL server, and the at least one candidate slave participant indicated by the second vertical federated learning request message, so that the network exposure function network element determines that the second vertical federated learning request message belongs to the vertical federated learning process corresponding to the correlation identifier.

It may be understood that, on the basis that the network exposure function network element maintains the correspondence between the master participant and the VFL server in step S711, the network exposure function network element may further maintain a correspondence between the master participant, the VFL server, and the at least one candidate slave participant indicated by the second vertical federated learning request message, so that when the master participant (the untrusted application function network element) interacts with the at least one candidate slave participant (for example, the network data analytics function network element) through the network exposure function network element in the vertical federated learning process, the network exposure function network element can determine, based on the correspondence, a specific network data analytics function network element to which a message of the master participant is sent and a specific application function network element to which a message of the network data analytics function network element is sent.

S717: The network exposure function network element sends a third vertical federated learning request message to the master participant. Correspondingly, the master participant receives the third vertical federated learning request message from the network exposure function network element.

In a possible implementation, the third vertical federated learning request message includes a third identifier and/or a third address allocated by the network exposure function network element to the at least one candidate slave participant. It may be understood that, similar to step S710 in which the network exposure function network element allocates the first identifier and/or the first address to the at least one VFL server, the third identifier and/or the third address allocated by the network exposure function network element can be used to avoid exposing a real identifier and a real address of the at least one candidate slave participant, thereby improving security.

For example, it is assumed that the at least one candidate slave participant includes network data analytics function network element 1 and network data analytics function network element 2, a second identifier allocated by the network exposure function network element to the master participant is ID #1, a third identifier allocated by the network exposure function network element to network data analytics function network element 1 is ID #2, and a third identifier allocated by the network exposure function network element to network data analytics function network element 2 is ID #3. When the master participant sends a message (for example, a first sample alignment request message in step S718) to network data analytics function network element 1 through the network exposure function network element, the network exposure function network element carries ID #1 when sending the message to network data analytics function network element 1. In this way, network data analytics function network element 1 determines, based on ID #1, a specific participant that sends the message. When network data analytics function network element 2 sends a message to the master participant through the network exposure function network element, the network exposure function network element carries ID #3 when sending the message to the master participant. In this way, the master participant determines, based on ID #3, that the message is sent by network data analytics function network element 2.

It may be understood that, based on the descriptions of the correlation identifier in steps S711, S712, and step S716, the third vertical federated learning request message may further include the correlation identifier in step S716, so that a plurality of different vertical federated learning processes concurrently performed by the master participant can be distinguished. For details, refer to the related descriptions in step S711. Details are not described herein again.

In addition, in the following steps involving interaction between the master participant and the at least one candidate slave participant (for example, steps in the sample alignment negotiation process), a message exchanged between the master participant and the at least one candidate slave participant (including a target slave participant) may carry the correlation identifier, the third identifier and/or the third address, or the like in step S716. This is uniformly described herein, and details are not described below.

The following describes the sample alignment negotiation process. The sample alignment negotiation process includes steps S718 to S724.

S718: The master participant sends a first sample alignment request message to the network exposure function network element. Correspondingly, the network exposure function network element receives the first sample alignment request message from the master participant.

It may be understood that, for details of the first sample alignment request message, refer to the sample alignment request message in step S610 in FIG. 6B. Details are not described herein again.

In addition, the first sample alignment request message may further include the correlation identifier in step S717, so that the network exposure function network element determines a specific vertical federated learning process of the master participant to which the first sample alignment request message belongs.

Moreover, the first sample alignment request message may further include the third identifier and/or the third address of each of the at least one candidate slave participant in step S717, so that the network exposure function network element determines specific network function network elements (for example, the network data analytics function network element) in a plurality of network function network elements in the network to which information included in the first sample alignment request message is sent.

S719: The network exposure function network element sends a second sample alignment request message to the at least one candidate slave participant. Correspondingly, the at least one candidate slave participant receives the second sample alignment request message from the network exposure function network element.

It may be understood that the second sample alignment request message includes the information included in the first sample alignment request message.

In addition, the second sample alignment request message may include the second identifier and/or the second address of the master participant, so that the at least one candidate slave participant determines that the second sample alignment request message is requested by the master participant.

Moreover, considering that at least some candidate slave participants in the at least one candidate slave participant may alternatively concurrently participate in a plurality of different vertical federated learning processes, the second sample alignment request message may further include the correlation identifier in step S718, so that the at least one candidate slave participant can determine, by using the correlation identifier, the plurality of different vertical federated learning processes that the candidate slave participant participates in concurrently.

S720: The at least one candidate slave participant sends a second sample alignment response message to the network exposure function network element. Correspondingly, the network exposure function network element receives the second sample alignment response message from the at least one candidate slave participant.

It may be understood that, for details of the second sample alignment response message, refer to the sample alignment response message in step S611 in FIG. 6B. Details are not described herein again.

In addition, the second sample alignment response message may further include the correlation identifier in step S719, so that the network exposure function network element determines a specific vertical federated learning process to which the second sample alignment response message belongs.

S721: The network exposure function network element sends a first sample alignment response message to the master participant. Correspondingly, the master participant receives the first sample alignment response message from the network exposure function network element.

It may be understood that the first sample alignment response message includes information included in the second sample alignment response message.

In addition, the first sample alignment response message may include the third identifier and/or the third address of the at least one candidate slave participant, so that the master participant determines a specific candidate slave participant that replies with the first sample alignment response message.

Moreover, the first sample alignment response message may further include the correlation identifier in step S720, so that the master participant determines a specific vertical federated learning process to which the first sample alignment response message belongs.

S722: The master participant sends a first sample alignment negotiation result message to the network exposure function network element. Correspondingly, the network exposure function network element receives the first sample alignment negotiation result message from the master participant.

It may be understood that, for details of the first sample alignment negotiation result message, refer to the first sample alignment negotiation result message in step S612 in FIG. 6B. Details are not described herein again.

In addition, the first sample alignment negotiation result message may further include the correlation identifier in step S721, the third identifier and/or the third address of the target slave participant, or the like. This is not specifically limited in embodiments of this application.

S723: The network exposure function network element sends a second sample alignment negotiation result message to the target slave participant. Correspondingly, the target slave participant receives the second sample alignment negotiation result message from the network exposure function network element.

It may be understood that the second sample alignment negotiation result message includes information included in the first sample alignment negotiation result message.

In addition, the second sample alignment negotiation result message may further include the second identifier and/or the second address of the master participant, the correlation identifier in step S722, or the like. This is not specifically limited in embodiments of this application.

Optionally, the information transmission method process shown in FIG. 7A and FIG. 7B may further include steps S724 and S725.

S724: The master participant sends a third sample alignment negotiation result message to the network exposure function network element. Correspondingly, the network exposure function network element receives the third sample alignment negotiation result message from the master participant.

It may be understood that, for details of the third sample alignment negotiation result message, refer to the second sample alignment negotiation result message in step S613 in FIG. 6B. Details are not described herein again.

In addition, the third sample alignment negotiation result message may further include the third identifier and/or the third address of the slave participant other than the target slave participant in the at least one candidate slave participant, the correlation identifier, or the like. This is not specifically limited in embodiments of this application.

S725: The network exposure function network element sends a fourth sample alignment negotiation result message to the slave participant other than the target slave participant in the plurality of slave participants supporting performing sample alignment. Correspondingly, the slave participant other than the target slave participant in the plurality of slave participants supporting performing sample alignment receives the fourth sample alignment negotiation result message from the network exposure function network element.

It may be understood that the fourth sample alignment negotiation result message includes information included in the third sample alignment negotiation result message.

In addition, the fourth sample alignment negotiation result message may further include the second identifier and/or the second address of the master participant, the correlation identifier, or the like. This is not specifically limited in embodiments of this application.

S726: The master participant, the network exposure function network element, and the target slave participant perform a sample alignment process.

It may be understood that step S726 is similar to step S614, and a difference between the two lies in that: because the master participant is the untrusted application function network element, and the target slave participant is the network data analytics function network element, information exchange in the sample alignment process performed between the master participant and the target slave participant is forwarded and coordinated by the network exposure function network element. In other words, the network exposure function network element is responsible for maintaining a correspondence between the master participant and one or more target slave participants, or distinguishing between vertical federated learning processes. For details, refer to the related descriptions in step S716. Details are not described herein again.

In addition, the messages exchanged between the master participant, the network exposure function network element, and the target slave participant may carry the correlation identifier, the second identifier, the third identifier, the second address, the third address, or the like in the foregoing steps. This is not specifically limited in embodiments of this application.

S727: The participant sends a vertical federated learning response message to the VFL server. Correspondingly, the VFL server receives the vertical federated learning response message from the participant.

It may be understood that step S727 is similar to step S615 in FIG. 6B. When the participant includes a master participant and a target slave participant, step S727 may include:

S727a: The target slave participant sends a first vertical federated learning response message to the VFL server. Correspondingly, the VFL server receives the first vertical federated learning response message from the target slave participant.

It may be understood that, for a specific implementation of step S727a, refer to step S615a. Details are not described herein again.

S727b: The master participant sends a second vertical federated learning response message to the network exposure function network element. Correspondingly, the network exposure function network element receives the second vertical federated learning response message from the master participant.

It may be understood that, for the second vertical federated learning response message, refer to the second vertical federated learning response message in step S615b in FIG. 6B. Details are not described herein again.

In addition, the second vertical federated learning response message may further include the first identifier and/or the first address of the VFL server, the correlation identifier, or the like. This is not specifically limited in embodiments of this application.

S727c: The network exposure function network element sends a third vertical federated learning response message to the VFL server. Correspondingly, the VFL server receives the third vertical federated learning response message from the network exposure function network element.

It may be understood that the third vertical federated learning response message includes information included in the second vertical federated learning response message.

In addition, the third vertical federated learning response message may include the second identifier and/or the second address of the master participant, the correlation identifier, or the like. This is not specifically limited in embodiments of this application.

In the information transmission method process shown in FIG. 7A and FIG. 7B in embodiments of this application, each participant may register a sample alignment capability with the VFLSF network element. The master participant may discover a coordinator VFL server in vertical federated learning through the VFLSF network element, send a discovery request message through the VFL server, and obtain at least one candidate slave participant and a sample alignment capability (for example, a sample alignment algorithm) of the at least one candidate slave participant. In this way, the master participant can perform sample alignment negotiation with the at least one candidate slave participant based on a first common sample alignment algorithm jointly supported by the master participant and the at least one candidate slave participant, to improve a success rate and efficiency of sample alignment negotiation. In addition, through sample alignment negotiation, the master participant may determine, based on a response of the at least one candidate slave participant, a target slave participant whose local computing power can support execution of sample alignment and a target sample alignment algorithm, to avoid a problem that sample alignment fails because a computing power requirement of the sample alignment algorithm is not met in a sample alignment process, and improve a success rate and efficiency of sample alignment. Further, the master participant may be an untrusted network element, and the network exposure function network element may provide functions such as coordination, identifier allocation, and trusted interaction for interaction between the master participant and a network element in another trusted domain, so as to better implement interaction between the master participant, the at least one candidate slave participant, the VFL server, and the VFLSF network element.

It may be understood that, as shown in the descriptions in FIG. 5 about the VFLSF network element, the VFLSF network element may be the network exposure function network element, or the network exposure function network element has a function of the VFLSF network element. In this way, the master participant (that is, the untrusted application function network element) in FIG. 7A and FIG. 7B may directly interact with the VFLSF network element. For example, for steps S701 to S704, the master participant may directly send the first registration request message to the VFLSF network element, and receive the first registration response message from the VFLSF network element. For steps S707 to S710, the master participant may directly send the first discovery request message to the VFLSF network element, and receive the first discovery response message from the VFLSF network element, and the VFLSF network element may allocate the first identifier and/or the first address to each of the at least one VFL server. For details, refer to step S710. Details are not described herein again.

In addition, for steps S711 to S712 and subsequent steps S716 to S728, the VFLSF network element replaces the network exposure function network element. To be specific, the VFLSF network element maintains the correspondence between the master participant, the VFL server, and the at least one candidate slave participant, and the correlation identifier corresponding to the vertical federated learning process between the master participant, the VFL server, and the at least one candidate slave participant, allocates the second identifier and/or the second address to the master participant, and allocates the third identifier and/or the third address to the at least one candidate slave participant. For details, refer to the related descriptions in FIG. 7A and FIG. 7B. Details are not described herein again.

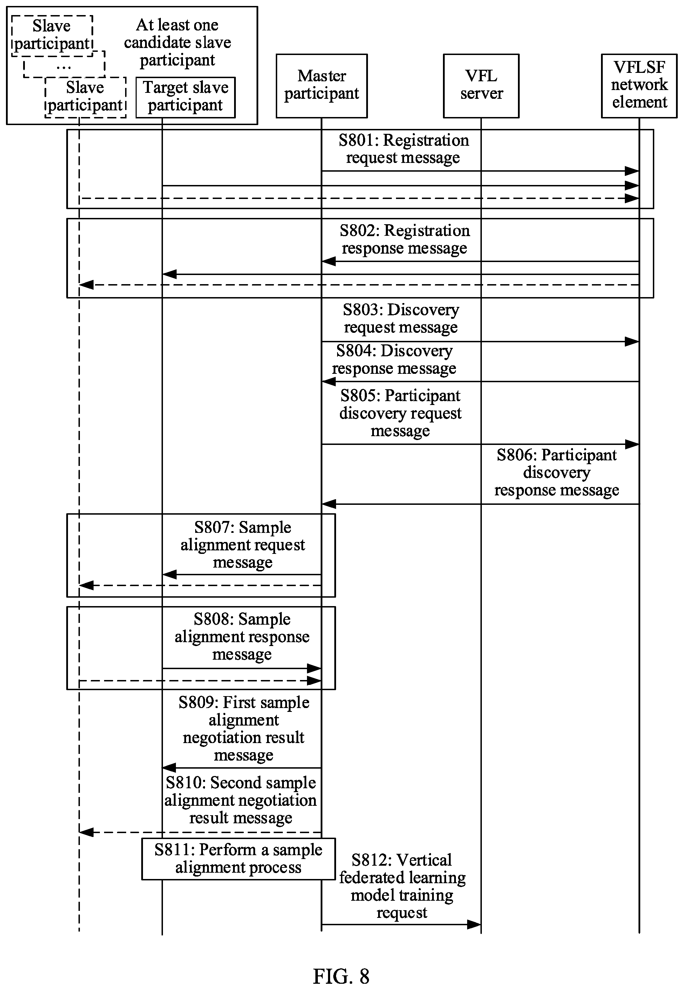

It should be understood that, in the foregoing processes of the information transmission method shown in FIG. 6A and FIG. 6B and FIG. 7A and FIG. 7B, the master participant may also replace the VFL server to be responsible for coordination, that is, discover the candidate slave participant. The following provides description with reference to a process of an information transmission method shown in FIG. 8.

FIG. 8 is a schematic flowchart 3 of an information transmission method according to an embodiment of this application. As shown in FIG. 8, the information transmission method process includes steps S801 to S812. Steps S801 to S804 are the same as steps S601 to S604, steps S807 to S810 are the same as steps S610 to S613, and step S811 is the same as step S614. Details are not described again.

It should be understood that the foregoing steps S803, S804, and S812 are optional steps, that is, the VFL server may not participate in a sample alignment process and a vertical federated learning model training process.

The following separately describes steps S805, S806, and S812.

S805: The master participant sends a participant discovery request message to the VFLSF network element. Correspondingly, the VFLSF network element receives the participant discovery request message from the master participant. The participant discovery request message is used to request to discover a participant. The participant discovery request message may include: a vertical federated learning group identifier, a vertical federated learning model type identifier, a slave participant requirement, a second vertical federated learning capability type indication, and a sample alignment requirement. For details, refer to step S606 in FIG. 6A. Details are not described herein again.

It may be understood that, when the master participant is an untrusted application function network element, and the VFLSF network element is the VFLSF network element or the network repository function network element in FIG. 5, the master participant sends the participant discovery request message to the VFLSF network element in a similar process to the information transmission process shown in FIG. 7A and FIG. 7B. The master participant may send the participant discovery request message to the VFLSF network element through a network exposure function network element. For example, the master participant sends a first participant discovery request message to the network exposure function network element, and the network exposure function network element performs verification and authorization on a request of the master participant. If the authorization succeeds, the network exposure function network element sends a second participant discovery request message to the VFLSF network element, where the second participant discovery request message includes content included in the first participant discovery request message.

In addition, similar to step S707 in FIG. 7A, the master participant may send the first participant discovery request message by invoking an Nnef VFL ParticipantDiscovery Request service operation of the network exposure function network element, and the network exposure function network element may send the second participant discovery request message by invoking an Nnrf NFDiscovery Request service operation of the network repository function network element.

It may be further understood that, when the master participant is an untrusted application function network element and the VFLSF network element is a network exposure function network element, the master participant may perform step S805, that is, directly send the participant discovery request message to the VFLSF network element.

S806: The VFLSF network element sends a participant discovery response message to the master participant. Correspondingly, the master participant receives the participant discovery response message from the VFLSF network element. The participant discovery response message includes information about at least one candidate slave participant. The information about the at least one candidate slave participant may include an identifier or an address of the at least one candidate slave participant. The identifier or the address of the at least one candidate slave participant may be used by the master participant to communicate with the at least one candidate slave participant.

It may be understood that, for the participant discovery response message in step S806, refer to step S607 in FIG. 6A. Details are not described herein again.

It should be understood that, when the master participant is an untrusted application function network element, and the VFLSF network element is the VFLSF network element or the network repository function network element in FIG. 5, the VFLSF network element sends the participant discovery response message to the master participant in a similar process to the information transmission process shown in FIG. 7A and FIG. 7B. The VFLSF network element may send the participant discovery response message to the master participant through a network exposure function network element. For example, the VFLSF network element sends a second participant discovery response message to the network exposure function network element, and the network exposure function network element sends a first participant discovery response message to the master participant, where the first participant discovery response message includes information included in the second participant discovery response message.

It may be understood that, similar to the network exposure network element in FIG. 7A and FIG. 7B, the network exposure function network element maintains a correspondence between the master participant and the at least one candidate slave participant, so that when the master participant (the untrusted application function network element) interacts with the at least one candidate slave participant (for example, the network data analytics function network element) through the network exposure function network element in the vertical federated learning process (for example, the sample alignment process, the vertical federated learning model training process, or the vertical federated learning inference process), the network exposure function network element can determine, based on the correspondence, a specific network data analytics function network element to which a message of the master participant is sent and a specific application function network element to which a message of the network data analytics function network element is sent.

In addition, the network exposure function network element may allocate a correlation identifier to the vertical federated learning process between the master participant and the at least one candidate slave participant, to distinguish between a plurality of vertical federated learning processes concurrently performed by the master participant. For details, refer to step S711 and step S712. Details are not described herein again.

Moreover, the network exposure function network element may also allocate a second identifier and/or a second address to the master participant, and allocate a first identifier and/or a first address to the at least one slave participant, to avoid exposing a real identifier and a real address of the master participant, and avoid exposing a real identifier and a real address of the at least one candidate slave participant. For details, refer to the related descriptions in step S712 and step S717. Details are not described herein again.

It should be understood that, in the following steps involving interaction between the master participant and the at least one candidate slave participant, a message exchanged between the master participant and the at least one candidate slave participant (including a target slave participant) may carry the correlation identifier corresponding to the vertical federated learning process between the master participant and the at least one candidate slave participant, the third identifier and/or the third address, or the like. This is uniformly described herein, and details are not described below.

S812: The master participant sends a vertical federated learning model training request message to the VFL server. Correspondingly, the VFL server receives the vertical federated learning model training request message from the master participant. The vertical federated learning model training request message indicates a target participant joining vertical federated learning. It may be understood that the target participant joining vertical federated learning may be a participant joining vertical federated learning model training. After completing the sample alignment process (that is, step S811), each target participant may determine a common sample, and may perform the vertical federated learning model training process. In the vertical federated learning model training process, the VFL server may be responsible for decrypting and transferring an intermediate result between participants. For details, refer to FIG. 3. Details are not described herein again.

In addition, the master participant may determine, based on the sample alignment result obtained by performing the sample alignment process in step S811, the target participant participating in vertical federated learning. For details, refer to step S615b. Details are not described herein again.

According to the information transmission method process shown in FIG. 8 in embodiments of this application, each participant may register the sample alignment capability with the VFLSF network element. Therefore, when the master participant initiates vertical federated learning, the master participant may discover, through the VFLSF network element, at least one candidate slave participant that meets the sample alignment requirement, and obtains the sample alignment capability (for example, the sample alignment algorithm) of the at least one candidate slave participant. In this way, the master participant can perform sample alignment negotiation with the at least one candidate slave participant based on the first common sample alignment algorithm jointly supported by the master participant and the at least one candidate slave participant, thereby improving a success rate and efficiency of sample alignment negotiation. Further, through sample alignment negotiation, the master participant may determine, based on the response of the at least one candidate slave participant, the target slave participant whose local computing power can support execution of sample alignment and the target sample alignment algorithm, so as to avoid a problem that the sample alignment fails because the computing power requirement of the sample alignment algorithm is not met in a sample alignment process, and improve a success rate and efficiency of sample alignment.

It should be understood that, in the information transmission method process shown in FIG. 8, the master participant is the initiator of vertical federated learning. In another implementation, the slave participant may alternatively initiate vertical federated learning, the slave participant is responsible for discovering the master participant, and then the master participant is responsible for discovering the at least one candidate slave participant. For example, the slave participant may discover the master participant through the VFLSF network element, and then notify the master participant to discover the at least one candidate slave participant (that is, the master participant performs steps S805 and S806), and then the master participant may perform steps S808 to S812 in FIG. 8.

In still another implementation, the slave participant may alternatively initiate vertical federated learning, and the slave participant is responsible for discovering the master participant and the at least one candidate slave participant. For example, the slave participant may discover the master participant and the at least one candidate slave participant through the VFLSF network element, and the parameter in the request message in step S805 further includes a parameter for discovering the master participant, that is, the request message in step S805 may include a corresponding parameter combination for discovering the master participant and discovering the slave participant. It may be understood that, when master and slave participants are not distinguished in vertical federated learning, step S805 includes a corresponding parameter for discovering a participant (for example, discovering a VFL client).

In addition, for the related descriptions in step S805 in which the master participant is an untrusted application function network element, and the VFLSF network element is the VFLSF network element or the network repository function network element in FIG. 5, the first participant discovery request message may be used to request to discover the master participant and the slave participant; or when master and slave participants are not distinguished, the first participant discovery request may be used to request to discover the participant (that is, the VFL client).

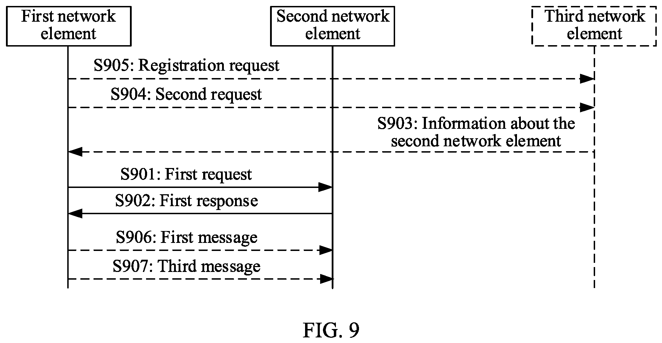

FIG. 9 is a schematic flowchart 4 of an information transmission method according to an embodiment of this application. The information transmission method is applicable to interaction between a first network element and a second network element. The first network element indicates at least one first sample alignment algorithm to the second network element by using a first request, to trigger the second network element to determine whether to support performing sample alignment by using the at least one first sample alignment algorithm, and feed back a first response to the first network element, so as to implement sample alignment algorithm negotiation, avoid a problem that sample alignment fails because a computing power requirement of the sample alignment algorithm is not met in a sample alignment process, and improve a success rate and efficiency of sample alignment.

As shown in FIG. 9, the information transmission method process includes the following steps.

S901: The first network element sends a first request to the second network element. Correspondingly, the second network element receives the first request from the first network element. The first request includes first information, and the first information indicates at least one first sample alignment algorithm supported by the first network element.

S902: The second network element sends a first response to the first network element. Correspondingly, the first network element receives the first response from the second network element.

The first response indicates that execution of sample alignment is supported, and/or a second sample alignment algorithm among the at least one first sample alignment algorithm, and the second sample alignment algorithm is used to determine a common sample between a dataset of the first network element for vertical federated learning model training and a dataset of the second network element for vertical federated learning model training; or the first response indicates that execution of sample alignment is not supported, and/or a reason why execution of sample alignment is not supported.

The following separately describes steps S901 and S902.

Step S901 is described as follows:
It may be understood that the first network element is a participant in vertical federated learning. For example, the first network element is a master participant in vertical federated learning model training, and the second network element is a candidate slave participant in vertical federated learning model training. For another example, the first network element is a slave participant in vertical federated learning model training, and the second network element is a candidate slave participant or a master participant in vertical federated learning model training. That is, in embodiments of this application, both the master participant and the slave participant may initiate a sample alignment negotiation process, that is, send the first request.

It should be understood that, without distinguishing between master and slave participants, both the first network element and the second network element are participants in vertical federated learning model training.

In addition, because the first network element is a participant in vertical federated learning model training, and the participant may be a network function network element, a terminal apparatus, or the like, the first network element may be a network function network element, a terminal apparatus, or an access network apparatus. For example, the first network element may be the network data analytics function network element, the application function network element, the access and mobility management function network element, the session management function network element, or the policy control function network element in FIG. 5. In addition, the second network element is similar to the first network element, and the second network element may be a network function network element, a terminal apparatus, or an access network apparatus.

It should be understood that the first network element may obtain an identifier and/or address information of the second network element in advance, so that the first network element sends the first request to the second network element. For example, the address information of the second network element may include an IP address of the second network element, or an FQDN or a URL of the second network element. In addition, the identifier or the address information of the second network element is merely an example. The identifier or the address information of the second network element may alternatively be other identifiers or address information used to communicate with the second network element. This is not specifically limited in embodiments of this application.

In addition, that the first network element obtains the identifier and/or the address information of the second network element in advance includes two implementations, which are separately described below.

In a possible implementation, the first network element may preconfigure the identifier or the address information of the second network element. For example, the first network element is an application function network element, the second network element is a network data analytics function network element or an access and mobility management function network element, and the first network element may preconfigure the identifier or address information of the second network element.

In another possible implementation, the information transmission method shown in FIG. 9 further includes the following step:

S903: The first network element receives information about the second network element from a third network element, where the information about the second network element includes an identifier of the second network element and/or address information of the second network element. In other words, the first network element may obtain the identifier of the second network element and/or the address information of the second network element by receiving the information about the second network element from the third network element, so that the first network element sends the first request to the second network element.

Optionally, the third network element may be a trusted coordinator. The trusted coordinator may be, for example, the VFL server in FIG. 6A and FIG. 6B. For a specific implementation of step S903, refer to step S608 or S609 in FIG. 6A. Details are not described herein again.

Alternatively, optionally, the third network element may be a network exposure function network element. The network exposure function network element may be the network exposure function network element in FIG. 7A and FIG. 7B, and the identifier of the second network element or the address information of the second network element may be an identifier and address information allocated by the network exposure function network element, to avoid exposing a real identifier and/or a real address of the second network element. For a specific implementation of step S903, refer to step S717 in FIG. 7B. Details are not described herein again.

It may be understood that, when the third network element is a network exposure function network element, the first network element may further receive a correlation identifier from the third network element. The correlation identifier may be correlated with a vertical federated learning process between the first network element and the second network element. In this way, when the first network element concurrently performs a plurality of vertical federated learning processes, the third network element can distinguish between the plurality of vertical federated learning processes by using the correlation identifier. Alternatively, the first network element may allocate (or generate) a correlation identifier corresponding to a vertical federated learning process between the first network element and the second network element. For details, refer to step S712 in FIG. 7A. This is not specifically limited in embodiments of this application.

In addition, the third network element may further maintain a correspondence between the first network element and the second network element. In this way, the third network element can send, based on the correspondence, information included in the first request to the second network element, and send information included in the first response to the first network element.

Alternatively, optionally, the third network element may be a VFLSF network element. The VFLSF network element may be, for example, the VFLSF network element in FIG. 8. For a specific implementation of step S903, refer to step S806 in FIG. 8. Details are not described herein again.

It should be understood that the third network element may alternatively be a network element other than the VFL server and the VFLSF network element, for example, the network repository function network element or the network exposure function network element in FIG. 5. This is not specifically limited in embodiments of this application.

It may be understood that the first network element may send the first request to the second network element when the first network element expects to perform sample alignment (for example, finds that training data cannot be collected due to privacy protection); or the first network element may send the first request to the second network element in response to a request of another network element (for example, the master participant responds to the second vertical federated learning request message of the VFL server in step S609). This is not specifically limited in embodiments of this application.

It should be understood that the first request may be used to request to perform sample alignment; or the first request is used to request to prepare to perform sample alignment; or the first request is used to request to negotiate a sample alignment manner. The sample alignment manner may include a sample alignment type, a sample alignment algorithm, a time period for sample alignment, or the like. This is not specifically limited in embodiments of this application.

It may be understood that the first request is used to initiate a sample negotiation process, and the at least one first sample alignment algorithm is used by the second network element to determine whether execution of sample alignment can be supported, to complete sample alignment negotiation (for example, negotiate a sample alignment type or algorithm, and a time period for performing sample alignment). For example, the at least one first sample alignment algorithm may be a sample alignment algorithm supported by the first network element. The first network element indicates the at least one first sample alignment algorithm to the second network element by using the first request, so that the second network element can determine whether an intersection exists between the at least one first sample alignment algorithm and at least one sample alignment algorithm supported by the second network element. If an intersection exists, the second network element feeds back one or more sample alignment algorithms in the intersection, that is, the second sample alignment algorithm in step S902. If no intersection exists, the second network element indicates that execution of sample alignment is not supported.

It may be further understood that, if an intersection exists, the second network element may further determine, based on a load status, whether a local resource matches a computing power requirement of a sample alignment algorithm in the intersection, to determine whether execution of sample alignment is supported, so as to avoid a sample alignment failure caused by a local resource failing to meet the computing power requirement of the sample alignment algorithm in a sample alignment process, and improve a success rate and efficiency of sample alignment.

It should be understood that, to further improve a success rate and efficiency of sample alignment, the second network element may be determined based on the sample alignment requirement corresponding to the first network element. In other words, the second network element may be a network element that meets the sample alignment requirement of the first network element.

The following describes an implementation in which the first network element obtains the second network element that meets the sample alignment requirement corresponding to the first network element.

In a possible implementation, the information transmission method shown in FIG. 9 further includes the following step:
S904: The first network element sends a second request to the third network element. Correspondingly, the third network element receives the second request from the first network element. The second request includes second information, and the second information indicates a sample alignment requirement.

Correspondingly, that the first network element receives the information about the second network element from the third network element (that is, step S903) includes: The first network element receives a second response from the third network element, where the second response includes the information about the second network element.

In other words, the second network element may be a network element whose sample alignment capability meets the sample alignment requirement corresponding to the first network element, so as to reduce a probability that the second network element does not support sample alignment, thereby improving a success rate and efficiency of sample alignment negotiation between the first network element and the second network element, and further improving a success rate and efficiency of sample alignment.

It may be understood that, when the third network element is the VFL server in FIG. 6A and FIG. 6B, the second request may be used to request to initiate a vertical federated learning process, or used to request to discover the second network element; or the second request indicates to select the second network element (that is, a master participant or a slave participant in vertical federated learning), or requests to select the second network element. For a specific implementation of step S904, refer to step S605 in FIG. 6A. Details are not described herein again.

Similarly, when the third network element is the network exposure function network element in FIG. 7A and FIG. 7B, for a specific implementation of step S904, refer to step S707 in FIG. 7A. Details are not described herein again.

In addition, the VFL server may obtain the information about the second network element from the VFLSF network element based on the second request, and send the information about the second network element to the first network element by using the second response.

When the third network element is the VFLSF network element in FIG. 8, for a specific implementation of step S904, refer to step S805 in FIG. 8. Details are not described herein again.

For example, when the first network element is a master participant (that is, the master participant is an initiator of vertical federated learning), the second response may be the second vertical federated learning request message in step S609 in FIG. 6A, which may carry information about at least one candidate slave participant (for example, an identifier and address information of the candidate slave participant, or a sample alignment capability of the candidate slave participant). The at least one candidate slave participant includes the second network element.

For another example, when the first network element is a slave participant (that is, the slave participant is an initiator of vertical federated learning), the second response may be a first vertical federated learning request message. A difference from the first vertical federated learning request message in step S609 in FIG. 6A lies in that the second response may carry information about a master participant (for example, an identifier and address information of the master participant, or a sample alignment capability of the master participant), and information about at least one candidate slave participant (for example, an identifier and address information of the candidate slave participant, or a sample alignment capability of the candidate slave participant). The second network element may be the master participant, or a candidate slave participant in the at least one candidate slave participant.

It may be understood that, when the third network element is the VFLSF network element in FIG. 8, for a specific implementation of step S904, refer to step S805 in FIG. 8, and for a specific implementation of step S903, refer to step S806 in FIG. 8. Details are not described herein again.

In a possible implementation, the sample alignment requirement includes at least one of the following: a third sample alignment type, a third sample alignment algorithm, or a third time period for sample alignment. In other words, the second network element that better meets the sample alignment requirement corresponding to the first network element may be selected by using one or more of the third sample alignment type, the third sample alignment algorithm, and the third time period for sample alignment that are included in the sample alignment requirement, so as to further reduce a probability that the second network element does not support performing sample alignment, thereby further improving a success rate and efficiency of sample alignment negotiation between the first network element and the second network element.

It may be understood that the sample alignment requirement may be the sample alignment requirement in step S606 in FIG. 6A, that is, a sample alignment capability that a network element requested by the first network element needs to support. For example, the third sample alignment type may be a sample alignment type that the requested network element needs to support. For example, the third sample alignment algorithm may be a sample alignment algorithm that the requested network element needs to support. For example, the third time period may be a time period in which the requested network element needs to support sample alignment, or a time period in which the first network element expects to perform sample alignment.

In addition, for related descriptions of the third sample alignment type, the third sample alignment algorithm, or the third time period, refer to the related descriptions of the sample alignment requirement in step S606. Details are not described herein again.

It may be understood that the second request may further include another requirement, for example, the vertical federated learning group identifier (VFL group ID) and the vertical federated learning model type identifier (mode type ID(s)) in step S605 in FIG. 6A. This is not specifically limited in embodiments of this application.

It should be understood that step S904 is merely a possible implementation. The first network element may alternatively determine the second network element and obtain the information about the second network element in another manner. For example, the first network element may alternatively obtain information (for example, a sample alignment capability) about a plurality of network elements from the VFLSF network element or the network repository function network element, and determine, from the plurality of network elements, the second network element that meets the sample alignment requirement corresponding to the first network element. This is not specifically limited in embodiments of this application.

In addition, the second request in step S904 may not include the second information, and the third network element may determine, based on the sample alignment capability of the first network element, the sample alignment requirement corresponding to the first network element. The third network element may preconfigure the sample alignment capability of the first network element, or the third network element may obtain the sample alignment capability of the first network element from another network element.

The following describes an implementation in which the third network element obtains the sample alignment capability of the first network element.

Optionally, the information transmission method shown in FIG. 9 further includes the following step:
S905: The first network element sends a registration request to the third network element. Correspondingly, the third network element receives the registration request from the first network element.

The registration request includes third information, and the third information indicates at least one of the following: a sample alignment type supported by the first network element, a sample alignment algorithm supported by the first network element, or a time period in which the first network element supports sample alignment. In other words, the first network element may register a sample alignment capability with the third network element, so that the third network element can obtain the sample alignment capability of the first network element, and select, based on the sample alignment capability of the first network element, the second network element that meets the sample alignment requirement corresponding to the first network element.

It may be understood that the second network element may also send a registration request to the third network element, so that the third network element obtains a sample alignment capability of the second network element, and the third network element can determine the second network element based on the second request sent by the first network element.

It may be further understood that, for a specific implementation of step S905, refer to step S601 in FIG. 6A. Details are not described herein again.

In addition, the third network element may alternatively be the network repository function network element, the network exposure function network element, or the like in FIG. 5. This is not specifically limited in embodiments of this application.

It should be understood that, when the first network element is an untrusted network element, and the third network element is a VFLSF network element or a network repository function network element, the first network element may interact with the third network element through the network exposure function network element. For a specific implementation of step S905, refer to steps S701 and S702 in FIG. 7A. Details are not described herein again.

It may be understood that, when the second network element registers the sample alignment capability with the third network element, the information about the second network element sent by the third network element to the first network element in step S903 may include the sample alignment capability of the second network element.

In a possible implementation, the information about the second network element further includes at least one of the following: a fourth sample alignment type, a fourth sample alignment algorithm, or a fourth time period in which sample alignment is supported. In other words, the first network element may further obtain the sample alignment capability of the second network element, so that the first network element determines a sample alignment algorithm, a time period, and the like that are jointly supported by the first network element and the second network element, thereby helping the first network element send the first request to the second network element based on the jointly supported sample alignment algorithm and/or the jointly supported time period, to more effectively perform sample alignment negotiation with the second network element.

It may be understood that the fourth sample alignment type includes all sample alignment types supported by the second network element, for example, two-party sample alignment and/or multi-party sample alignment. Alternatively, the fourth sample alignment type may be an intersection between the third sample alignment type included in the sample alignment requirement and all sample alignment types supported by the second network element. For example, assuming that the third sample alignment type is two-party sample alignment, and the second network element supports both two-party sample alignment and multi-party sample alignment, the fourth sample alignment type may be two-party sample alignment (that is, the intersection), or the fourth sample alignment type includes two-party sample alignment and multi-party sample alignment.

Similarly, the fourth sample alignment algorithm may include all the sample alignment algorithms supported by the second network element, or the fourth sample alignment algorithm may be the intersection between the third sample alignment algorithm and all the sample alignment algorithms supported by the second network element. For example, assuming that the third sample alignment algorithm includes [sample alignment algorithms 2 to 5], and all the sample alignment algorithms supported by the second network element include [sample alignment algorithm 2, sample alignment algorithm 4, sample alignment algorithm 6], the fourth sample alignment algorithm may include [sample alignment algorithm 2, sample alignment algorithm 4], or the fourth sample alignment algorithm may include [sample alignment algorithm 2, sample alignment algorithm 4, sample alignment algorithm 6].

Similarly, the fourth time period may include all time periods supported by the second network element, or the fourth time period may be an intersection between the third time period and all the time periods supported by the second network element. For example, assuming that the third time period includes time period 1 and time period 2, all the time periods supported by the second network element include time period 3 and time period 4, time period 1 is [9:00-11:00], time period 2 is [12:00-13:00], time period 3 is [10:00-14:00], and time period 5 is [17:00-19:00], the fourth time period may include [10:00-11:00] and time period 2, or the fourth time period may include time period 3 and time period 4.

It may be understood that, when the fourth sample alignment type is the intersection between the third sample alignment type included in the sample alignment requirement and all the sample alignment types supported by the second network element, or the fourth sample alignment algorithm may be the intersection between the third sample alignment algorithm and all the sample alignment algorithms supported by the second network element, or the fourth time period may be the intersection between the third time period and all the time periods supported by the second network element, the first network element may directly determine the first information carried in the first request based on the fourth sample alignment type, the fourth sample alignment algorithm, or the fourth time period, so as to reduce a calculation amount of the first network element.

In addition, when the fourth sample alignment type includes all the sample alignment types supported by the second network element, or the fourth sample alignment algorithm includes all the sample alignment algorithms supported by the second network element, or the fourth time period may include all the time periods supported by the second network element, a candidate selection range corresponding to the sample alignment algorithm, the sample alignment type, the time period, or the like indicated by the first request can be broadened for the first network element to select, so as to improve flexibility of adjusting the first information carried in the first request by the first network element, thereby increasing a probability that the second network element supports performing sample alignment, and further improving a success rate and efficiency of sample alignment negotiation.

In a possible implementation, the at least one first sample alignment algorithm is an algorithm jointly supported by the first network element and the second network element.

It may be understood that, for details of the at least one first sample alignment algorithm, refer to the first common sample alignment algorithm in step S610 in FIG. 6B. Details are not described herein again.

In other words, the first network element may indicate, to the second network element by using the first request, the at least one first sample alignment algorithm jointly supported by the first network element and the second network element, so as to reduce a probability that the second network element does not support performing sample alignment, thereby improving a success rate and efficiency of sample alignment negotiation.

In a possible implementation, the first information further indicates at least one of the following: a quantity of samples supported by the first network element for sample alignment, a first sample alignment type supported by the first network element, or at least one first time period in which the first network element supports sample alignment.

It may be understood that the quantity of samples supported by the first network element for sample alignment may be a quantity of samples of all samples in a dataset of the first network element for vertical federated learning model training, or a subset of the quantity of samples of all the samples in the dataset. The subset of the quantity of samples of all the samples may indicate that the first network element expects to use the quantity of samples corresponding to the subset to perform sample alignment.

In addition, the quantity of samples supported by the first network element for sample alignment may be used by the second network element to determine a computing power requirement of the sample alignment algorithm, so that the second network element can determine whether a local resource can support sample alignment performed by using the first sample alignment algorithm in a process of performing sample alignment, thereby improving a success rate and efficiency of sample alignment.

Moreover, for details of the quantity of samples supported by the first network element for sample alignment, refer to the related descriptions of the quantity of samples supported by the master participant for sample alignment in step S610. Details are not described herein again.

It may be understood that the sample alignment type supported by the first network element may be two-party sample alignment and/or multi-party sample alignment. For a sample alignment algorithm that can support both two-party sample alignment and multi-party sample alignment, computing power requirements of the sample alignment algorithm for two-party sample alignment and multi-party sample alignment may be different. Therefore, the sample alignment type supported by the first network element may be used to assist the second network element in determining the computing power requirement of the sample alignment algorithm, so that the second network element determines whether to support sample alignment, thereby improving a success rate and efficiency of sample alignment.

In addition, the sample alignment type supported by the first network element may be a sample alignment type that can be supported by the first network element, or may indicate a sample alignment type of sample alignment that the first network element expects to perform.

Moreover, for details of the sample alignment type supported by the first network element, refer to the related descriptions of the sample alignment type supported by the master participant in step S610. Details are not described herein again.

It may be understood that the at least one time period in which the first network element supports sample alignment may be used by the second network element to determine whether to support sample alignment. For example, the second network element may determine, based on the at least one time period and a load status in the at least one time period, whether to support sample alignment, so as to improve a success rate and efficiency of sample alignment.

In addition, for details of the at least one time period in which the first network element supports sample alignment, refer to the related descriptions of the at least one time period in which the master participant supports sample alignment in step S610. Details are not described herein again.

In other words, the first information further indicates, to the second network element, the quantity of samples supported by the first network element for sample alignment, the first sample alignment type, or the at least one first time period, to assist the second network element in further determining whether execution of sample alignment is supported, so as to avoid a sample alignment failure caused by a local resource failing to meet a computing power requirement of the sample alignment algorithm in an actual process of performing sample alignment by the second network element, thereby improving a success rate and efficiency of sample alignment.

In a possible implementation, the at least one first sample alignment algorithm is associated with the at least one first time period.

It may be understood that, that the at least one first sample alignment algorithm is associated with the at least one first time period may be one or more first sample alignment algorithms that can be used in each time period in the at least one first time period. For details, refer to the related descriptions in step S610 that the at least one first common sample alignment algorithm may be associated with the at least one time period. Details are not described herein again.

In other words, the at least one first sample alignment algorithm is associated with the at least one first time period, so that the second network element can determine first sample alignment algorithms supported by the first network element in different first time periods, and determine, based on local resources that can be invoked in the different first time periods, whether to support computing power requirements of the first sample alignment algorithms corresponding to the different first time periods. In this way, the second network element can further determine whether execution of sample alignment is supported, thereby improving a success rate and efficiency of sample alignment.

Step S902 is described as follows:
It may be understood that step S902 is similar to step S611 in FIG. 6B. For example, when the second network element determines, based on the at least one first sample alignment algorithm, that execution of sample alignment is supported (that is, case 1 in step S611), the first response message may indicate that execution of sample alignment is supported, and/or the second sample alignment algorithm. It may be understood that the second network element may determine, from the at least one first sample alignment algorithm based on the sample alignment algorithm supported by the second network element, a sample alignment algorithm that is the same as the sample alignment algorithm supported by the second network element, and use the sample alignment algorithm as the second sample alignment algorithm.

For another example, when the second network element determines, based on the at least one first sample alignment algorithm, that execution of sample alignment is not supported (that is, case 2 in step S611), the first response message may indicate that execution of sample alignment is not supported, and/or a reason why execution of sample alignment is not supported.

It should be understood that, for a specific implementation of step S902, refer to step S611. Details are not described herein again.

In a possible implementation, the first response further indicates a quantity of samples supported by the second network element for sample alignment, and/or a second time period in which the second network element supports sample alignment; or the first response further indicates a reason why the second network element does not support sample alignment, and/or a maximum quantity of samples that the second network element expects the first network element to use.

It may be understood that, when the second network element supports performing sample alignment, in addition to indicating the second sample alignment algorithm, the first response may further indicate the quantity of samples supported by the second network element for sample alignment, and/or the second time period in which the second network element supports sample alignment. The quantity of samples supported by the second network element for sample alignment may be used by the first network element to determine a computing power requirement of the second sample alignment algorithm, so that the first network element determines whether sample alignment can be supported in a process of performing sample alignment, thereby improving a success rate of sample alignment. For details of the quantity of samples supported by the second network element for sample alignment, refer to the quantity of samples supported by the slave participant for sample alignment in step S611. Details are not described herein again.

In addition, the second time period in which the second network element supports sample alignment may be used by the first network element to determine a time period in which the second network element can perform sample alignment, so that the first network element determines, based on the time period, whether sample alignment can be performed with the first network element, thereby improving a success rate of sample alignment. For details of the second time period in which the second network element supports sample alignment, refer to the time period in which the slave participant supports sample alignment in step S611. Details are not described herein again.

It may be understood that, when the first response indicates that execution of sample alignment is not supported, the first response may further indicate a reason why the second network element does not support sample alignment, and/or a maximum quantity of samples that the second network element expects the first network element to use. The first response further indicates the reason why the second network element does not support sample alignment, so as to assist the first network element in adjusting, when subsequently sending the first request again, a parameter such as the first sample alignment algorithm indicated by the first information, the quantity of samples supported by the first network element for sample alignment, or the at least one first time period in which the first network element supports sample alignment, thereby improving a success rate of negotiating a related configuration for sample alignment (for example, a sample alignment algorithm, a quantity of samples, or a time period for sample alignment). For details of the reason why the second network element does not support sample alignment, refer to the reason why execution of sample alignment is not supported in step S611. Details are not described herein again.

In addition, the maximum quantity of samples that the second network element expects the first network element to use may indicate a maximum quantity of samples that the second network element can allow the first network element to use when performing sample alignment based on the local resource. In this way, when subsequently sending the first request again, the first network element adjusts the quantity of samples supported by the first network element for sample alignment, so as to improve a success rate of sample alignment negotiation. For details of the maximum quantity of samples that the second network element expects the first network element to use, refer to the maximum quantity of samples that the slave participant expects the master participant to use in step S611. Details are not described herein again.

In other words, when the second network element supports performing sample alignment, the first response further indicates the quantity of samples supported by the second network element for sample alignment, and/or the second time period in which the second network element supports sample alignment, so as to assist the first network element in further determining whether sample alignment can be supported in a process of performing sample alignment, thereby improving a success rate of sample alignment. In addition, when the second network element does not support performing sample alignment, the first response further indicates the reason why the second network element does not support sample alignment, and/or the maximum quantity of samples that the second network element expects the first network element to use, so as to assist the first network element in adjusting, when subsequently sending the first request again, a parameter such as the first sample alignment algorithm indicated by the first information, the quantity of samples supported by the first network element for sample alignment, or the at least one first time period in which the first network element supports sample alignment, thereby improving a success rate of sample alignment negotiation.

Optionally, the information transmission method shown in FIG. 9 further includes the following step:
S906: The first network element sends a first message to the second network element. Correspondingly, the second network element receives the first message from the first network element. The first message indicates a target sample alignment algorithm, and the target sample alignment algorithm is a sample alignment algorithm determined from the at least one first sample alignment algorithm based on the second sample alignment algorithm.

It may be understood that, for a specific implementation of step S906, refer to step S612 in FIG. 6B. Details are not described herein again.

In other words, the first network element may further determine, based on a sample alignment response message of the second network element, that the first network element and the second network element can support performing sample alignment, and the target sample alignment algorithm used to perform sample alignment, so as to avoid a sample alignment failure caused by a failure to meet a computing power requirement of the sample alignment algorithm in a process of performing sample alignment, thereby improving a success rate and efficiency of sample alignment.

It may be understood that, when the first network element only selects to perform sample alignment with the second network element, the target sample alignment algorithm may be the second sample alignment algorithm. When there are a plurality of second sample alignment algorithms, the target sample alignment algorithm may be one or more of the plurality of second sample alignment algorithms. This is not specifically limited in embodiments of this application.

In addition, when the first network element further sends the first request to a network element other than the second network element, and the first network element determines that the first network element also performs sample alignment with the another network element, the first network element may determine the target sample alignment algorithm based on the second sample alignment algorithm and a sample alignment algorithm indicated by a response of the another network element to the first request.

For example, the information transmission method shown in FIG. 9 further includes: The first network element sends the first request to a fourth network element; the first network element receives a third response from the fourth network element; and the first network element sends a second message to the fourth network element, where the second message indicates the target sample alignment algorithm. The third response indicates a fifth sample alignment algorithm among the at least one first sample alignment algorithm, and the fifth sample alignment algorithm is used to determine a common sample between the dataset of the first network element for vertical federated learning model training and a dataset of the fourth network element for vertical federated learning model training. There are a plurality of fifth sample alignment algorithms and/or a plurality of second sample alignment algorithms.

Further, that the target sample alignment algorithm is the sample alignment algorithm determined from the at least one first sample alignment algorithm based on the second sample alignment algorithm includes: The target sample alignment algorithm is a sample alignment algorithm determined from the at least one first sample alignment algorithm based on the second sample alignment algorithm and the fifth sample alignment algorithm.

In other words, the first network element may send the first request to a plurality of network elements, to obtain sample alignment algorithms selected by the plurality of network elements from the at least one sample alignment algorithm, so as to determine a target sample alignment algorithm that can be jointly used by the first network element and the plurality of network elements to perform sample alignment, thereby implementing multi-party sample alignment.

In a possible implementation, the first message further indicates a target time period for sample alignment.

It may be understood that, for a specific implementation of the target time period, refer to the target time period in step S612. Details are not described herein again.

In other words, the first network element may further indicate, by using the first message, the target time period for performing sample alignment, to notify the second network element to perform a sample alignment process in the target time period, so as to prevent the second network element from performing the sample alignment process in a time period in which the second network element may not be able to meet a computing power requirement of the target sample alignment algorithm, thereby further improving a success rate and efficiency of sample alignment.

Alternatively, optionally, the information transmission method shown in FIG. 9 further includes the following step:
S907: When the first network element determines that sample alignment is not performed, the first network element sends a third message to the second network element. Correspondingly, the second network element receives the third message from the first network element. The third message indicates that sample alignment is not performed.

It may be understood that, for a specific implementation of step S907, refer to step S613 in FIG. 6B. Details are not described herein again.

In other words, the first network element sends the third message to the second network element, to indicate that sample alignment is not performed, so that the second network element can be notified in time that sample alignment is not performed subsequently.

In a possible implementation, the third message further indicates a reason why sample alignment is not performed.

It may be understood that, for a specific reason why sample alignment is not performed, refer to step S613. Details are not described herein again.

In other words, the first network element indicates, to the second network element, the reason why sample alignment is not performed, so that when the first network element subsequently sends the first request again, the second network element can be assisted in adjusting the second sample alignment algorithm, the quantity of samples supported for sample alignment, the time period supported for sample alignment, or the like that is indicated by the first response, thereby improving a success rate and efficiency of sample alignment negotiation.

In embodiments of this application, the first network element sends the first request to the second network element, so that the second network element can determine, based on the at least one first sample alignment algorithm, whether the second network element and the first network element support a same sample alignment algorithm to perform sample alignment. When determining that the second network element and the first network element support the same sample alignment algorithm, the second network element feeds back the second sample alignment algorithm to the first network element by using the first response, so that a sample alignment algorithm used in a sample alignment process can be negotiated between the first network element and the second network element, thereby improving efficiency and a success rate of performing sample alignment between the first network element and the second network element. Further, when the second network element does not support the at least one first sample alignment algorithm, the second network element may feed back, to the first network element by using the first response, that execution of sample alignment is not supported, so that the first network element can perform sample alignment with another participant participating in the vertical federated learning model training in time, thereby improving efficiency of performing sample alignment by the first network element. Therefore, according to the information transmission method provided in embodiments of this application, efficiency and a success rate of performing sample alignment by the first network element can be improved.

The foregoing information transmission method processes shown in FIG. 6A and FIG. 6B to FIG. 9 are applicable to a sample alignment process without third-party participation for problem 1. The following describes a sample alignment implementation solution with third-party participation for problem 2.

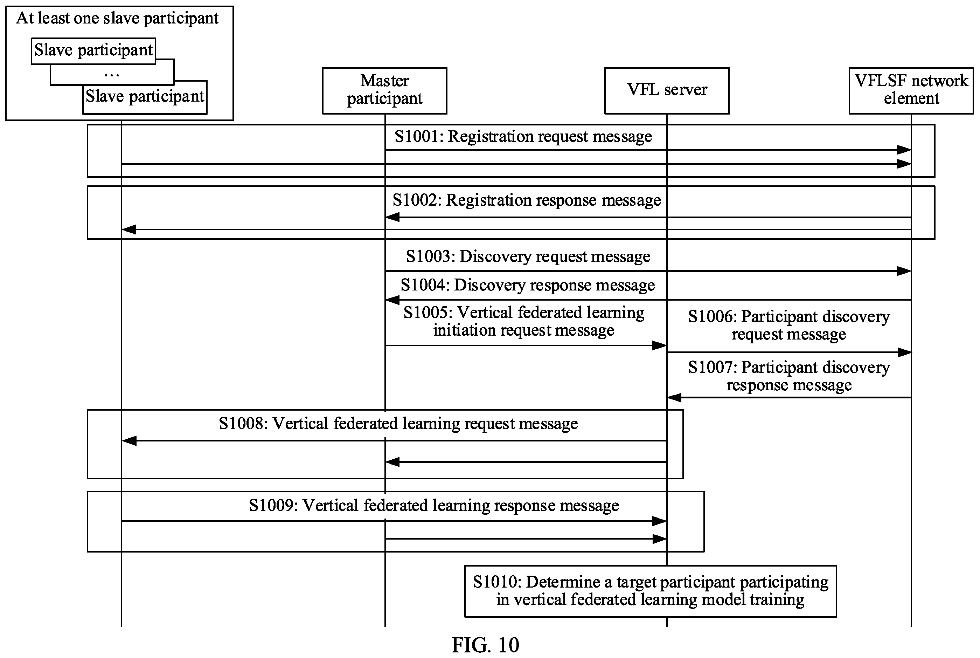

FIG. 10 is a schematic flowchart 5 of an information transmission method according to an embodiment of this application. The information transmission method provides a sample alignment implementation solution for problem 2 when a third party participates in sample alignment, and mainly involves interaction between a master participant, at least one slave participant, a VFL server, and a VFLSF network element. The VFLSF network element is used as a trusted third party, and the master participant and the at least one candidate slave participant may register, with the VFLSF network element, a sample identifier corresponding to a dataset used for vertical federated learning model training, so that the VFLSF network element can determine a common sample identifier between the master participant and the at least one candidate slave participant, thereby implementing sample alignment between the master participant and the at least one candidate slave participant.

In the information transmission method process shown in FIG. 10, the master participant initiates vertical federated learning, and the VFL server is responsible for discovery of a participant (or referred to as a vertical federated learning client (VFL client)).

As shown in FIG. 10, the information transmission method process includes steps S1001 to S1010. Steps S1003 to S1005 are the same as steps S603 to S605, and details are not described again.

The following separately describes steps S1001 and S1002 and S1006 to S1010.

S1001: The participant sends a registration request message to the VFLSF network element. Correspondingly, the VFLSF network element receives the registration request message from the participant.

The registration request message is used to register a sample identifier corresponding to a dataset of the participant for vertical federated learning model training. In other words, the participant sends the registration request message to the VFLSF network element, to register the sample identifier of the participant with the VFLSF network element, so that the VFLSF network element can determine a common sample identifier between participants based on sample identifiers of the participants, thereby implementing sample alignment.

It may be understood that there may be a plurality of sample identifiers (or referred to as a group of sample identifiers) corresponding to the dataset that is provided by the participant and that is used for vertical federated learning model training. The group of sample identifiers may be a group of sample identifiers encrypted by using an encryption algorithm, or the group of sample identifiers may be a group of sample identifiers that are not encrypted by using an encryption algorithm. This is not specifically limited in embodiments of this application.

In addition, the encryption algorithm may be an RSA encryption algorithm, a hash encryption algorithm, a homomorphic encryption algorithm, or the like. This is not specifically limited in embodiments of this application.

It may be understood that an encryption algorithm is preconfigured in a protocol, or participants may use a same encryption algorithm to encrypt the sample identifier, or the VFLSF network element may indicate, to each participant, an encryption algorithm for encrypting the sample identifier.

Optionally, when the sample identifier is a group of sample identifiers encrypted by using an encryption algorithm, the registration request message may further indicate an encryption algorithm corresponding to the sample identifier, so that the VFLSF network element determines an intersection between sample identifiers of participants. For example, the registration request message may indicate sample identifier 1 and encryption algorithm 1 corresponding to sample identifier 1, and sample identifier 1 is obtained by encrypting an unencrypted sample identifier of the participant by using encryption algorithm 1.

In addition, the registration request message may further indicate a plurality of sample identifiers encrypted by using an encryption algorithm, and a plurality of encryption algorithms corresponding to the plurality of sample identifiers encrypted by using the encryption algorithm. For example, the registration request message may indicate sample identifier 1 and encryption algorithm 1 corresponding to sample identifier 1, sample identifier 2 and encryption algorithm 2 corresponding to sample identifier 2, and sample identifier 3 and encryption algorithm 3 corresponding to sample identifier 3. This is not specifically limited in embodiments of this application.

In a possible implementation, the participant may include a master participant and a slave participant, and step S1001 may include the following steps:
S1001a: The master participant sends a registration request message to the VFLSF network element. Correspondingly, the VFLSF network element receives the registration request message from the master participant.
   It may be understood that the registration request message of the master participant is used to register a sample identifier corresponding to a dataset of the master participant for vertical federated learning model training.
S1001b: The slave participant sends a registration request message to the VFLSF network element. Correspondingly, the VFLSF network element receives the registration request message from the slave participant.

It may be understood that the registration request message of the slave participant is used to register a sample identifier corresponding to a dataset of the slave participant for vertical federated learning model training.

For example, as shown in FIG. 1, it is assumed that a dataset that is provided by participant A and that is used for vertical federated learning model training is the dataset of participant A in FIG. 1, a dataset that is provided by participant B and that is used for vertical federated learning model training is the dataset of participant B in FIG. 1, sample identifiers corresponding to the dataset of participant A include: [identifier of user 1, identifier of user 2, identifier of user 3, identifier of user 4], and sample identifiers corresponding to the dataset of participant B include: [identifier of user 1, identifier of user 2, identifier of user 3, identifier of user 4, identifier of user 5]. A registration request message sent by participant A to the VFLSF network element includes: [identifier of user 1, identifier of user 2, identifier of user 3, identifier of user 4], and a registration request message sent by participant B to the VFLSF network element includes: [identifier of user 1, identifier of user 2, identifier of user 3, identifier of user 4, identifier of user 5].

In addition, the sample identifier may be an encrypted sample identifier. It is assumed that both participant A and participant B encrypts the sample identifiers by using encryption algorithm 1, the identifier of user 1 becomes ciphertext identifier 1 after being encrypted by using encryption algorithm 1, the identifier of user 2 becomes ciphertext identifier 2 after being encrypted by using encryption algorithm 1, the identifier of user 3 becomes ciphertext identifier 3 after being encrypted by using encryption algorithm 1, the identifier of user 4 becomes ciphertext identifier 4 after being encrypted by using encryption algorithm 1, and the identifier of user 5 becomes ciphertext identifier 5 after being encrypted by using encryption algorithm 1. In this case, the registration request message sent by participant A to the VFLSF network element includes: [ciphertext identifier 1, ciphertext identifier 2, ciphertext identifier 3, ciphertext identifier 4], and the registration request message sent by participant B to the VFLSF network element includes: [ciphertext identifier 1, ciphertext identifier 2, ciphertext identifier 3, ciphertext identifier 4, ciphertext identifier 5].

S1002: The VFLSF network element sends a registration response message to the participant. Correspondingly, the participant receives the registration response message from the VFLSF network element. The registration response message indicates whether the registration succeeds or fails. It may be understood that, when the registration fails, the participant may send the registration request message again to register the sample identifier of the participant.

In addition, because the participant may include a master participant and a slave participant, step S1002 may include the following steps:
S1002a: The VFLSF network element sends a registration response message to the master participant. Correspondingly, the master participant receives the registration response message from the VFLSF network element.
S1002b: The VFLSF network element sends a registration response message to the slave participant. Correspondingly, the slave participant receives the registration response message from the VFLSF network element.

It may be understood that step S1001 and step S1002 are a sample identifier registration process. After the sample identifier of the participant is successfully registered, preparation may be made for subsequent discovery and selection of the participant, so as to initiate vertical federated learning. In addition, when the sample identifier of the participant changes, the participant may update the sample identifier of the participant by performing the sample alignment identifier registration process again.

It should be understood that the registration request message in step S1001 may be further used to register other information of the participant in addition to the sample identifier, for example, an identifier and an address of the participant, a vertical federated learning capability type supported by the participant, a supported vertical federated learning group identifier, or a supported vertical federated learning model type identifier. This is not specifically limited in embodiments of this application.

It may be understood that, when the participant in steps S1001 to S1005 is an untrusted network element, the VFLSF network element is the VFLSF network element or the network repository function network element in FIG. 5, and the VFL server is a network function network element, similar to the information transmission method process in FIG. 7A and FIG. 7B, the participant may interact with the VFLSF network element, the VFL server, or the like through a network exposure function network element. For details, refer to steps S701 to S712 in FIG. 7A. Details are not described herein again.

In addition, similar to step S716 and step S717, the network exposure function network element may also maintain a correspondence between the master participant and the at least one slave participant, and separately allocate identifiers or addresses to the master participant and the at least one slave participant, to avoid exposing a real identifier or address of the master participant and the at least one slave participant. In addition, the network exposure function network element may also allocate a correlation identifier to a vertical federated learning process between the master participant and the at least one slave participant, so that the network exposure function network element, the master participant, the at least one slave participant, and the like distinguish a plurality of different vertical federated learning processes concurrently performed by the master participant.

S1006: The VFL server sends a participant discovery request message to the VFLSF network element. Correspondingly, the VFLSF network element receives the participant discovery request message from the VFL server. The participant discovery request message is used to request to discover at least one slave participant that can participate in same vertical federated learning model training as the master participant, the participant discovery request message includes a sample alignment indication (sample alignment indication), the sample alignment indication indicates to provide a common sample identifier, and the common sample identifier is a common sample identifier between datasets of at least two participants that participate in same vertical federated learning model training in a plurality of participants.

It may be understood that in step S1006, because the VFL server sends the participant discovery request message in response to the vertical federated learning initiation request message of the master participant (that is, step S1005), the common sample identifier indicates a common sample between a dataset of the master participant for vertical federated learning model training and a dataset of the at least one slave participant for vertical federated learning model learning training.

In other words, the VFL server may request, based on the vertical federated learning initiation request message of the master participant (that is, step S1005), the VFLSF network element to discover at least one slave participant that can participate in same vertical federated learning model training as the master participant, and provide a common sample identifier between the master participant and the at least one slave participant, so as to implement sample alignment between the master participant and the at least one slave participant.

It may be understood that the discovery request message may carry an identifier of the master participant, and is used by the VFLSF network element to determine the master participant. In addition, the discovery request message may further include the vertical federated learning group identifier (VFL group ID), the vertical federated learning model type identifier (mode type ID(s)), the slave participant requirement (slave VFL client requirement), the second vertical federated learning capability type indication (for example, VFL capability type=slave VFL client), or the like in step S606. This is not specifically limited in embodiments of this application.

In a possible implementation, the participant discovery request message further includes fifth indication information, and the fifth indication information indicates a range of a quantity of sample identifiers included in the common sample identifier; or the fifth indication information indicates a range of a quantity of samples indicated by the common sample identifier.

It may be understood that the range of the quantity of sample identifiers included in the common sample identifier has a same meaning as the range of the quantity of samples indicated by the common sample identifier, and the two may be replaced for representation.

For example, the quantity range of samples indicated by the common sample identifier may include a maximum quantity of samples (max number of samples) and/or a minimum quantity of samples (min number of samples). For example, the maximum quantity of samples may be indicated by a fourth threshold. In this case, the range of the quantity of samples indicated by the common sample identifier is [1, fourth threshold]. For another example, the minimum quantity of samples may be indicated by a fifth threshold. In this case, the range of the quantity of samples indicated by the common sample identifier is [fifth threshold, +∞]. For still another example, the maximum quantity of samples is a fourth threshold, and the minimum quantity of samples is a fifth threshold. In this case, the range of the quantity of samples indicated by the common sample identifier is [fifth threshold, fourth threshold].

In addition, the range of the quantity of samples indicated by the common sample identifier may be used by the VFLSF network element to assist in determining the common sample identifier and the at least one slave participant corresponding to the common sample identifier, so that the quantity of samples indicated by the common sample identifier determined by the VFLSF network element meets a vertical federated learning model training requirement.

It may be understood that, if a quantity of common samples between participants is small, it is not conducive to improving accuracy of the vertical federated learning model. Therefore, some participants need to be selected, to ensure that a quantity of common samples between the selected participants is greater than the fifth threshold. In addition, if a quantity of common samples between participants is high, accuracy improvement of the vertical federated learning model may be limited after the quantity of common samples is greater than the threshold, and an excessively high quantity of samples consumes a large quantity of local resources. Therefore, some participants need to be selected, to ensure that a quantity of common samples between the selected participants is less than the fourth threshold. In other words, the range of the quantity of samples indicated by the common sample identifier can be used to avoid an excessively large or small quantity of common samples determined by the VFLSF network element, so that a participant in vertical federated learning model training that meets a requirement on the quantity of common samples can be determined.

For example, it is assumed that the minimum quantity of samples is 10,000. The VFLSF network element determines, from the plurality of participants registered with the VFLSF network element based on the second vertical federated learning capability type indication, the slave participant requirement, and the like, a group of slave participants that can participate in same vertical federated learning model training as the master participant, and determines a common sample identifier between the group of slave participants and the master participant based on sample identifiers separately registered by the group of slave participants and the master participant. If a quantity of samples indicated by the common sample identifier is less than the minimum quantity of samples 10,000 (that is, a quantity of common samples between the group of slave participants and the master participant is small), the group of slave participants and the master participant determine not to join vertical federated learning, and the VFLSF network element needs to reselect another group of slave participants until a quantity of samples indicated by the determined common sample identifier is greater than or equal to the minimum quantity of samples.

It may be understood that, if the master participant and the at least one slave participant are determined before step S1006, the participant discovery request message in step S1006 may be replaced with a common sample identifier request message (or referred to as a sample alignment request message). The request message is used to request to provide a common sample identifier between the master participant and the at least one slave participant. For example, the common sample identifier request message may include a sample alignment indication, an instance of the master participant (master VFL client instance), and an instance of the at least one slave participant (one or more slave VFL client instances). The instance of the master participant may include an identifier and/or address information of the master participant, and the instance of the at least one slave participant may include an identifier and/or address information of each of the at least one slave participant.

S 1007: The VFLSF network element sends a participant discovery response message to the VFL server. Correspondingly, the VFL server receives the participant discovery response message from the VFLSF network element. The participant discovery response message includes the instance of the at least one slave participant and a first common sample identifier, and the first common sample identifier indicates a common sample between a dataset of the master participant and a dataset of the at least one slave participant.

It may be understood that the at least one slave participant in the participant discovery response message may be a slave participant that can participate in training of a first vertical federated learning model with the master participant. The first vertical federated learning model may be any one of at least one vertical federated learning model indicated by the vertical federated learning model type identifier (mode type ID(s)) indicated in step S1006, or the first vertical federated learning model may be any one of a plurality of vertical federated learning models configured by the VFLSF network element. This is not specifically limited in embodiments of this application.

In addition, the instance of the at least one slave participant may include an instance of each of the at least one slave participant, the instance of each slave participant includes an identifier and/or address information of each participant, and the identifier and/or the address information of each slave participant may be used to communicate with each slave participant, to send the first common sample identifier to each slave participant.

It may be understood that the VFLSF network element may determine the at least one slave participant and the first common sample identifier based on the participant discovery request message. For example, the VFLSF network element may determine, from a plurality of participants registered with the VFLSF network element based on the slave participant requirement in the participant discovery request message, a plurality of groups of slave participants that can participate in same vertical federated learning model training as the master participant, and determine, based on sample identifiers separately registered by the plurality of groups of participants and the master participant, a plurality of common sample identifiers corresponding to the plurality of groups of slave participants and the master participant. Therefore, the VFLSF network element may select a common sample identifier from the plurality of common sample identifiers as the first common sample identifier, and feed back the first common sample identifier and a group of slave participants corresponding to the first common sample identifier.

It should be understood that an implementation in which the VFLSF network element selects a common sample identifier from the plurality of common sample identifiers may be, for example, randomly selecting a common sample identifier, or selecting a common sample identifier indicating a largest quantity of samples. This is not specifically limited in embodiments of this application.

It may be understood that the VFLSF network element may alternatively feed back the plurality of common sample identifiers, or feed back a subset of the plurality of common sample identifiers. This is not specifically limited in embodiments of this application.

It may be further understood that the VFLSF network element feeds back the plurality of common sample identifiers or feeds back the subset of the plurality of common sample identifiers, so that the VFL server can perform selection from the plurality of common sample identifiers or the subset thereof, to determine a proper common sample identifier and a group of slave participants corresponding to the common sample identifier.

For example, it is assumed that the plurality of participants registered with the VFLSF network element include slave participants 1 to 5. A quantity of common samples between the master participant and slave participants 1 to 5 is 9,000, and the common samples may be indicated by common sample identifier 1. A quantity of common sample identifiers between the master participant and slave participants 1 to 4 is 20,000, and the common samples may be indicated by common sample identifier 2. A quantity of common sample identifiers between the master participant and slave participant 1 is 30,000, and the common samples may be indicated by common sample identifier 3.

Based on the foregoing conditions, the VFLSF network element may select any one of common sample identifiers 1, 2, and 3 as the first common sample identifier. Alternatively, the VFLSF network element may select common sample identifier 3 indicating a largest quantity of samples as the first common sample identifier. Alternatively, the VFLSF network element may select common sample identifier 1 corresponding to a largest quantity of slave participants as the first common sample identifier. Alternatively, the VFLSF network element may feed back common sample identifiers 1, 2, and 3, or at least one of common sample identifiers 1, 2, and 3.

It should be understood that, when the participant discovery request message further indicates the range of the quantity of sample identifiers included in the common sample identifier, the VFLSF network element may also determine, based on the quantity range, one or more common sample identifiers that are fed back and a group of slave participants corresponding to the one or more common sample identifiers. For details, refer to the related descriptions in step S1006. Details are not described herein again.

It may be understood that, to avoid disclosure of sample information indicated by the first common sample identifier, the first common sample identifier is an encrypted sample identifier. For example, the first common sample identifier includes a group of encrypted sample identifiers.

Optionally, the participant discovery response message includes a quantity of sample identifiers (number of intersection sample) included in the first common sample identifier.

It should be understood that, considering that the VFL server may not be configured with an encryption algorithm or a decryption algorithm corresponding to the first common sample identifier, and cannot determine whether the first common sample identifier meets a vertical federated learning model training requirement, the participant discovery response message indicates the quantity of sample identifiers included in the first common sample identifier, so that the VFL server can determine the first common sample identifier that meets the vertical federated learning model training requirement, thereby increasing a probability of joining vertical federated learning model training by the participant.

It should be understood that the participant discovery response message may further include other information, for example, indication information for training the first vertical federated learning model. This is not specifically limited in embodiments of this application.

S1008: The VFL server sends a vertical federated learning request message to the participant. Correspondingly, the participant receives the vertical federated learning request message from the VFL server. The vertical federated learning request message includes a second common sample identifier.

It may be understood that the second common sample identifier may be the first common sample identifier in step S1007; or when there are a plurality of first common sample identifiers in step S1007, the second common sample identifier may be one or more of the plurality of first common sample identifiers in step S1007. This is not specifically limited in embodiments of this application.

In addition, the vertical federated learning request message is used to initiate a vertical federated learning process, or the vertical federated learning request message indicates to initiate a vertical federated learning preparation process. In other words, the vertical federated learning request message may also be replaced with vertical federated learning preparation request information.

It may be understood that the participant in step S1008 is a master participant and at least one slave participant corresponding to the second common sample identifier, and step S1008 includes the following steps:
S1008a: The VFL server sends a vertical federated learning request message to the master participant. Correspondingly, the master participant receives the vertical federated learning request message from the VFL server. The vertical federated learning request message includes a second common sample identifier.
S1008b: The VFL server sends a vertical federated learning request message to the at least one slave participant. Correspondingly, the master participant receives the vertical federated learning request message from the VFL server. The vertical federated learning request message includes a second common sample identifier.
S1009: The participant sends a vertical federated learning response message to the VFL server. Correspondingly, the VFL server receives the vertical federated learning response message from the participant. The vertical federated learning preparation response message indicates whether the participant joins vertical federated learning.

It may be understood that joining vertical federated learning may be joining a vertical federated learning model training process.

It may be further understood that, step S1009 is similar to step S615, and the participant may determine, based on the quantity of sample identifiers included in the second common sample identifier, whether to join vertical federated learning. For example, when the quantity of sample identifiers included in the second common sample identifier is less than or equal to a third threshold, the master participant determines not to join vertical federated learning. For another example, when the quantity of sample identifiers included in the second common sample identifier is greater than a third threshold, the master participant determines to join vertical federated learning. The third threshold may be, for example, 10%, 20%, 30%, or another value of the quantity of samples corresponding to a dataset that is provided by the participant and that is used for vertical federated learning model training. This specifically depends on actual implementation. This is not specifically limited in embodiments of this application.

In addition, the participant in step S1009 is similar to the participant in step S1008, and step S1009 includes the following steps:
S1009a: The master participant sends a vertical federated learning response message to the VFL server. Correspondingly, the VFL server receives the vertical federated learning response message from the master participant. The vertical federated learning response message indicates whether the master participant joins vertical federated learning.
S1009b: The at least one slave participant sends a vertical federated learning response message to the VFL server. Correspondingly, the VFL server receives the vertical federated learning response message from the at least one slave participant. The vertical federated learning response message indicates whether the at least one slave participant joins vertical federated learning.

It should be understood that, in steps S1008 and S1009, when an untrusted network element exists in the participant, the VFL server may interact with the untrusted network element through the network exposure function network element. For details, refer to steps S711 to S717 in FIG. 7A and FIG. 7B. Details are not described herein again.

S1010: The VFL server determines, based on the vertical federated learning preparation response message of the participant, a target participant participating in vertical federated learning model training.

It may be understood that, for a specific implementation of step S1010, refer to step S616. Details are not described herein again.

According to the information transmission method process shown in FIG. 10 in embodiments of this application, each participant may register the sample identifier with the VFLSF network element. Therefore, when the master participant initiates vertical federated learning, the master participant may discover a coordinator VFL server of vertical federated learning through the VFLSF network element, and send the discovery request message to the VFL server, so that the VFL server requests the VFLSF network element to discover at least one slave participant that can participate in same vertical federated learning model training as the master participant, and a common sample identifier between the at least one slave participant and the master participant, to trigger the VFLSF network element to determine a sample alignment result of sample alignment between the master participant and the at least one slave participant. In other words, the VFLSF network element may determine the at least one slave participant and the common sample identifier between the at least one slave participant and the master participant, and feed back the at least one slave participant and the common sample identifier to the VFL server, so that the VFL server can feed back the common sample identifier to the master participant and the at least one slave participant based on the at least one slave participant and the common sample identifier that are fed back by the VFLSF network element.

It may be understood that, in the information transmission method process shown in FIG. 10, the master participant is the initiator of vertical federated learning. In another implementation, the slave participant may alternatively initiate vertical federated learning, and the VFL server is responsible for discovering the master participant and the at least one slave participant. For example, the slave participant finds that the training data cannot be collected due to privacy protection, and then initiates vertical federated learning. The slave participant may perform step S603 to send the discovery request message to the VFLSF network element, and determine the VFL server by performing step S604. Further, the slave participant may perform step S605, that is, the slave participant may send the vertical federated learning initiation request message to the VFL server, so that the VFL server and the VFLSF network element perform steps S1006 and S1007, to determine the master participant and the at least one slave participant that can participate in same vertical federated learning model training as the slave participant, and the common sample identifier between the slave participant, the master participant, and the at least one slave participant. Then, the VFL server sends the vertical federated learning request message to the slave participant, the master participant, and the at least one slave participant (that is, step S1008), to perform subsequent steps S1009 and S1010.

It should be understood that, similar to the process in which the master participant is responsible for coordination in FIG. 8, in the information transmission method process shown in FIG. 10, the master participant may also replace the VFL server to be responsible for coordination. For example, the master participant may not perform step S1005, and instead performs step S1006 in place of the VFL server. The VFLSF network element sends the participant discovery response message in step S1007 to the master participant, so that the master participant can obtain the identifier and/or the address information of the at least one slave participant and the common sample identifier, and send the vertical federated learning request message to the at least one slave participant to indicate the common sample identifier. Therefore, the master participant may receive the vertical federated learning response message from the at least one slave participant, to determine the target slave participant joining vertical federated learning model training, and send the vertical federated learning model training request message to the VFL server, to indicate, to the VFL server, the target slave participant joining vertical federated learning model training.

Similarly, when the slave participant initiates vertical federated learning, the master participant also replaces the VFL server to be responsible for coordination (that is, performs step S1006). This is not specifically limited in embodiments of this application.

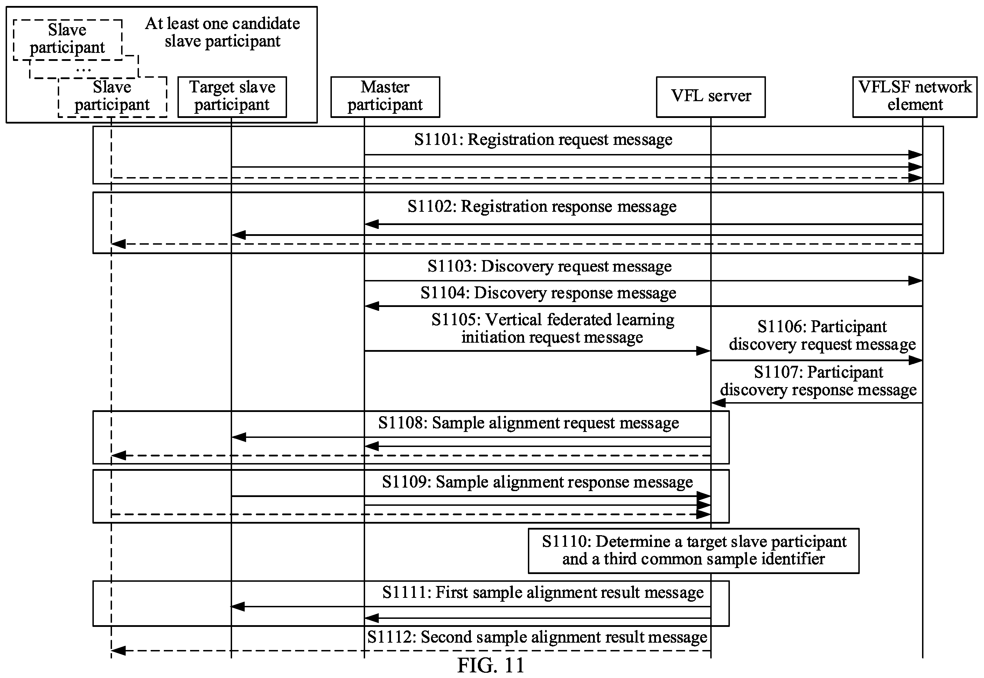

FIG. 11 is a schematic flowchart 6 of an information transmission method according to an embodiment of this application. The information transmission method is a sample alignment method applicable to problem 2 with third-party participation, and mainly involves interaction between a master participant, at least one candidate slave participant, a VFL server, and a VFLSF network element. The VFL server is a trusted third party. The VFL server may separately send a request to the master participant and the at least one candidate slave participant, to separately obtain a sample identifier corresponding to a dataset of the master participant for vertical federated learning model training, and a sample identifier corresponding to a dataset of the at least one candidate slave participant for vertical federated learning model training, so that the VFL server can determine a common sample identifier between the master participant and the at least one candidate slave participant, thereby implementing sample alignment.

In the information transmission method process shown in FIG. 11, the master participant initiates vertical federated learning, and the VFL server is responsible for discovery of a participant (or referred to as a vertical federated learning client (VFL client)).

As shown in FIG. 11, the information transmission method process includes steps S1101 to S1111.

Steps S1101 to S1107 are similar to steps S601 to S607, and a difference lies in that in step S1106, the participant discovery request message may not include a sample alignment requirement. It may be understood that, in the information transmission method process shown in FIG. 11, the VFL server is responsible for determining a common sample identifier between the master participant and the slave participant, and does not need to complete sample alignment between the master participant and the slave participant by using a sample alignment algorithm, and does not need to indicate the VFLSF network element to select, by using the sample alignment requirement, a candidate slave participant (or referred to as a potential slave participant) that can perform sample alignment with the master participant.

The following separately describes steps S1108 to S1111.

S1108: The VFL server sends a sample alignment request message to the participant. Correspondingly, the participant receives the sample alignment request message from the VFL server. The sample alignment request message includes a sample provision indication (sample provision indication), and the sample provision indication indicates to provide a sample identifier corresponding to a dataset used for vertical federated learning model training.

S1109: The participant sends a sample alignment response message to the VFL server. Correspondingly, the VFL server receives the sample alignment response message from the participant. The sample alignment response message includes a first sample identifier, and the first sample identifier indicates a sample identifier corresponding to a dataset that is provided by the participant and that is used for vertical federated learning model training.

It may be understood that, for the sample identifier corresponding to the dataset used for vertical federated learning model training, refer to the sample identifier corresponding to the dataset of the participant for vertical federated learning model training in step S1001. Details are not described herein again.

In other words, the VFL server may indicate, by using the sample provision indication in the sample alignment request message, the participant to provide the sample identifier corresponding to the dataset of the participant for vertical federated learning model training, so that the participant can feed back, to the VFL server, the sample identifier corresponding to the dataset of the participant for vertical federated learning model training, and the VFL server can determine a common sample identifier between participants.

It should be understood that the participant in step S1108 may include a master participant, and at least one candidate slave participant that is determined through the VFLSF network element and that participates in sample alignment in step S1107, and step S1108 may include the following steps:
S1108a: The VFL server sends a sample alignment request message to the master participant. Correspondingly, the master participant receives the sample alignment request message from the VFL server.
S1108b: The VFL server sends a sample alignment request message to the at least one candidate slave participant. Correspondingly, the at least one candidate slave participant receives the sample alignment request message from the VFL server.

It may be understood that, that the VFL server sends the sample alignment request message to the at least one candidate slave participant may be that the VFL server sends the sample alignment request message to each of the at least one candidate slave participant.

Similarly, step S1109 may include the following steps:
S1109a: The master participant sends a sample alignment response message to the VFL server. Correspondingly, the VFL server receives the sample alignment response message from the master participant. The sample alignment response message includes a first sample identifier, and the first sample identifier indicates a sample identifier corresponding to a dataset that is provided by the master participant and that is used for vertical federated learning model training.

S1109b: The at least one candidate slave participant sends a sample alignment response message to the VFL server. Correspondingly, the VFL server receives the sample alignment response message from the at least one candidate slave participant.

It may be understood that, that at least one candidate slave participant sends the sample alignment response message to the VFL server may include: Each of the at least one candidate slave participant sends the sample alignment response message to the VFL server. The sample alignment response message of the at least one candidate slave participant includes the sample alignment response message of each candidate slave participant, the sample alignment response message of each candidate slave participant includes a first sample identifier, and the first sample identifier indicates a sample identifier corresponding to a dataset that is provided by the candidate slave participant and that is used for vertical federated learning model training.

S1110: The VFL server determines a target slave participant and a third common sample identifier based on the sample alignment response message of the master participant and the sample alignment response message of the at least one candidate slave participant.

It may be understood that there may be one or more target slave participants, and the third common sample identifier is a common sample identifier between the master participant and the target slave participant.

It may be further understood that a specific implementation of S1110 is similar to that of step S1007 in FIG. 10. For example, the VFL server may determine the third sample identifier based on a range of a quantity of sample identifiers included in a common sample identifier that is preconfigured or indicated by the master participant, and further determine one or more target slave participants from the at least one candidate slave participant. For details, refer to step S907. Details are not described herein again.

In addition, for details of the range of the quantity of sample identifiers included in the common sample identifier, refer to the fifth indication information in step S906. Details are not described herein again.

Moreover, the range of the quantity of sample identifiers included in the common sample identifier may alternatively be negotiated in advance by the VFL server and the master participant. This is not specifically limited in embodiments of this application.

S1111: The VFL server sends a first sample alignment result message to the target participant. Correspondingly, the target participant receives the first sample alignment result message from the VFL server. The first sample alignment result message indicates the third common sample identifier.

It may be understood that because the target participant may include a master participant and a target slave participant, step S1111 may include the following steps:
S1111a: The VFL server sends a first sample alignment result message to the master participant. Correspondingly, the master participant receives the first sample alignment result message from the VFL server. The first sample alignment result message indicates the third common sample identifier.
S1111b: The VFL server sends a first sample alignment result message to the target slave participant. Correspondingly, the target slave participant receives the first sample alignment result message from the VFL server. The first sample alignment result message indicates the third common sample identifier.

Optionally, the information transmission method process shown in FIG. 11 further includes the following step:
S1112: The VFL server sends a second sample alignment result message to a slave participant other than the target slave participant in the at least one candidate slave participant. Correspondingly, the slave participant other than the target slave participant among the at least one candidate slave participant receives the second sample alignment result message from the VFL server.

The second sample alignment result message indicates that the slave participant is not to participate in vertical federated learning model training, and/or a reason why the slave participant is not to participate in vertical federated learning model training.

It may be understood that the reason why the slave participant is not to participate in vertical federated learning model training may be, for example, that a quantity of common sample identifiers between the slave participant and the another participant does not fall within the range of the quantity of sample identifiers included in the common sample identifier.

According to the information transmission method process shown in FIG. 11 in embodiments of this application, when the master participant initiates vertical federated learning, the master participant may discover a coordinator VFL server in vertical federated learning through the VFLSF network element, and send the discovery request message to the VFL server, so that the VFL server requests the VFLSF network element to discover at least one candidate slave participant that can participate in same vertical federated learning model training as the master participant. Therefore, the VFL server may be used as a trusted third party to send the sample alignment request message to the master participant and the at least one candidate slave participant, to separately obtain sample identifiers corresponding to datasets that are of the master participant and the at least one candidate slave participant and that are used for vertical federated learning model training, and determine a common sample identifier between the master participant and the target parameter slave participant in the at least one candidate slave participant, so that the VFL server feeds back the common sample identifier to the master participant and the target participant, thereby implementing sample alignment. In addition, because the trusted third party triggers obtaining of the sample identifiers of the master participant and the candidate slave participant in response to the vertical federated learning request initiated by the participant, each participant can be prevented from registering the sample identifier with the trusted third party, so as to avoid that a large quantity of storage resources and communication resources of the trusted third party are occupied because each participant frequently registers the sample identifier.

It should be understood that, in the information transmission method process shown in FIG. 11, when the master participant is an untrusted network element, and the VFLSF network element and the VFL server are network function network elements, similar to the information transmission method process shown in FIG. 7A and FIG. 7B, the master participant may separately interact with the VFLSF network element and the VFL server through the network exposure function network element, and the network exposure function network element may maintain a correspondence between the master participant and the at least one candidate slave participant, allocate identifiers and/or addresses to the master participant and the at least one candidate slave participant, or allocate a correlation identifier to a vertical federated learning process between the master participant and the at least one candidate slave participant. For details, refer to step S716 and step S717 in FIG. 7B. Details are not described herein again.

It may be understood that, in the information transmission method process shown in FIG. 11, the master participant is the initiator of vertical federated learning. In another implementation, the slave participant may alternatively initiate vertical federated learning, and the VFL server is responsible for performing steps S1108 to S1112.

In addition, similar to the process in which the master participant is responsible for coordination in FIG. 8, in the information transmission method process shown in FIG. 11, the master participant may also replace the VFL server to be responsible for coordination, that is, perform steps S1106 and S1107, so that the VFLSF network element, as a trusted third party, replaces the VFL server to perform steps S1108 to S1112.

Similarly, when the slave participant initiates vertical federated learning, the master participant also replaces the VFL server to be responsible for coordination (that is, steps S1106 and S1107), and the VFLSF network element, as a trusted third party, replaces the VFL server to perform steps S1108 to S1112.

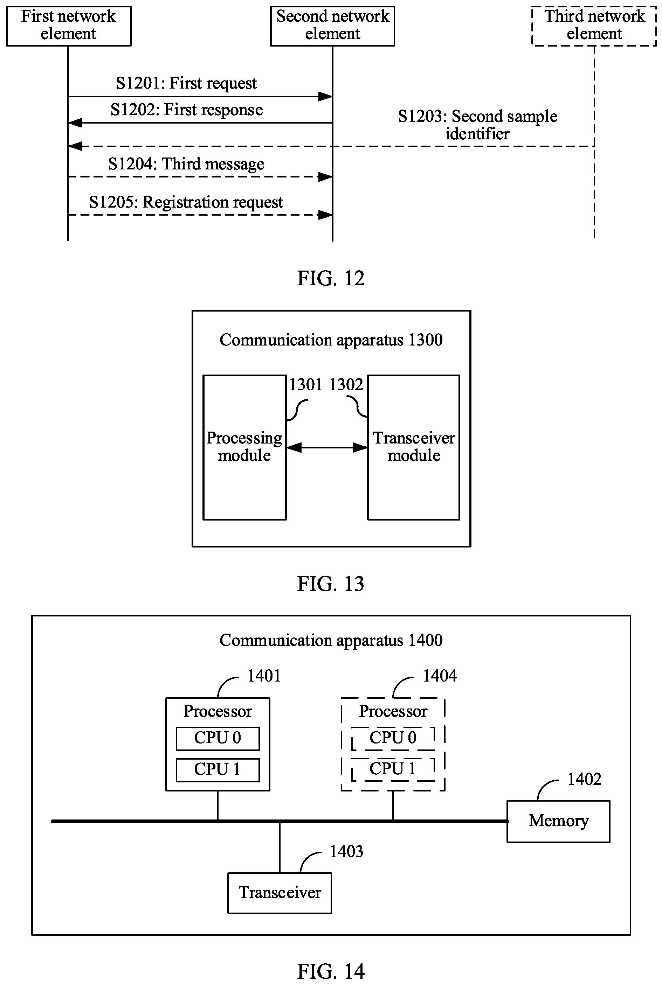

FIG. 12 is a schematic flowchart 7 of an information transmission method according to an embodiment of this application. The information transmission method is applicable to interaction between a first network element and a second network element. The first network element indicates, to the second network element by using a first request, to provide a sample identifier used for vertical federated learning model training, so that the second network element can be triggered to feed back a first sample identifier. In this way, the first network element can determine, based on the first sample identifier, a common sample identifier between the first network element and another participant participating in vertical federated learning model training, to implement sample alignment.

As shown in FIG. 12, the information transmission method process includes the following steps.

S1201: The first network element sends a first request to the second network element. Correspondingly, the second network element receives the first request from the first network element. The first request includes first indication information, and the first indication information indicates to provide a sample identifier used for vertical federated learning model training.

S1202: The second network element sends a first response to the first network element. Correspondingly, the first network element receives the first response from the second network element. The first response includes a first sample identifier.

It may be understood that, in the information transmission method process shown in FIG. 12, the first network element may be used as a trusted third party, or the second network element may be used as a trusted third party. The following describes steps S1201 and S1202 in implementation A and implementation B based on whether the first network element is a trusted third party.

Implementation A: The first network element is used as a trusted third party.

It may be understood that the first network element may be the VFL server or the VFLSF network element in FIG. 12, and the second network element may be a participant participating in vertical federated learning model training. In addition, when participants participating in vertical federated learning model training may be distinguished as a master participant and a slave participant, the second network element may be a master participant or a slave participant.

In a possible implementation, that the first indication information indicates to provide the sample identifier used for vertical federated learning model training includes: The first indication information indicates to provide a sample identifier corresponding to a dataset used for vertical federated learning model training, and the first sample identifier is a sample identifier corresponding to a dataset that is from the second network element and that is used for vertical federated learning model training.

It may be understood that, for the sample identifier corresponding to the dataset used for vertical federated learning model training, refer to the sample identifier corresponding to the dataset of the participant for vertical federated learning model training in step S1001. Details are not described herein again.

In addition, for a specific implementation of step S1201, refer to step S1108 in FIG. 11, and for a specific implementation of step S1202, refer to step S1109 in FIG. 11. Details are not described herein again.

In other words, the first network element may indicate, by using a sample provision indication in a sample alignment request message, the second network element to provide the sample identifier corresponding to the dataset of the second network element for vertical federated learning model training, so that the second network element can feed back, to the first network element, the sample identifier corresponding to the dataset of the second network element for vertical federated learning model training. In this way, the first network element can be triggered to determine a common sample identifier between the second network element and another candidate participant participating in vertical federated learning model training, thereby implementing sample alignment.

Optionally, the second network element is a candidate network element for participating in vertical federated learning model training. The information transmission method process shown in FIG. 12 further includes the following steps.

S1203: The first network element receives a second sample identifier corresponding to a dataset that is from a third network element and that is used for vertical federated learning model training, where the third network element is a network element other than the second network element in a plurality of candidate network elements for participating in the vertical federated learning model training.

It may be understood that the plurality of candidate network elements for participating in vertical federated learning model training may include the participant in FIG. 11 and the at least one candidate slave participant determined in step S1107. The third network element may be, for example, a candidate slave participant in the at least one candidate slave participant, or the master participant in FIG. 11.

In addition, the first network element may be the VFL server in FIG. 11. The first network element may obtain an identifier and/or address information of the third network element from the VFLSF network element, and the like, so that the first network element can send the first request in step S1111 to the third network element, to receive the second sample identifier from the third network element. For a specific implementation of step S1203, refer to step S1109. Details are not described herein again.

Alternatively, the first network element may be a VFLSF network element. The first network element may determine, in response to a discovery request message of a master participant or a slave participant participating in vertical federated learning model training, at least one candidate slave participant based on registration information of a plurality of participants registered with the first network element (for example, identifiers, address information, and supported vertical federated learning models of the participants), and then determine the identifier and/or the address information of the third network element, so that the first network element can send the first request in step S1111 to the third network element, to receive the second sample identifier from the third network element.

It should be understood that the first network element may alternatively preconfigure an identifier, address information, or the like of the third network element. This is not specifically limited in embodiments of this application.

S1204: The first network element sends a third message to the second network element based on the first sample identifier and the second sample identifier, where the third message includes second indication information, the second indication information indicates that the second network element is to participate in vertical federated learning model training, and/or a third sample identifier, the third sample identifier is a common sample identifier of at least two network elements participating in vertical federated learning model training, the at least two network elements are at least two network elements determined from the plurality of candidate network elements based on the first sample identifier and the second sample identifier, and the at least two network elements include the third network element; or the second indication information indicates that the second network element is not to participate in vertical federated learning model training, and/or a reason why the second network element is not to participate in vertical federated learning model training.

It may be understood that the second indication information indicates that the second network element is to participate in vertical federated learning model training, and the at least two network elements may include the second network element and the third network element, so that the first network element can determine the at least two network elements from the plurality of candidate network elements based on the first sample identifier and the second sample identifier. For example, the first network element determines, based on the first sample identifier of the second network element and the third sample identifier of the third network element, whether a quantity of common sample identifiers between the first sample identifier and the second sample identifier falls within a preconfigured or indicated quantity range (for example, the fourth threshold and/or the fifth threshold in step S1006). If yes, the first network element may determine that the third sample identifier includes the common sample identifier between the first sample identifier and the second sample identifier, and the second network element and the third network element are at least two network elements corresponding to the third sample identifier.

In addition, assuming that the at least two network elements include other network elements than the second network element and the third network element, for example, a fourth network element, a fifth network element, and a sixth network element, the at least two network elements that may be determined by the first network element from the plurality of candidate network elements based on the first sample identifier and the second sample identifier may include: The first network element determines, based on the first sample identifier, the second sample identifier, a sample identifier provided by the fourth network element, a sample identifier provided by the fifth network element, and a sample identifier provided by the sixth network element, whether a quantity of common sample identifiers between the plurality of sample identifiers falls within a preconfigured or indicated quantity range. If yes, the first network element may determine that the third sample identifier includes the common sample identifiers between the plurality of sample identifiers, and the second network element to the sixth network element are at least two network elements corresponding to the third sample identifier.

It may be understood that, for a specific implementation of determining, by the first network element, whether the second network element can participate in vertical federated learning model training and the third sample identifier in step S1204, refer to step S1110. Details are not described herein again.

In addition, for a specific implementation of sending the third message by the first network element to the second network element in step S1204, refer to step S1111 and step S1112. Details are not described herein again.

In other words, after obtaining sample identifiers corresponding to datasets that are provided by at least some of the plurality of candidate network elements and that are used for vertical federated learning model training, the first network element may further determine, from the plurality of candidate network elements based on the first sample identifier of the second network element and the second sample identifier of the third network element, the at least two network elements that can participate in vertical federated learning model training, and the common sample identifier (that is, the third sample identifier) of the at least two network elements, thereby implementing sample alignment, and increasing a probability that the second network element participates in vertical federated learning model training. In addition, when the first network element determines that the second network element is not to participate in vertical federated learning model training, the first network element sends the third message to the second network element, to indicate the second network element not to participate in vertical federated learning model training, so that the second network element can determine, in time, not to participate in the current vertical federated learning model training, thereby helping the second network element prepare to perform another vertical federated learning related process. Further, the third message indicates the reason why the second network element is not to participate in vertical federated learning model training, so that when the second network element participates in vertical federated learning model training again, the second network element can be assisted in adjusting the sample identifier corresponding to the dataset used for vertical federated learning model training, thereby increasing a probability that the second network element participates in vertical federated learning model training.

It may be understood that, when the second network element is an untrusted network element, the first network element and the second network element may interact with each other through a network exposure function network element. For example, the first network element may send the first request to the second network element through the network exposure function network element, and the second network element may send the first response to the first network element through the network exposure function network element. In addition, the network exposure function network element may maintain a correspondence between the first network element and the second network element, allocate identifiers and/or addresses to the first network element and the second network element, or allocate a correlation identifier to a vertical federated learning process between the first network element and the second network element, or the like. For specific implementation of the foregoing, refer to the information transmission method process shown in FIG. 7A and FIG. 7B. Details are not described herein again.

Implementation B: The second network element is used as a trusted third party.

It may be understood that the second network element may be the VFLSF network element in FIG. 10, and the first network element may be a participant participating in vertical federated learning model training, or a VFL server. It may be understood that, when participants are distinguished as a master participant and a slave participant, the first network element may be a master participant or a slave participant.

In a possible implementation, the second network element is a network element with which a sample identifier corresponding to a dataset of a network element participating in vertical federated learning model training is registered, and that the first indication information indicates to provide the sample identifier used for vertical federated learning model training includes: The first indication information indicates to provide a common sample identifier, where the common sample identifier is a common sample identifier between datasets of at least two network elements participating in same vertical federated learning model training in a plurality of network elements, and the first sample identifier indicates a common sample between datasets of at least two network elements participating in first vertical federated learning model training in the plurality of network elements.

It may be understood that, for details of the first indication information, refer to the sample alignment indication information in step S1006, and for details of the first sample identifier, refer to the first common sample identifier in step S1007. Details are not described again.

In addition, for a specific implementation of step S1201, refer to step S1006, and for a specific implementation of step S1202, refer to step S 1007. Details are not described herein again.

It should be understood that the first network element may be a VFL server, and the first network element may send the first request to the second network element in response to a vertical federated learning initiation request message of a master participant or a slave participant initiating vertical federated learning, to request to discover a participant that can participate in same vertical federated learning model training as the initiator and provide a common sample identifier. Alternatively, the first network element may be a master participant or a slave participant initiating vertical federated learning, and directly sends the first request to the second network element, to request to discover another participant in vertical federated learning model training and provide a common sample identifier. Alternatively, the first network element may be a master participant or a slave participant initiating vertical federated learning, and after determining another participant participating in vertical federated learning model training, the first network element sends the first request to the second network element, to request the second network element to provide a common sample identifier between the initiator and the another participant participating in vertical federated learning model training. This is not specifically limited in embodiments of this application.

In other words, the first network element may send the first request to the second network element with which the sample identifier corresponding to the dataset of the network element participating in vertical federated learning model training is registered, so that the second network element can feed back, to the first network element, the common sample identifier between the datasets of the at least two network elements participating in same vertical federated learning model training in the plurality of network elements, thereby implementing sample alignment.

In a possible implementation, the first network element is a network element participating in vertical federated learning model training. The information transmission method process shown in FIG. 12 further includes the following steps.

S1205: The first network element sends a registration request to the second network element. Correspondingly, the second network element receives the registration request from the first network element. The registration request includes fourth indication information, and the fourth indication information indicates a sample identifier corresponding to a dataset of the first network element for vertical federated learning model training.

It may be understood that, for a specific implementation of step S1205, refer to step S1001. Details are not described herein again.

In other words, the first network element may send the registration request to the second network element, to register, with the second network element, the sample identifier corresponding to the dataset of the first network element for vertical federated learning model training, so that the second network element can determine a common sample identifier between the first network element and at least one participant participating in same vertical federated learning model training as the first network element, thereby implementing sample alignment.

In a possible implementation, the first request further includes fifth indication information and/or sixth indication information, the fifth indication information indicates a range of a quantity of sample identifiers included in the common sample identifier, and the sixth indication information further indicates the second network element to determine the at least two network elements.

It may be understood that, for the fifth indication information, refer to the fifth indication information in step S1006. Details are not described herein again.

In addition, the first request may be used to request the second network element to determine at least two network elements that participate in same vertical federated learning model training in the plurality of network elements, that is, sixth indication information. For details of the sixth indication information, refer to the related descriptions of the participant discovery request message in step S1006. Details are not described herein again.

It should be understood that, when the first network element may determine the at least two network elements before sending the first request, the first request may include the sixth indication information. For example, the first request may include first indication information, and identifiers and/or address information of the at least two network elements. For details, refer to the related descriptions in step S1006. Details are not described herein again.

In other words, the fifth indication information indicates the range of the quantity of sample identifiers included in the common sample identifier, so that a quantity of common samples determined by the second network element can be avoided from being excessively large or excessively small, thereby increasing a probability that a participant corresponding to the common sample identifier joins vertical federated learning model training. In addition, when the first request is not used to request to discover at least two network elements participating in same vertical federated learning model training in the plurality of network elements, the sixth indication information may indicate the second network element to determine the at least two network elements participating in same vertical federated learning model training in the plurality of network elements.

In a possible implementation, the first response further includes identifiers and/or address information of the at least two network elements, and/or a quantity of sample identifiers included in the first sample identifier.

It may be understood that, for details of the identifiers and/or the address information of the at least two network elements and the quantity of sample identifiers included in the first sample identifier, refer to step S1007. Details are not described herein again.

In other words, the second network element feeds back the identifiers and/or the address information of the at least two network elements to the first network element by using the first response, so that the first network element can be notified of the common sample identifier corresponding to the at least two network elements, thereby completing sample alignment. In addition, when the first network element is a VFL server, and is not configured with an encryption algorithm or a decryption algorithm corresponding to the first sample identifier, the second network element indicates, to the first network element by using the first response, the quantity of sample identifiers included in the first sample identifier, so that the first network element can determine a first sample identifier in a common sample quantity range that meets a vertical federated learning model training requirement, thereby increasing a probability that a participant joins vertical federated learning model training.

It may be understood that, when the first network element is an untrusted network element, the first network element and the second network element may interact with each other through a network exposure function network element. For example, the first network element may send the first request to the second network element through the network exposure function network element, and the second network element may send the first response to the first network element through the network exposure function network element. In addition, the network exposure function network element may maintain a correspondence between the first network element and the second network element, allocate identifiers and/or addresses to the first network element and the second network element, or allocate a correlation identifier to a vertical federated learning process between the first network element and the second network element, or the like. For specific implementation of the foregoing, refer to the information transmission process shown in FIG. 7A and FIG. 7B. Details are not described herein again.

In embodiments of this application, the first network element sends the first request to the second network element, so that the second network element can feed back the first sample identifier to the first network element. In this way, the first network element can determine, based on the first sample identifier, a common sample identifier between participants participating in vertical federated learning model training, thereby implementing sample alignment. For example, the first network element may be a trusted third party, and the second network element may be a master participant or a slave participant in vertical federated learning. In this way, the first network element can send the first request to the second network element, to obtain a sample identifier corresponding to a dataset of the second network element for vertical federated learning model training, so that the first network element determines a common sample between participants participating in same vertical federated learning model training, thereby implementing sample alignment. For another example, the second network element may be a trusted third party with which a sample identifier corresponding to a dataset of a participant is registered, and the first network element may be a master participant, a slave participant, or a coordinator in vertical federated learning model training. In this way, the second network element can feed back, to the first network element in response to the first request of the first network element, a common sample identifier of at least two network elements participating in same vertical federated learning model training, thereby implementing sample alignment.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the first network element in the foregoing method embodiments, an apparatus including the first network element, or a component that may be used in the first network element. Alternatively, the communication apparatus may be the second network element in the foregoing method embodiments, an apparatus including the second network element, or a component that may be used in the second network element. It may be understood that to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into modules is an example, and is merely a logical function division. In actual implementation, another division manner may be used.

For example, the communication apparatus is the first network element or the second network element in the foregoing method embodiments. FIG. 13 is a diagram of a structure of a communication apparatus according to an embodiment of this application. As shown in FIG. 13, the communication apparatus 1300 includes a processing module 1301 and a transceiver module 1302. The processing module 1301 is configured to perform a processing function of the first network element or the second network element in the foregoing method embodiments. The transceiver module 1302 is configured to perform receiving and sending functions of the first network element or the second network element in the foregoing method embodiments.

All related content of the steps in the foregoing method embodiments may be cited in function descriptions of the corresponding functional modules. Details are not described herein again.

The communication apparatus 1300 provided in embodiments may perform the information transmission method. Therefore, for technical effects that can be achieved by the communication apparatus 1300, refer to the foregoing method embodiments. Details are not described herein again.

In a possible design scheme, the transceiver module 1302 may include a receiving module and a sending module (not shown in FIG. 13). The transceiver module is configured to implement a sending function and a receiving function of the communication apparatus 1300.

In a possible design scheme, the communication apparatus 1300 may further include a storage module (not shown in FIG. 13), and the storage module stores a program or instructions. When the processing module 1301 executes the program or the instructions, the communication apparatus 1300 may perform a function of the first network element or the second network element in the method shown in any one of FIG. 6A and FIG. 6B to FIG. 12.

It should be understood that the processing module 1301 in the communication apparatus 1300 may be implemented by a processor or a processor-related circuit component, and may be a processor or a processing unit. The transceiver module 1302 may be implemented by a transceiver or a transceiver-related circuit component, and may be a transceiver or a transceiver unit.

For example, FIG. 14 is a diagram of a structure of another communication apparatus according to an embodiment of this application. The communication apparatus may be a first network element or a second network element, or may be a chip (system) or another component or component that may be disposed in the first network element or the second network element. As shown in FIG. 14, the communication apparatus 1400 may include a processor 1401. In a possible design scheme, the communication apparatus 1400 may further include a memory 1402 and/or a transceiver 1403. The processor 1401 is coupled to the memory 1402 and the transceiver 1403, for example, may be connected to the memory 1402 and the transceiver 1403 through a communication bus.

The following specifically describes the components of the communication apparatus 1400 with reference to FIG. 14.

The processor 1401 is a control center of the communication apparatus 1400, and may be one processor, or may be a general term of a plurality of processing elements. For example, the processor 1401 is one or more central processing units (central processing unit, CPU), or may be an application-specific integrated circuit (application-specific integrated circuit, ASIC), or may be one or more integrated circuits configured to implement embodiments of this application, for example, one or more microprocessors (digital signal processor, DSP), or one or more field programmable gate arrays (field programmable gate array, FPGA).

In a possible design scheme, the processor 1401 may perform various functions of the communication apparatus 1400 by running or executing a software program stored in the memory 1402 and calling data stored in the memory 1402.

During specific implementation, in an embodiment, the processor 1401 may include one or more CPUs, for example, a CPU 0 and a CPU 1 in FIG. 14.

During specific implementation, in an embodiment, the communication apparatus 1400 may include a plurality of processors, for example, the processor 1401 and a processor 1404 shown in FIG. 14. Each of the processors may be a single-core processor (single-CPU), or may be a multicore processor (multi-CPU). The processor herein may be one or more devices, circuits, and/or processing cores configured to process data (for example, computer program instructions).

The memory 1402 is configured to store a software program for performing the solutions in this application, and the processor 1401 controls execution of the software program. For a specific implementation, refer to the foregoing method embodiments. Details are not described herein again.

In a possible design scheme, the memory 1402 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instruction or data structure and that can be accessed by a computer. However, this is not limited thereto. The memory 1402 may be integrated with the processor 1401, or may exist independently, and is coupled to the processor 1401. This is not specifically limited in embodiments of this application.

The transceiver 1403 is configured to communicate with another communication apparatus. For example, the communication apparatus 1400 is a first network element, and the transceiver 1403 may be configured to communicate with a second network element or a third network element. For another example, the communication apparatus 1400 is a second network element, and the transceiver 1403 may be configured to communicate with a first network element or a third network element.

In a possible design scheme, the transceiver 1403 may include a receiver and a transmitter (not separately shown in FIG. 14). The receiver is configured to implement a receiving function, and the transmitter is configured to implement a sending function.

In a possible design scheme, the transceiver 1403 may be an input/output interface or an interface circuit, and is configured to input and/or output a signal.

In a possible design scheme, the transceiver 1403 may be integrated with the processor 1401, or may exist independently, and is coupled to the processor 1401. This is not specifically limited in embodiments of this application.

It should be noted that the structure of the communication apparatus 1400 shown in FIG. 14 does not constitute a limitation on the communication apparatus. An actual communication apparatus may include more or fewer components than those shown in the figure, combine some components, or have different component arrangements.

In addition, the communication apparatus 1400 may perform the information transmission method. Therefore, for technical effects that can be achieved by the communication apparatus 1400, refer to the foregoing method embodiments. Details are not described herein again.

In a possible implementation, an embodiment of this application further provides a computer-readable storage medium. The computer-readable storage medium stores a computer program or instructions, and when the computer program or the instructions are executed by a computer, the functions in the foregoing method embodiments are implemented.

In a possible implementation, an embodiment of this application further provides a computer program product. When the computer program product is executed by a computer, the functions in the foregoing method embodiments are implemented.

In a possible implementation, an embodiment of this application further provides a communication system. The communication system includes the first network element and the second network element in the foregoing method embodiments.

In a possible implementation, the communication system further includes the third network element in the foregoing method embodiments.

In a possible implementation, an embodiment of this application further provides a communication method. The communication method includes the method in any one of the foregoing method embodiments or any implementation of the foregoing method embodiments.

All or some of the foregoing embodiments may be implemented by using software, hardware, firmware, or any combination thereof. When a software program is used to implement the foregoing embodiments, the foregoing embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive (solid-state drive, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Although this application is described with reference to embodiments, in a process of implementing this application that claims protection, persons skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example description of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An information transmission method, wherein the method comprises:
sending, by a first network element, a first request to a second network element, wherein the first request comprises first information, and the first information indicates at least one first sample alignment algorithm supported by the first network element; and
receiving, by the first network element, a first response from the second network element, wherein the first response indicates a second sample alignment algorithm among the at least one first sample alignment algorithm, and the second sample alignment algorithm is used to determine a common sample between a dataset of the first network element for vertical federated learning model training and a dataset of the second network element for vertical federated learning model training; or the first response indicates that execution of sample alignment is not supported.

2. The method according to claim 1, wherein the method further comprises:
receiving, by the first network element, information about the second network element from a third network element, wherein the information about the second network element comprises an identifier of the second network element and/or address information of the second network element.

3. The method according to claim 2, wherein the method further comprises:
sending, by the first network element, a second request to the third network element, wherein the second request comprises second information, and the second information indicates a sample alignment requirement; and
receiving, by the first network element, the information about the second network element from the third network element comprises: receiving, by the first network element, a second response from the third network element, wherein the second response comprises the information about the second network element.

4. The method according to claim 3, wherein the sample alignment requirement comprises at least one of the following: a third sample alignment type, a third sample alignment algorithm, or a third time period for sample alignment.

5. The method according to any one of claims 2 to 4, wherein the information about the second network element further comprises at least one of the following: a fourth sample alignment type, a fourth sample alignment algorithm, or a fourth time period in which sample alignment is supported.

6. The method according to any one of claims 2 to 5, wherein the method further comprises:
sending, by the first network element, a registration request to the third network element, wherein the registration request comprises third information, and the third information indicates at least one of the following: a sample alignment type supported by the first network element, a sample alignment algorithm supported by the first network element, or a time period in which the first network element supports sample alignment.

7. The method according to any one of claims 2 to 6, wherein the at least one first sample alignment algorithm is an algorithm jointly supported by the first network element and the second network element.

8. The method according to any one of claims 1 to 7, wherein the first information further indicates at least one of the following: a quantity of samples supported by the first network element for sample alignment, a first sample alignment type supported by the first network element, or at least one first time period in which the first network element supports sample alignment.

9. The method according to claim 8, wherein the at least one first sample alignment algorithm is associated with the at least one first time period.

10. The method according to any one of claims 1 to 9, wherein the first response further indicates a quantity of samples supported by the second network element for sample alignment, and/or a second time period in which the second network element supports sample alignment; or
the first response further indicates a reason why the second network element does not support sample alignment, and/or a maximum quantity of samples that the second network element expects the first network element to use.

11. The method according to any one of claims 1 to 10, wherein the method further comprises:
sending, by the first network element, a first message to the second network element, wherein the first message indicates a target sample alignment algorithm, and the target sample alignment algorithm is a sample alignment algorithm determined from the at least one first sample alignment algorithm based on the second sample alignment algorithm.

12. The method according to claim 11, wherein the method further comprises:
sending, by the first network element, the first request to a fourth network element;
receiving, by the first network element, a third response from the fourth network element, wherein the third response indicates a fifth sample alignment algorithm among the at least one first sample alignment algorithm, and the fifth sample alignment algorithm is used to determine a common sample between the dataset of the first network element for vertical federated learning model training and a dataset of the fourth network element for vertical federated learning model training; and
sending, by the first network element, a second message to the fourth network element, wherein the second message indicates the target sample alignment algorithm, wherein there are a plurality of fifth sample alignment algorithms and/or a plurality of second sample alignment algorithms, and that the target sample alignment algorithm is the sample alignment algorithm determined from the at least one first sample alignment algorithm based on the second sample alignment algorithm comprises: the target sample alignment algorithm is a sample alignment algorithm determined from the at least one first sample alignment algorithm based on the second sample alignment algorithm and the fifth sample alignment algorithm.

13. The method according to claim 11 or 12, wherein the first message further indicates a target time period for sample alignment.

14. The method according to any one of claims 1 to 13, wherein the method further comprises:
when the first network element determines that sample alignment is not performed, sending, by the first network element, a third message to the second network element, wherein the third message indicates that sample alignment is not performed.

15. The method according to claim 14, wherein the third message further indicates a reason why sample alignment is not performed.

16. An information transmission method, wherein the method comprises:
sending, by a first network element, a first request to a second network element, wherein the first request comprises first indication information, and the first indication information indicates to provide a sample identifier used for vertical federated learning model training; and
receiving, by the first network element, a first response from the second network element, wherein the first response comprises a first sample identifier.

17. The method according to claim 16, wherein that the first indication information indicates to provide the sample identifier used for vertical federated learning model training comprises: the first indication information indicates to provide a sample identifier corresponding to a dataset used for vertical federated learning model training, and the first sample identifier is a sample identifier corresponding to a dataset that is from the second network element and that is used for vertical federated learning model training.

18. The method according to claim 16 or 17, wherein the second network element is a candidate network element for participating in vertical federated learning model training, and the method further comprises:
receiving, by the first network element, a second sample identifier corresponding to a dataset that is from a third network element and that is used for vertical federated learning model training, wherein the third network element is a network element other than the second network element in a plurality of candidate network elements for participating in vertical federated learning model training; and
sending, by the first network element, a third message to the second network element based on the first sample identifier and the second sample identifier, wherein the third message comprises second indication information, the second indication information indicates that the second network element is to participate in vertical federated learning model training, and/or a third sample identifier, the third sample identifier is a common sample identifier of at least two network elements participating in vertical federated learning model training, the at least two network elements are at least two network elements determined from the plurality of candidate network elements based on the first sample identifier and the second sample identifier, and the at least two network elements comprise the third network element; or
the second indication information indicates that the second network element is not to participate in vertical federated learning model training, and/or a reason why the second network element is not to participate in vertical federated learning model training.

19. The method according to claim 16, wherein the second network element is a network element with which a sample identifier corresponding to a dataset of a network element participating in vertical federated learning model training is registered, and that the first indication information indicates to provide the sample identifier used for vertical federated learning model training comprises: the first indication information indicates to provide a common sample identifier, wherein the common sample identifier is a common sample identifier between datasets of at least two network elements participating in same vertical federated learning model training in a plurality of network elements, and the first sample identifier indicates a common sample between datasets of at least two network elements participating in first vertical federated learning model training in the plurality of network elements.

20. The method according to claim 19, wherein the first network element is a network element participating in vertical federated learning model training, and the method further comprises:
sending, by the first network element, a registration request to the second network element, wherein the registration request comprises fourth indication information, and the fourth indication information indicates a sample identifier corresponding to a dataset of the first network element for vertical federated learning model training.

21. The method according to claim 19 or 20, wherein the first request further comprises fifth indication information and/or sixth indication information, the fifth indication information indicates a range of a quantity of sample identifiers comprised in the common sample identifier, and the sixth indication information further indicates the second network element to determine the at least two network elements.

22. The method according to any one of claims 19 to 21, wherein the first response further comprises identifiers and/or address information of the at least two network elements, and/or a quantity of sample identifiers comprised in the first sample identifier.

23. A communication apparatus, wherein the communication apparatus comprises a module or a unit configured to perform the method according to any one of claims 1 to 15, or a module or a unit configured to perform the method according to any one of claims 16 to 22.

24. A communication apparatus, wherein the communication apparatus comprises a processor, and the processor is configured to cause, by using a logic circuit and/or by executing instructions, the communication apparatus to perform the method according to any one of claims 1 to 15 or the method according to any one of claims 16 to 22.

25. The communication apparatus according to claim 24, wherein the communication apparatus further comprises a memory, and the memory is configured to store the instructions.

26. The communication apparatus according to claim 24 or 25, wherein the communication apparatus further comprises a communication interface, and the communication interface is configured to input and/or output signaling and/or data.

27. A computer-readable storage medium, wherein the computer-readable storage medium comprises instructions, and when the instructions are executed by a processor, the method according to any one of claims 1 to 15 or the method according to any one of claims 16 to 22 is implemented.

28. A computer program product, wherein the computer program product comprises instructions, and when the instructions are executed by a computer, the computer is caused to perform the method according to any one of claims 1 to 15 or the method according to any one of claims 16 to 22.
